(19) Europäisches Patentamt
European Patent Office
Office européen des brevets

(11) EP 1 668 060 B1

(12) # EUROPEAN PATENT SPECIFICATION

(45) Date of publication and mention of the grant of the patent: **27.12.2006 Bulletin 2006/52**

(21) Application number: **04784747.0**

(22) Date of filing: **16.09.2004**

(51) Int Cl.:
*C08G 63/685* (2006.01) *C08G 63/688* (2006.01)
*C09D 167/00* (2006.01) *C09B 67/00* (2006.01)

(86) International application number: **PCT/US2004/031017**

(87) International publication number: **WO 2005/028538 (31.03.2005 Gazette 2005/13)**

(54) **LIQUID COATING COMPOSITIONS HAVING IMPROVED WHITENESS**

FLÜSSIGE BESCHICHTUNGSZUSAMMENSETZUNGEN MIT VERBESSERTEM WEISSGRAD

COMPOSITIONS DE REVETEMENT LIQUIDES PRESENTANT UNE BLANCHEUR AMELIOREE

(84) Designated Contracting States:
**AT BE BG CH CY CZ DE DK EE ES FI FR GB GR HU IE IT LI LU MC NL PL PT RO SE SI SK TR**

(30) Priority: **19.09.2003 US 666404**

(43) Date of publication of application: **14.06.2006 Bulletin 2006/24**

(73) Proprietor: **EASTMAN CHEMICAL COMPANY
Kingsport, TN 37660 (US)**

(72) Inventors:
- **CARICO, Douglas, Weldon, Jr.
Kingsport, TN 37663 (US)**
- **WEAVER, Max, Allen
Kingsport, TN 37664 (US)**
- **PEARSON, Jason, Clay
Kingsport, TN 37663 (US)**
- **FOSTER, Charles, Howard
Kingsport, TN 37664 (US)**
- **FLEISCHER, Jean, Carroll
Kingsport, TN 37664 (US)**
- **MORRIS, Don, Leon
Kingsport, TN 37660 (US)**
- **KUO, Thauming
Kingsport, TN 37664 (US)**

(74) Representative: **Jones Day
Rechtsanwälte, Attorneys-at-Law, Patentanwälte
Prinzregentenstrasse 11
80538 München (DE)**

(56) References cited:
**EP-A- 0 288 399**
**WO-A-97/18253**
**US-A- 5 340 910**
**US-A- 5 384 377**
**US-A- 5 688 899**

EP 1 668 060 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

### FIELD OF THE INVENTION

The present invention relates to coating compositions, and more specifically, to liquid coating compositions containing toner polymers that incorporate thermally-stable copolymerizable toner dyes as an integral part of the polymer structure, resulting in coating compositions exhibiting improved whiteness and a reduction in the amount of yellowing that occurs upon exposure to heat and light.

### BACKGROUND OF THE INVENTION

U.S. Pat. No. 5,384,377 discloses colored compounds which provide a toner system useful in imparting a desirable neutral to slightly blue hue to polyester fibers and plastics having a yellow appearance. The thermally stable colored compounds have reactive groups and can be incorporated into the polyester polymer structure during polymerization.
U.S. Pat. No. 5,340,910 discloses an improved process for the manufacture of blue anthraquinone toners in terms of quality, yield, economics, and safety and environmental concerns. The toners are taught to be useful in imparting improved whiteness to fiber-forming or moldable polyesters that normally appear yellow.
U.S. Pat. No. 4,745,174 discloses new fiber-forming or molding grade polyester compositions that exhibit improved apparent whiteness by having incorporated therein derivatives of dibenzoisoquinolinediones.
U.S. Pat. No. 5,372,864 discloses certain blue substituted anthraquinones in combination with selected red anthraquinone and anthrapyridone compounds which provide a toner system useful in imparting a desirable neutral to slightly blue hue to molding or fiber grade polyesters having a yellow appearance. The thermally stable colored compounds can have polyester reactive groups and are preferably incorporated into the polyester polymer structure during polymerization.
U.S. Pat. No. 5,688,899 discloses an improved clarity copolyester of a diethylene glycol modified poly(ethylene terephthalate) that incorporates color control agent residues derived from organic or inorganic toners.
U.S. Pat. No. 4,804,719 discloses water-dispersible polyesters and poly(ester-amides) containing water-solubilizing sulfonate groups and having reacted onto or into the polymer backbone relatively large amounts of a colorant comprising one or more heat stable organic compounds initially having one or more condensable groups. These colored polymers are said to be useful for printing inks or other coatings applied from an aqueous system.
Soviet Patent Application SU 1198084 A discloses diaminoanthraquinone derivatives as components of colored alkyd resins. The resulting resins are said to have a high color quality without requiring additional coloring operations.
European Patent Application 0 696 625 A2 discloses a method for reducing the yellowness of coating compositions comprising adding at least two dyes to a composition which, without the dyes, has an undesirable yellow color when dried.

### SUMMARY OF THE INVENTION

One embodiment of the present invention provides liquid coating compositions, having improved whiteness, that contain a toner polymer, such as a polyester or an alkyd polymer, having polymerized therein a thermally-stable, copolymerizable toner dye as an integral part of the polymer structure. In one embodiment, the coating compositions contain one or more additional polymers that are subject to yellowing. In another embodiment, the toner polymer is itself a polymer subject to yellowing, and no additional polymer need be present.
In one embodiment, the toner polymer is a water-dispersible polymer that may serve as a surfactant or stabilizer added during an emulsion polymerization, or that may be later added to an aqueous coating composition during formulation. In another embodiment, the toner polymer is a solvent-borne polymer, that may be mixed with one or more additional polymers, in a solvent-borne coating composition. The various embodiments of the present invention are useful for improving the whiteness of coating compositions subject to yellowing, whether paint formulations, caulks, sealants, roof coatings, floor polishes, wall coatings, or the like. The current invention also leads to a reduction in the amount of color formation, upon exposure to heat and/or light, of such latexes, paint formulations, and other coatings.

### DETAILED DESCRIPTION OF THE INVENTION

The present invention provides liquid coating compositions having improved whiteness and resistance to yellowing.
One aspect of the invention relates broadly to aqueous coating compositions. Coating compositions according to these embodiments contain water-dispersible (or water-dispersed) condensation polymers that have incorporated

therein, thermally-stable, copolymerized toner dyes as an integral part of the polymer structure.

In one aspect, the water-dispersible condensation polymer having one or more toner dyes polymerized therein is a water-dispersible polyester. As used herein, and as further defined below, the term polyester is intended to encompass polyesters that include polyamide linkages. In another aspect, the water-dispersible condensation polymer having one or more toner dyes polymerized therein is a water-dispersible alkyd resin.

In one embodiment, the inventive coating compositions include: one or more water-dispersible condensation polymers having incorporated therein one or more red or violet toner dyes and one or more blue toner dyes, wherein each dye can be in the same or a different water-dispersible polymer. Typically, the red toner dyes strongly absorb light at wavelengths from about 470 nm to about 580 nm, preferably from about 480 nm to about 570 nm, and all values within these ranges; the violet toner dyes typically absorb light at wavelengths from about 500 nm to about 610 nm, preferably from about 510 nm to about 600 nm, and all values within these ranges; and the blue toner dyes strongly absorb light at wavelengths from about 530 nm to about 650 nm, preferably from about 560 nm to about 640 nm, and all values within these ranges.

In another aspect, the inventive coating compositions include one or more water-dispersible condensation polymers having incorporated therein one or more reddish-blue dyes that strongly absorb light at wavelengths of from about 520 nm to about 630 nm, preferably from about 540 nm to about 620 nm, and all values within these ranges, and optionally, one or more red or violet toner dyes, each as defined herein.

In a further aspect, the inventive coating compositions comprise: a water-dispersible condensation polymer composition having copolymerized therein a toner dye system comprised of:

(1) at least one blue 1,4-bis(2,6-dialkylanilino)anthraquinone(s) of Formula (I):

(I)

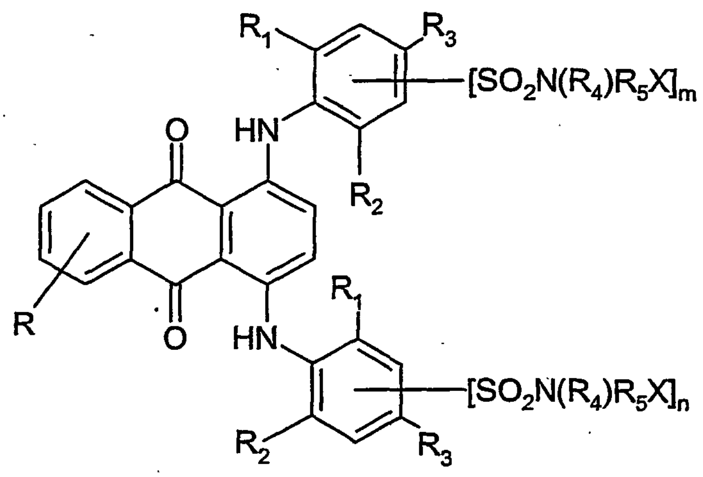

wherein:

R is selected from the group consisting of hydrogen, $C_1$ -$C_6$-alkyl, halogen, carboxy and $C_1$-$C_6$-alkoxycarbonyl;
$R_1$ and $R_2$ are independently selected from bromo and $C_1$-$C_6$-alkyl;
$R_3$ is selected from the group consisting of hydrogen, halogen, $C_1$-$C_6$-alkyl, substituted $C_1$-$C_6$-alkyl, hydroxy, $C_1$-$C_6$-alkoxy, substituted $C_1$-$C_6$-alkoxy, cyano, thiocyano, $C_1$-$C_6$-alkylthio, substituted $C_1$-$C_6$-alkylthio, $C_1$-$C_6$-alkylsulfonyl, substituted $C_1$-$C_6$-alkylsulfonyl, $C_1$-$C_6$-alkoxycarbonyl, carboxy, aryloxy, arylthio, arylsulfonyl, and $SO_2N(R_4)R_5X$ when m and/or n are zero;
$R_4$ is selected from the group consisting of hydrogen, $C_1$-$C_6$-alkyl, substituted $C_1$-$C_6$-alkyl, $C_3$-$C_8$-alkenyl, $C_3$-$C_8$-alkynyl, $C_3$-$C_8$-cycloalkyl and aryl;
$R_5$ is a linking group selected from the group consisting of $C_1$-$C_8$-alkylene, $C_1$-$C_6$-alkylene-(Z-$C_1$-$C_6$)$_{1-2}$-alkylene, arylene-$C_1$-$C_6$-alkylene, arylene-Z-$C_1$-$C_6$-alkylene, $C_3$-$C_7$-cydoalkylene, $C_1$-$C_6$-alkylene-$C_3$-$C_8$-cycloalkylene-$C_1$-$C_6$-alkylene, $C_1$-$C_6$-alkylene-arylene-$C_1$-$C_6$-alkylene, and $C_1$-$C_6$-alkylene-Z-alylene-Z-$C_1$-$C_6$-alkylene, wherein Z is selected from -O-, -S- or $SO_2$ ;
X is hydrogen or a polyester reactive group; and
m and n are independently 0 or 1; with the proviso that at least one polyester reactive group is present;

and

2) at least one red or violet toner dye, which may be blended with one or more of the blue component(s) of formula I above, and which has one of the following structural formulas II-X:

(II)

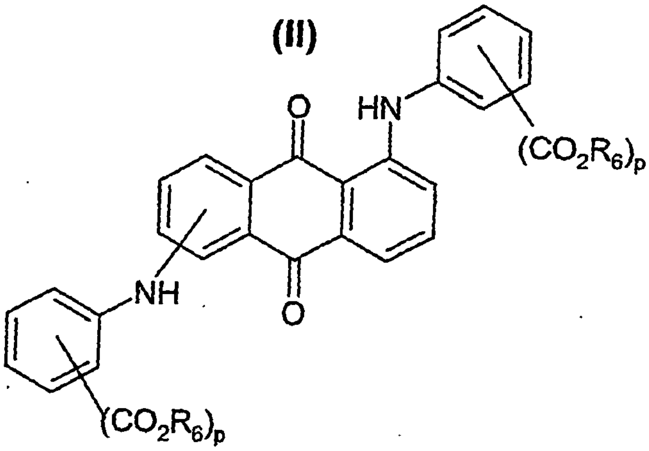

;

(III)

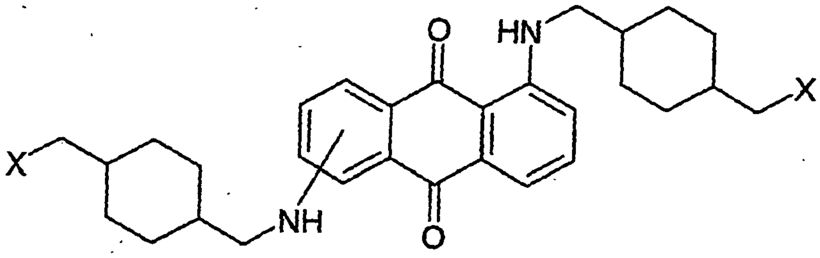

;

(IV)

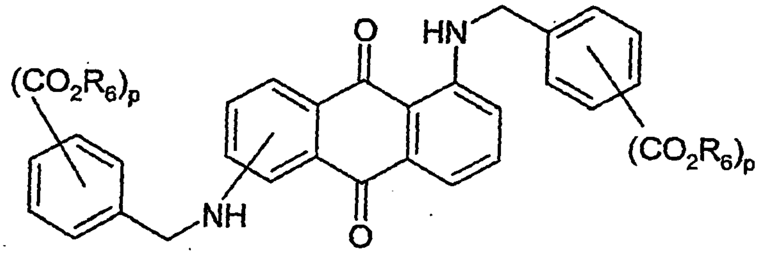

;

(V)

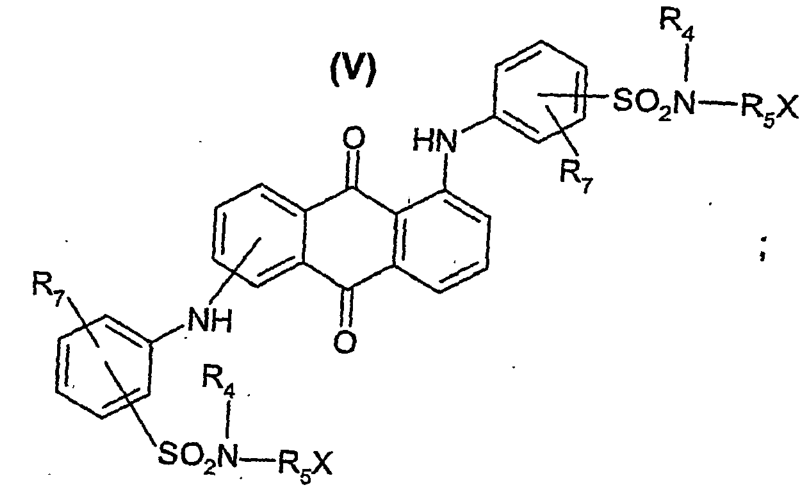

;

(VI)

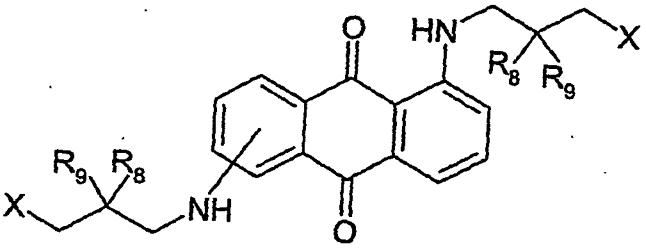

;

(VII)

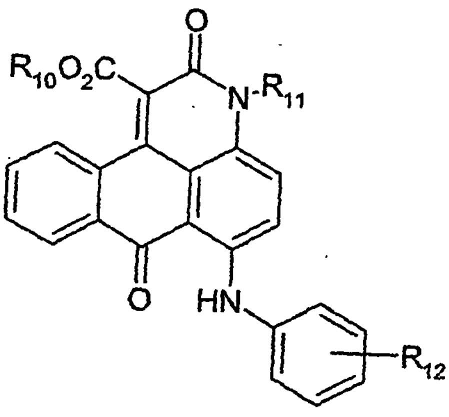

;

**(VIII)**

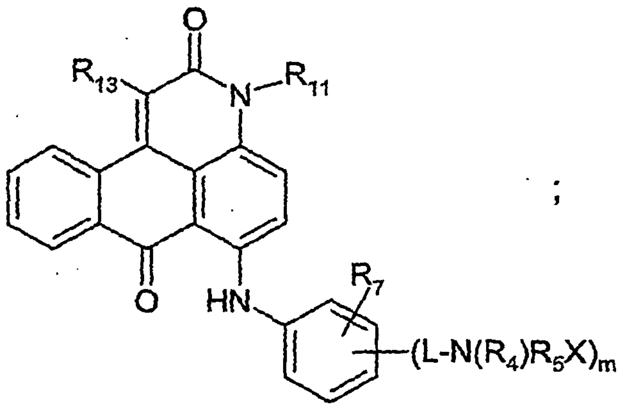

;

**(IX)**

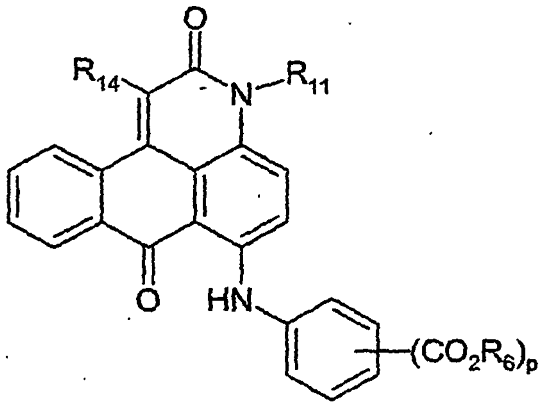

;

**(X)**

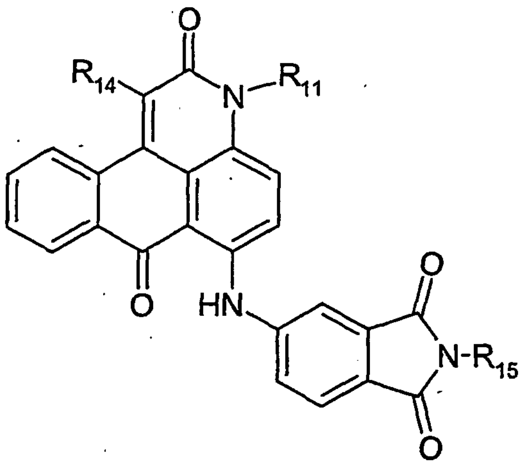

;

wherein:

$R_6$ is selected from the group consisting of hydrogen, $C_1$-$C_6$-alkyl, substituted $C_1$-$C_6$-alkyl, $C_3$-$C_8$-alkenyl, $C_3$-$C_8$-alkynyl, $C_3$-$C_8$-cycloalkyl or aryl;
$R_7$ is hydrogen or one to three groups selected from $C_1$-$C_6$-alkyl, substituted $C_1$-$C_6$-alkyl, $C_1$-$C_6$-alkanoylamino, halogen, hydroxy, $C_1$-$C_6$-alkoxy, $C_1$-$C_6$-alkylthio, substituted $C_1$-$C_6$-alkoxy, substituted $C_1$-$C_6$-alkylthio;
$R_8$ and $R_9$ are the same or different and are selected from the group consisting of $C_1$-$C_6$-alkyl, substituted $C_1$-$C_6$-alkyl, $C_3$-$C_8$-cycloalkyl or aryl;
$R_{10}$ is selected from the group consisting of $C_1$-$C_6$-alkyl, substituted $C_1$-$C_6$-alkyl, $C_3$-$C_8$-cycloalkyl or aryl;
$R_{11}$ is selected from the group consisting of hydrogen, $C_1$-$C_{12}$alkyl, substituted $C_1$-$C_{12}$-alkyl, $C_3$-$C_8$-alkenyl, $C_3$-$C_8$-alkynyl, $C_3$-$C_8$-cycloalkyl and aryl;
$R_{12}$ is hydrogen or one to three groups selected from the group consisting of $C_1$-$C_6$-alkyl, substituted $C_1$-$C_6$alkyl, $C_1$-$C_6$alkoxy, substituted $C_1$-$C_6$-alkoxy, $C_1$-$C_6$-alkylthio, substituted $C_1$-$C_6$-alkylthio, halogen, hydroxy, $C_1$-$C_6$-alkanoylamino, aroylamino, $C_1$-$C_6$-alkylsulfonylamino and arylsulfonylamino;
$R_{13}$ and $R_{14}$ are selected from hydrogen, cyano or $CO_2R_{10}$;
$R_{15}$ is $R_4$ or $R_5X$ as previously defined;
L is -CO- or -$SO_2$-; X is as previously defined; m is 0 or 1; p is 1 or 2; with the provision that at least one polyester reactive group is present as X or as a substituent on $R_3$, $R_4$, $R_6$, $R_7$, $R_{10}$, $R_{11}$, $R_{12}$, $R_{13}$, $R_{14}$ or $R_{15}$.

In a further embodiment, the inventive coating compositions comprise a water-dispersible condensation polymer composition having copolymerized therein at least one reddish-blue toner dye, optionally mixed with one or more of the red or violet toner dyes set forth above in Formulae II-X, the reddish-blue toner dye having a structure consistent with Formula (XI):

XI

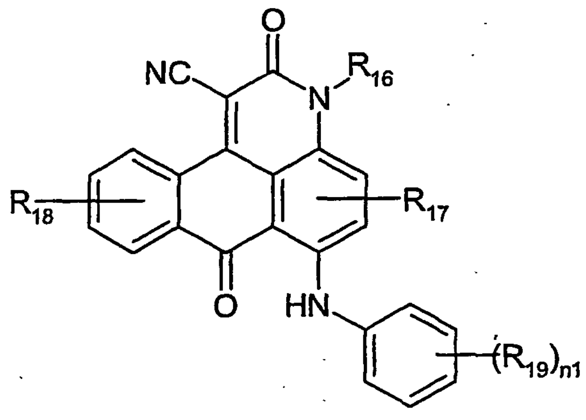

wherein

$R_{16}$ is selected from hydrogen, $C_1$-$C_{12}$-alkyl, substituted $C_1$-$C_{12}$-alkyl, $C_3$-$C_8$-cycloalkyl, $C_3$-$C_8$-alkenyl, $C_3$-$C_8$-alkynyl and aryl;
$R_{17}$ is selected from hydrogen, halogen, $C_1$-$C_6$-alkyl, substituted $C_1$-$C_6$-alkyl, $C_1$-$C_6$-alkoxy, substituted $C_1$-$C_6$-alkoxy, aryloxy, $C_1$-$C_6$-alkylthio, substituted $C_1$-$C_6$-alkylthio, arylsulfonyl and arylthio;
$R_{18}$ is selected from hydrogen, halogen, $C_1$-$C_6$-alkyl, substituted $C_1$-$C_6$-alkyl, $C_1$-$C_6$-alkoxy and substituted $C_1$-$C_6$-alkoxy;
$R_{19}$ is selected from hydrogen or 1-3 groups selected from, halogen, $C_1$-$C_6$-alkyl, substituted $C_1$-$C_6$-alkyl, aryl, $C_1$-$C_6$-alkoxy, substituted $C_1$-$C_6$-alkoxy, $C_1$-$C_6$-alkylthio, substituted $C_1$-$C_6$-alkylthio, $C_1$-$C_6$-alkoxycarbonyl, substituted $C_1$-$C_6$-alkoxycarbonyl, arylthio, $C_1$-$C_6$-alkoxycarbonyloxy, substituted $C_1$-$C_6$-alkoxycarbonyloxy, carboxy, sulfamoyl, $C_1$-$C_6$-alkylsulfamoyl, substituted $C_1$-$C_6$-alkylsulfamoyl, di-$C_1$-$C_6$-alkylsulfamoyl, substituted di-$C_1$-$C_6$-alkylsulfamoyl, $C_1$-$C_6$-alkylaryisuffamoyl, substituted $C_1$-$C_6$-alkylarylsulfamoyl, $C_3$-$C_8$-cydoalkylsulfamoyl, substituted $C_3$-$C_8$-cycloalkylsulfamoyl, arylsulfamoyl, carbamoyl, $C_1$-$C_6$-alkylcarbamoyl, substituted $C_1$-$C_6$-alkylcarbamoyl, di-$C_1$-$C_6$-alkylcarbamoyl, substituted di-$C_1$-$C_6$-alkylcarbamoyl, $C_1$-$C_6$-alkylarylcarbamoyl, substituted $C_1$-$C_6$-alkylarylcarbamoyl, $C_3$-$C_8$-cycloalkylcarbamoyl, substituted $C_3$-$C_8$-cycloalkylcarbamoyl, arylcarbamoyl, 2-pyrrolidono,

$C_1$-$C_6$-alkanoylamino, substituted $C_1$-$C_6$-alkanoylamino, N-$C_1$-$C_6$-alkyl-$C_1$-$C_6$-alkanoylamino, or substituted N-$C_1$-$C_6$-alkyl-$C_1$-$C_6$-alkanoylamino; and

n1 is an integer of 1 to 5; with the proviso that at least one polyester reactive group be present as X or as a substituent on $R_{16}$, $R_{17}$, $R_{18}$ or $R_{19}$.

The term "polyester reactive group" is used herein to describe a group which is reactive with at least one of the functional groups from which the polyester is prepared under polyester-forming conditions. Examples of the groups which X may represent include hydroxy, carboxy, an ester group, amino, $C_1$-$C_6$-alkylamino, etc. Thus, as used herein, the term polyester is intended to encompass polyesters that include polyamide linkages. The ester radicals may be any radical having the formulae

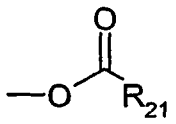 , 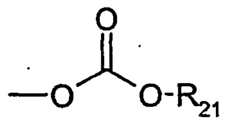 , 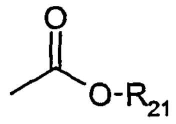 , 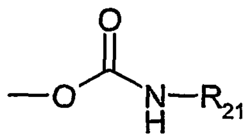 ,

wherein $R_{21}$ is selected from the group consisting of $C_1$-$C_6$-alkyl, substituted $C_1$-$C_6$-alkyl, $C_3$-$C_8$-cycloalkyl or aryl. Reactive group X is preferably hydroxy, carboxy, $C_1$-$C_2$-alkoxycarbonyl or acetoxy.

In the terms "substituted $C_1$-$C_6$-alkyl", "substituted $C_1$-$C_{12}$-alkyl" "substituted $C_1$-$C_6$-alkoxy", "substituted $C_1$-$C_6$-alkylthio", "substituted $C_1$-$C_6$-alkylsulfonyl" "substituted $C_1$-$C_6$-alkylsulfonylamido", "substituted alkylene", "substituted $C_1$-$C_6$-alkoxycarbonyl", "substituted $C_1$-$C_6$-alkoxycarbonyl", "substituted $C_1$-$C_6$-alkoxycarbonyloxy", "substituted $C_1$-$C_6$-alkylsulfamoyl", "substituted di-$C_1$-$C_6$-alkylsulfamoyl", "substituted $C_1$-$C_6$-alkylarylsulfamoyl", "substituted $C_3$-$C_8$-cycloalkylsulfamoyl", "substituted $C_1$-$C_6$-alkylcarbamoyl", "substituted di-$C_1$-$C_6$-alkylcarbamoyl", "substituted $C_1$-$C_6$-atkyiarytcarbamoyl", "substituted $C_3$-$C_8$-cycloalkylcarbamoyl", "substituted $C_1$-$C_6$-alkanoylamino" and "substituted N-$C_1$-$C_6$-alkyl-$C_1$-$C_6$-alkanoyiamino", the alkyl and alkylene groups or portions of the groups may contain as further substituents one or more groups, preferably one to three groups selected from the group consisting of hydroxy, halogen, carboxy, cyano, aryl, aryloxy, arylthio, $C_1$-$C_4$-alkylthio, $C_1$-$C_4$-alkylthio, $C_3$-$C_7$-cycloalkyl, $C_1$-$C_4$-alkanoyloxy and $-(-OR_{22}-)_{p1}-R_{23}$, wherein $R_{22}$ is selected from the group consisting of $C_1$-$C_6$-alkylene, $C_1$-$C_6$-alkylenearylene, cyclohexylene, arylene, and $C_1$-$C_6$-alkylenecyclohexylene; $R_{23}$ is selected from the group consisting of hydrogen, hydroxy, carboxy, $C_1$-$C_4$-alkanoyloxy, $C_1$-$C_4$-alkoxycarbonyl, aryl, and $C_3$-$C_7$-cycloalkyl; and $_{p1}$ is 1, 2, 3, or 4. The terms "$C_1$-$C_4$-alkanoyloxy" and " $C_1$-$C_4$-alkoxycarbonyl" refer to the structures $R_{24}CO$- and $R_{24}OCO$-, respectively, wherein $R_{24}$ represents a straight or branched saturated hydrocarbon radical containing one to four carbons.

The term "aryl" as used herein preferably denotes phenyl and phenyl substituted with one to three substituents selected from the group consisting of $C_1$-$C_6$-alkyl, $C_1$-$C_6$-alkoxy, halogen, carboxy, cyano, $C_1$-$C_6$-alkylthio, $C_1$-$C_6$-alkylsulfonyl, trifluoromethyl, hydroxy, $C_1$-$C_6$-alkanoyloxy, $C_1$-$C_6$-alkanoylamino, and $C_1$-$C_6$-alkoxycarbonyl.

The term "arylene" includes 1,2-,1,3- and 1,4-phenylene and such radicals substituted one to three times with $C_1$-$C_6$-alkyl, $C_1$-$C_6$-alkoxy, $C_1$-$C_6$-alkoxycarbonyl, or halogen.

The term "$C_3$-$C_8$-cycloalkyl" is used to denote saturated cycloaliphatic radicals containing three to eight carbon atoms.

The terms "$C_3$-$C_8$-alkenyl" and " $C_3$-$C_8$-alkynyl" are used to denote aliphatic hydrocarbon moieties having 3-8 carbons and containing at least one carbon-carbon double bond and one carbon-carbon triple bond, respectively.

The term "halogen" is used to indicate bromine, chlorine, fluorine, and iodine.

The terms "$C_1$-$C_6$-alkoxycarbonyl", "$C_1$-$C_6$-alkanoyloxy" and "$C_1$-$C_6$-alkanoylamino," consistent with their use throughout the specification, are used to represent radicals of the formulae

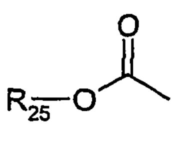 , 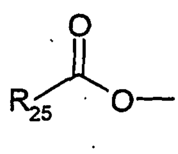 , and 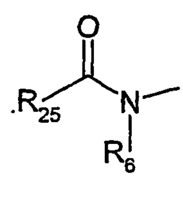 ,

respectively , wherein $R_{25}$ is a straight or branched chain $C_1$-$C_6$-alkyl radical and $R_6$ is as defined above.

The terms "thermally stable" and "thermal stability" mean that the co-polymerizable toner dyes can withstand the conditions of polyester synthesis, as disclosed herein, without leading to a significant change in color that typically accompanies degradation of the toner dye chromophore, or a loss of color that can be due to volatilization of the toner dye.

The term "strongly absorb(s)" means that the toner dye has a maximum absorbance within the defined range. Preferably, the dye has a molar extinction coefficient, at the extremes of each of the respective specified ranges, that is greater than or equal to about 1/3, or preferably about 1/2, of the molar extinction coefficient at the wavelength of maximum absorbance, as defined by the Beer-Lambert Law (absorbance = extinction coefficient in unit of liters/(moles x cm) x path length in cm x concentration in molarity). Typically, the extinction coefficient at the extremes of each of the specified ranges is greater than or equal to about 4,000, in those cases where the extinction coefficient at the wavelength of maximum absorbance is from about 10,000 to about 25,000. The extinction coefficient as used herein is calculated using the Beer-Lambert Law from the absorbance of a homogeneous solution comprised of the dye in dimethylformamide, wherein the concentration of dye is adjusted such that the absorbance at the wavelength of maximum absorbance is in the range of from about 0.2 to about 1.5.

Where a range is specified, it is understood that all values within these ranges are within the scope of the present invention.

The inventive coating compositions may optionally be blended with one or more additional coating resins.

In a further embodiment, the water-dispersible polymers containing thermally-stable, copolymerizable toner dyes as an integral part of the polymer structure are provided in an amount sufficient to enhance whiteness and to prevent and mask yellowing, but yet not so much as to visibly color the coating composition. In this regard, the toner dye or dyes are provided in the coating composition in an amount of less than about 350 ppmw, based on the total weight of the coating composition, or within a range from about 5 ppmw to about 80 ppmw, or from about 10 ppmw to about 40 ppmw, and all values within these ranges.

Another aspect of the invention relates broadly to liquid coating compositions that contain solvent-borne condensation polymers that have incorporated therein, thermally-stable, copolymerized toner dyes as an integral part of the polymer structure.

The term "solvent-borne" is intended to encompass those polymers dispersed or dissolved in any organic solvent known to be useful in formulating coating compositions, without limitation. Solvent-borne coating compositions are distinguished from water-borne or aqueous coating compositions by the fact that the predominant liquid present in the composition is not water. Organic solvents suitable for use in formulating coating compositions include, but are not limited to, benzene, xylene, mineral spirits, vm&p naptha, toluene, acetone, methyl ethyl ketone, methyl n-amyl ketone, methyl isoamyl ketone, n-butyl acetate, isobutyl acetate, t-butyl acetate, n-propyl acetate, isopropyl acetate, ethyl acetate, methyl acetate, ethanol, n propanol, isopropanol, n butanol, sec butanol, isobutanol, ethylene glycol monobutyl ether, propylene glycol n butyl ether, propylene glycol methyl ether, propylene glycol monopropyl ether, dipropylene glycol methyl ether, diethylene glycol monobutyl ether, trimethylpentanediol mono isobutyrate, ethylene glycol mono octyl ether, diacetone alcohol, TEXANOL® ester alcohol (Eastman Chemical Co.), and the like. Such solvents may also include reactive solvents, such as, for example, diallyl phthalate, SANTOLINK XI 100® polyglycidyl allyl ether from Monsanto, and others as described in U.S. Patent Nos. 5,349,026 and 5,371,148, incorporated herein by reference.

In one embodiment, the solvent-borne condensation polymer having toner dye polymerized therein is a solvent-borne polyester. As used herein, the term polyester is intended to encompass polyesters that include polyamide linkages. In another embodiment, the solvent-borne condensation polymer having one or more toner dyes polymerized therein is a solvent-borne alkyd resin.

In one embodiment, the inventive coating compositions include: one or more solvent-borne polymers having incorporated therein one or more red or violet toner dyes and one or more blue toner dyes, wherein each dye can be in the same or a different solvent-borne polymer. Typically, the red toner dyes strongly absorb light at wavelengths from about 470 nm to about 580 nm, preferably from about 480 nm to about 570 nm, and all values within these ranges; the violet toner dyes typically absorb light at wavelengths from about 500 nm to about 610 nm, preferably from about 510 nm to about 600 nm, and all values within these ranges; and the blue toner dyes strongly absorb light at wavelengths from about 530 nm to about 650 nm, preferably from about 560 nm to about 640 nm, and all values within these ranges.

In another aspect, the inventive coating compositions include one or more solvent-borne polymers having incorporated therein one or more reddish-blue dyes that strongly absorb light at wavelengths of from about 520 nm to about 630 nm, preferably from about 540 nm to about 620 nm, and all values within these ranges, and optionally, one or more red or violet toner dyes, each as defined herein.

In a further aspect, the inventive coating compositions comprise: a solvent-borne polymer composition having copolymerized therein a toner dye system comprised of:

(1) at least one blue 1,4-bis(2,6-dialkylanilino)anthraquinone(s) of Formula (I):

(I)

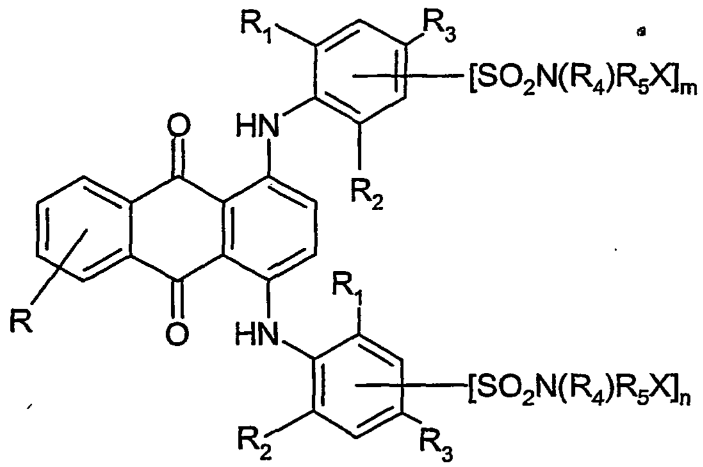

wherein:

R is selected from the group consisting of hydrogen, $C_1$ -$C_6$-alkyl, halogen, carboxy and $C_1$-$C_6$-alkoxycarbonyl;
$R_1$ and $R_2$ are independently selected from bromo and $C_1$-$C_6$-alkyl;
$R_3$ is selected from the group consisting of hydrogen, halogen, $C_1$-$C_6$-alkyl, substituted $C_1$-$C_6$-alkyl, hydroxy, $C_1$-$C_6$-alkoxy, substituted $C_1$-$C_6$-alkoxy, cyano, thiocyano, $C_1$-$C_6$-alkylthio, substituted $C_1$-$C_6$-alkylthio, $C_1$-$C_6$-alkylsulfonyl, substituted $C_1$-$C_6$-alkylsulfonyl, $C_1$-$C_6$-alkoxycarbonyl, carboxy, aryloxy, arylthio, arylsulfonyl, and $SO_2N(R_4)R_5X$ when m and/or n are zero;
$R_4$ is selected from the group consisting of hydrogen, $C_1$-$C_6$-alkyl, substituted $C_1$-$C_6$-alkyl, $C_3$-$C_8$-alkenyl, $C_3$-$C_8$-alkynyl, $C_3$-$C_8$-cycloalkyl and aryl;
$R_5$ is a linking group selected from the group consisting of $C_1$-$C_8$-alkylene, $C_1$-$C_6$-alkylene-(Z-$C_1$-$C_6$)$_{1-2}$-alkylene, arylene-$C_1$-$C_6$-alkylene, arylene-Z-$C_1$-$C_6$-alkylene, $C_3$-$C_7$-cycloalkylene, $C_1$-$C_6$-alkylene-$C_3$-$C_8$-cycloalkylene-$C_1$-$C_6$-alkylene, $C_1$-$C_6$-alkylene-arylene-$C_1$-$C_6$-alkylene, and $C_1$-$C_6$-alkylene-Z-arylene-Z-$C_1$-$C_6$-alkylene, wherein Z is selected from -O-, -S- or $SO_2$;
X is hydrogen or a polyester reactive group; and
m and n are independently 0 or 1; with the proviso that at least one polyester reactive group is present;

and
2) at least one red or violet toner dye, which may be blended with one or more of the blue component(s) of formula I above, and which has one of the following structural formulas II-X:

(II)

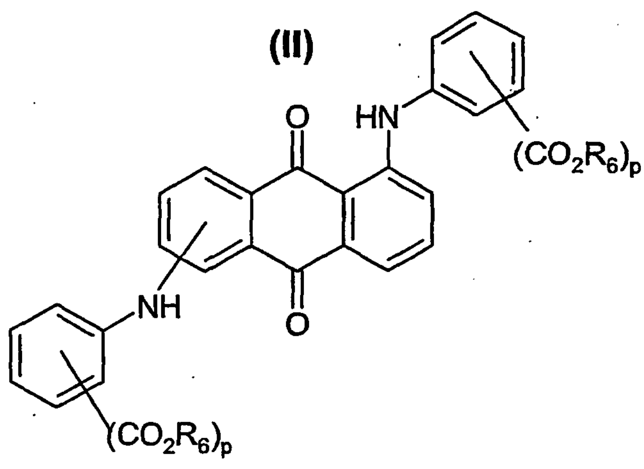

;

(III)

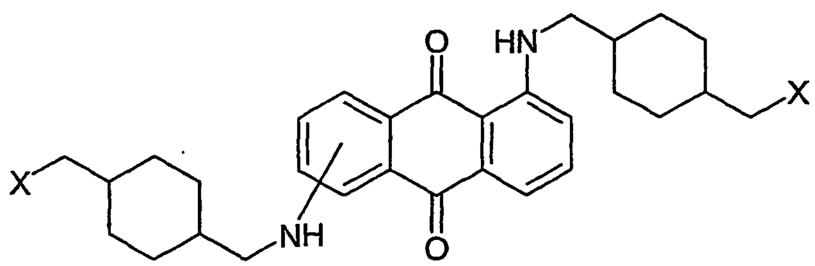

;

(IV)

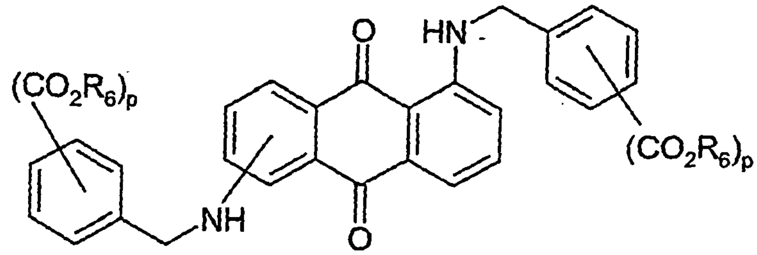

;

(V)

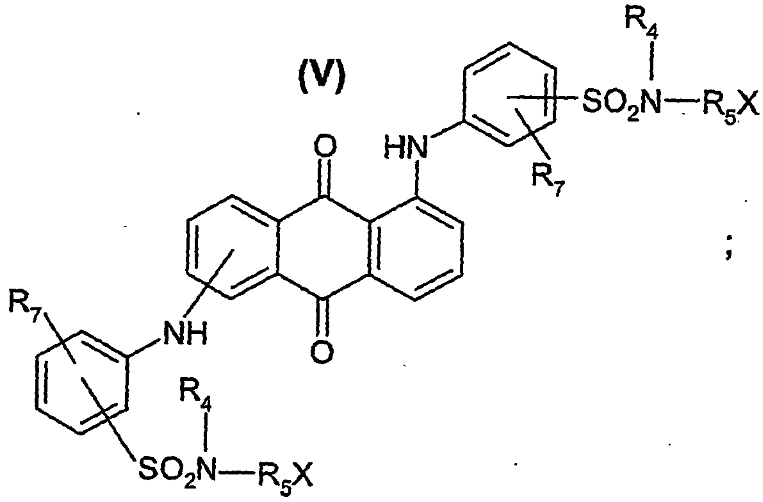

;

**(VI)**

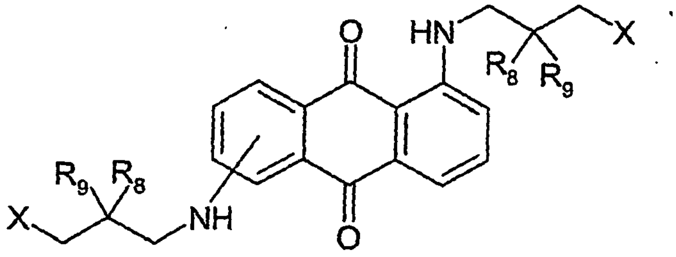

;

**(VII)**

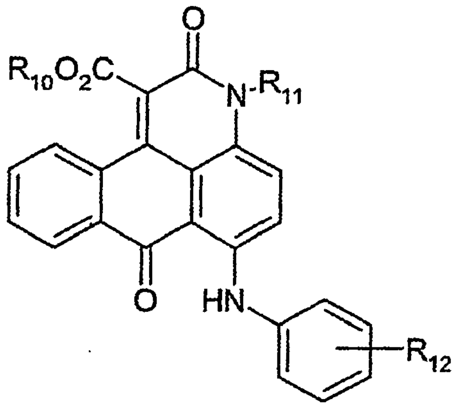

;

**(VIII)**

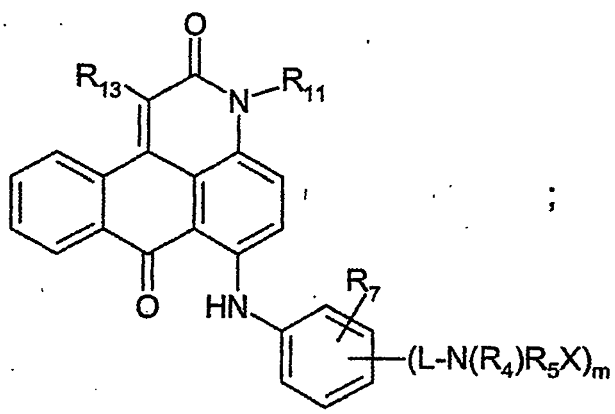

;

(IX)

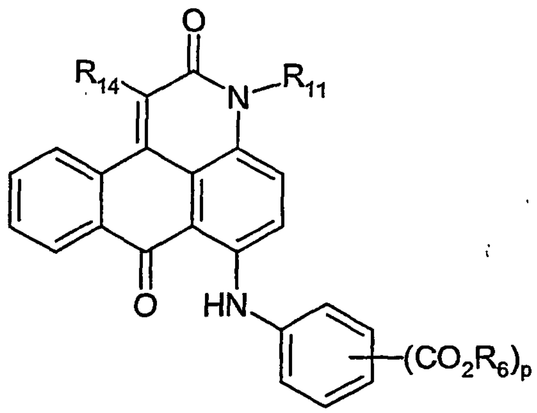

;

(X)

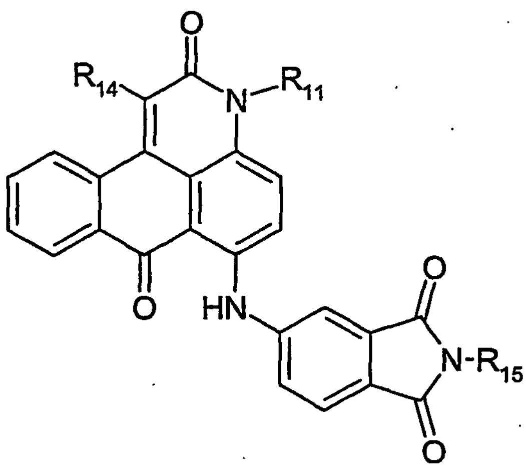

;

wherein:

$R_6$ is selected from the group consisting of hydrogen, $C_1$-$C_6$-alkyl, substituted $C_1$-$C_6$-alkyl, $C_3$-$C_8$-alkenyl, $C_3$-$C_8$-alkynyl, $C_3$-$C_8$-cycloalkyl or aryl;

$R_7$ is hydrogen or one to three groups selected from $C_1$-$C_6$-alkyl, substituted $C_1$-$C_6$-alkyl, $C_1$-$C_6$-alkanoylamino, halogen, hydroxy, $C_1$-$C_6$-alkoxy, $C_1$-$C_6$-alkylthio, substituted $C_1$-$C_6$-alkoxy, substituted $C_1$-$C_6$-alkylthio;

$R_8$ and $R_9$ are the same or different and are selected from the group consisting of $C_1$-$C_6$-alkyl, substituted $C_1$-$C_6$-alkyl, $C_3$-$C_8$-cycloalkyl or aryl;

$R_{10}$ is selected from the group consisting of $C_1$-$C_6$-alkyl, substituted $C_1$-$C_6$-alkyl, $C_3$-$C_8$-cycloalkyl or aryl;

$R_{11}$ is selected from the group consisting of hydrogen, $C_1$-$C_{12}$-alkyl, substituted $C_1$-$C_{12}$-alkyl, $C_3$-$C_8$-alkenyl, $C_3$-$C_8$-alkynyl, $C_3$-$C_8$-cycloalkyl and aryl;

$R_{12}$ is hydrogen or one to three groups selected from the group consisting of $C_1$-$C_6$-alkyl, substituted $C_1$-$C_6$-alkyl, $C_1$-$C_6$-alkoxy, substituted $C_1$-$C_6$-alkoxy, $C_1$-$C_6$-alkylthio, substituted $C_1$-$C_6$-alkylthio, halogen, hydroxy, $C_1$-$C_6$-alkanoylamino, aroylamino, $C_1$-$C_6$-alkylsulfonylamino and arylsulfonylamino;

$R_{13}$ and $R_{14}$ are selected from hydrogen, cyano or $CO_2R_{10}$;

$R_{15}$ is $R_4$ or $R_5X$ as previously defined;

L is -CO- or -$SO_2$-; X is as previously defined; m is 0 or 1; p is 1 or 2;

with the provision that at least one polyester reactive group is present as X or as a substituent on $R_3$, $R_4$, $R_6$, $R_7$, $R_{10}$, $R_{11}$, $R_{12}$, $R_{13}$, $R_{14}$ or $R_{15}$.

In a further embodiment, the inventive coating compositions comprise a solvent-borne polymer composition having copolymerized therein at least one reddish-blue toner dye, optionally mixed with one or more of the red or violet toner dyes set forth above in Formulae II-X, the reddish-blue toner dye having a structure consistent with Formula (XI):

XI

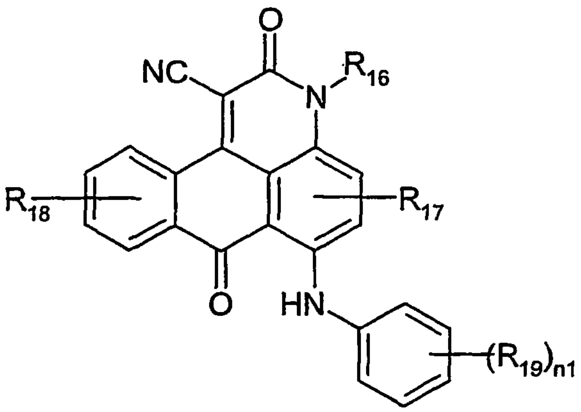

wherein

$R_{16}$ is selected from hydrogen, $C_1$-$C_{12}$-alkyl, substituted $C_1$-$C_6$-alkyl, $C_3$-$C_8$-cycloalkyl, $C_3$-$C_8$-alkenyl, $C_3$-$C_8$-alkynyl and aryl;
$R_{17}$ is selected from hydrogen, halogen, $C_1$-$C_6$-alkyl, substituted $C_1$-$C_6$-alkyl, $C_1$-$C_6$-alkoxy, substituted $C_1$-$C_6$-alkoxy, aryloxy, $C_1$-$C_6$-alkylthio, substituted $C_1$-$C_6$-alkylthio, arylsulfonyl and arylthio;
$R_{18}$ is selected from hydrogen, halogen, $C_1$-$C_6$-alkyl, substituted $C_1$-$C_6$-alkyl, $C_1$-$C_6$-alkoxy and substituted $C_1$-$C_6$-alkoxy;
$R_{19}$ is selected from hydrogen or 1-3 groups selected from, halogen, $C_1$-$C_6$-alkyl, substituted $C_1$-$C_6$-alkyl, aryl, $C_1$-$C_6$-alkoxy, substituted $C_1$-$C_6$-alkoxy, $C_1$-$C_6$-alkylthio, substituted $C_1$-$C_6$-alkylthio, $C_1$-$C_6$-alkoxycarbonyl, substituted $C_1$-$C_6$-alkoxycarbonyl, arylthio, $C_1$-$C_6$-alkoxycarbonyloxy, substituted $C_1$-$C_6$-alkoxycarbonyloxy, carboxy, sulfamoyl, $C_1$-$C_6$-alkylsulfamoyl, substituted $C_1$-$C_6$-alkylsulfamoyl, di-$C_1$-$C_6$-alkylsulfamoyl, substituted di-$C_1$-$C_6$-alkylsulfamoyl, $C_1$-$C_6$-alkylarylsulfamoyl, substituted $C_1$-$C_6$-alkylarylsulfamoyl, $C_3$-$C_8$-cycloalkylsulfamoyl, substituted $C_3$-$C_8$-cycloalkylsulfamoyl, arylsulfamoyl, carbamoyl, $C_1$-$C_6$-alkylcarbamoyl, substituted $C_1$-$C_6$-alkylcarbamoyl, di-$C_1$-$C_6$-alkylcarbamoyl, substituted di-$C_1$-$C_6$-alkylcarbamoyl, $C_1$-$C_6$-alkylarylcarbamoyl, substituted $C_1$-$C_6$-alkylarylcarbamoyl, $C_3$-$C_8$-cycloalkylcarbamoyl, substituted $C_3$-$C_8$-cycloalkylcarbamoyl, arylcarbamoyl, 2-pyrrolidono, $C_1$-$C_6$-alkanoylamino, substituted $C_1$-$C_6$-alkanoylamino, N-$C_1$-$C_6$-alkyl-$C_1$-$C_6$-alkanoylamino, or substituted N-$C_1$-$C_6$-alkyl-$C_1$-$C_6$-alkanoylamino; and
n1 is an integer of 1 to 5; with the proviso that at least one polyester reactive group be present as X or as a substituent on $R_{16}$, $R_{17}$, $R_{18}$ or $R_{19}$.

The term "polyester reactive group" is used herein to describe a group which is reactive with at least one of the functional groups from which the polyester is prepared under polyester-forming conditions. Examples of the groups which X may represent include hydroxy, carboxy, an ester group, amino, $C_1$-$C_6$-alkylamino, etc. Thus, as used herein, the term polyester is intended to encompass polyesters that include polyamide linkages. The ester radicals may be any radical having the formulae

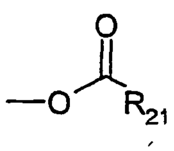 , 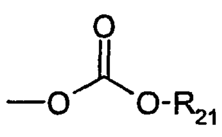 , 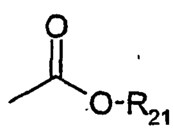 , 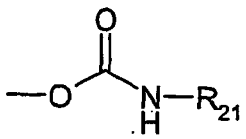 ,

wherein $R_{21}$ is selected from the group consisting of $C_1$-$C_6$-alkyl, substituted $C_1$-$C_6$-alkyl, $C_3$-$C_8$-cycloalkyl or aryl. Reactive group X is preferably hydroxy, carboxy, $C_1$-$C_2$-alkoxycarbonyl or acetoxy.

In the terms "substituted $C_1$-$C_6$-alkyl", "substituted $C_1$-$C_{12}$-alkyl" "substituted $C_1$-$C_6$-alkoxy", "substituted $C_1$-$C_6$-alkylthio", "substituted $C_1$-$C_6$-alkylsulfonyl" "substituted $C_1$-$C_6$-alkylsulfonylamido", "substituted alkylene", "substituted $C_1$-$C_6$-alkoxycarbonyl", "substituted $C_1$-$C_6$-alkoxycarbonyl", "substituted $C_1$-$C_6$-alkoxycarbonyloxy", "substituted $C_1$-$C_6$-alkylsulfamoyl", "substituted di-$C_1$-$C_6$-alkylsulfamoyl", "substituted $C_1$-$C_6$-alkylarylsulfamoyl", "substituted $C_3$-$C_8$-cycloalkylsutfamoyl", "substituted $C_1$-$C_6$-alkylcarbamoyl", "substituted di-$C_1$-$C_6$-alkylcarbamoyl", "substituted $C_1$-$C_6$-alkylarylcarbamoyl", "substituted $C_3$-$C_8$-cydoalkylcarbamoyl", "substituted $C_1$-$C_6$-alkanoylamino" and "substituted N-$C_1$-$C_6$-alkyl-$C_1$-$C_6$-alkanoylamino", the alkyl and alkylene groups or portions of the groups may contain as further substituents one or more groups, preferably one to three groups selected from the group consisting of hydroxy, halogen, carboxy, cyano, aryl, aryloxy, arylthio, $C_1$-$C_4$-alkylthio, $C_1$-$C_4$-alkylthio, $C_3$-$C_7$-cycloalkyl, $C_1$-$C_4$-alkanoyloxy and -(-$OR_{22}$-$)_{p1}$-$R_{23}$, wherein $R_{22}$ is selected from the group consisting of $C_1$-$C_6$-alkylene, $C_1$-$C_6$-alkylenearylene, cyclohexylene, arylene, and $C_1$-$C_6$-alkylenecyclohexylene; $R_{23}$ is selected from the group consisting of hydrogen, hydroxy, carboxy, $C_1$-$C_4$-alkanoyloxy, $C_1$-$C_4$-alkoxycarbonyl, aryl, and $C_3$-$C_7$-cycloalkyl; and $_{p1}$ is 1, 2, 3, or 4. The terms "$C_1$-$C_4$-alkanoyloxy" and " $C_1$-$C_4$-alkoxycarbonyl" refer to the structures $R_{24}CO$- and $R_{24}OCO$-, respectively, wherein $R_{24}$ represents a straight or branched saturated hydrocarbon radical containing one to four carbons.

The term "aryl" as used herein preferably denotes phenyl and phenyl substituted with one to three substituents selected from the group consisting of $C_1$-$C_6$-alkyl, $C_1$-$C_6$-alkoxy, halogen, carboxy, cyano, $C_1$-$C_6$-alkylthio, $C_1$-$C_6$-alkylsulfonyl, trifluoromethyl, hydroxy, $C_1$-$C_6$-alkanoyloxy, $C_1$-$C_6$-alkanoylamino, and $C_1$-$C_6$-alkoxycarbonyl.

The term "arylene" includes 1,2-,1,3- and 1,4-phenylene and such radicals substituted one to three times with $C_1$-$C_6$-alkyl, $C_1$-$C_6$-alkoxy, $C_1$-$C_6$-alkoxycarbonyl, or halogen.

The term "$C_3$-$C_8$-cycloalkyl" is used to denote saturated cycloaliphatic radicals containing three to eight carbon atoms.

The terms "$C_3$-$C_8$-alkenyl" and " $C_3$-$C_8$-alkynyl" are used to denote aliphatic hydrocarbon moieties having 3-8 carbons and containing at least one carbon-carbon double bond and one carbon-carbon triple bond, respectively.

The term "halogen" is used to indicate bromine, chlorine, fluorine, and iodine.

The terms "$C_1$-$C_6$-alkoxycarbonyl", "$C_1$-$C_6$-alkanoyloxy" and "$C_1$-$C_6$-alkanoylamino," consistent with their use throughout the specification, are used to represent radicals of the formulae

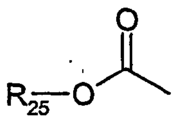 , 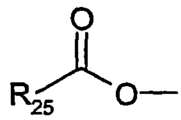 , and 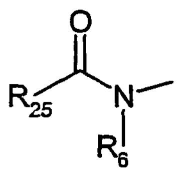 ,

respectively, wherein $R_{25}$ is a straight or branched chain $C_1$-$C_6$-alkyl radical and $R_6$ is as defined above.

The terms "thermally stable" and "thermal stability" mean that the co-polymerizable toner dyes can withstand the conditions of polyester synthesis, as disclosed herein, without leading to a significant change in color that typically accompanies degradation of the toner dye chromophore, or a loss of color that can be due to volatilization of the toner dye.

The term "strongly absorb(s)" means that the toner dye has a maximum absorbance within the defined range. Preferably, the dye has a molar extinction coefficient, at the extremes of each of the respective specified ranges, that is greater than or equal to about 1/3, or preferably about 1/2, of the molar extinction coefficient at the wavelength of maximum absorbance, as defined by the Beer-Lambert Law (absorbance = extinction coefficient in unit of liters/(moles x cm) x path length in cm x concentration in molarity). Typically, the extinction coefficient at the extremes of each of the specified ranges is greater than or equal to about 4,000, in those cases where the extinction coefficient at the wavelength of maximum absorbance is from about 10,000 to about 25,000. The extinction coefficient as used herein is calculated using the Beer-Lambert Law from the absorbance of a homogeneous solution comprised of the dye in dimethylformamide, wherein the concentration of dye is adjusted such that the absorbance at the wavelength of maximum absorbance is in the range of from about 0.2 to about 1.5.

Where a range is specified, it is understood that all values within these ranges are within the scope of the present invention.

The inventive coating compositions may optionally be blended with one or more additional coating resins, in addition to the solvent-borne toner polymer, and the polymer subject to yellowing, if present.

In one embodiment, the solvent-borne polymers containing thermally-stable, copolymerizable toner dyes as an integral part of the polymer structure are provided in an amount sufficient to enhance whiteness and to prevent and mask yellowing, but yet not so much as to visibly color the coating composition. In this regard, the toner dye or dyes are

provided in the coating composition in an amount of less than about 350 ppmw, based on the total weight of the coating composition, preferably within a range from about 5 ppmw to about 80 ppmw, or from about 10 ppmw to about 40 ppmw, and all values within these ranges.

Water-dispersible and Solvent-Borne Polyester Compositions.

Descriptions and processes of manufacture of some exemplary water-dispersible polymer compositions that we have found to be suitable for copolymerization with the copolymerized dyes used in various embodiments of the invention described herein, are given in U.S. Pat. Nos. 3,734,874, 3,779,993, 3,828,010, 4,233,196, and 3,546,008, the disclosures of which are incorporated herein by reference. As used herein, and as further defined below, the term polyester is intended to encompass polyesters that include polyamide linkages.

Solvent-borne polyester resins for use in various embodiments of the present invention may be any polyester resin, with or without the hydrophilic groups as described below, that may be dissolved in an organic solvent and used in solvent-based coating formulations. Suitable polyesters include those described in U.S. Pat. Nos. 3,668,276, 3,994,851, 4,535,132, and 4,316,940, the disclosures of which are incorporated herein by reference. These polyesters may be combined with a curing agent capable of reacting with active hydrogens in the polyester, to provide a thermosetting coating. Examples of curing agents are aminoplasts and polyisocyanates, including blocked isocyanates. A cure catalyst may also be employed.

An embodiment including a water-dispersible polyester resin may include any waterborne polyester resin having at least one pendant hydrophilic group or hydrophilic group that is part of the polymer backbone, such as polyglycol ethers, that makes the polyester water-dispersible, as is known in the art. Pendant hydrophilic groups include, but are not limited to, carboxylic acids, sulfonic acids, polyglycol ethers, and the like.

Thus in one embodiment, the polyester polymers have linking groups comprising at least about 20 mole % carbonyloxy and up to about 80 mole % carbonylamido, said material containing water-solubilizing sulfonate groups and having reacted onto or into the polymer backbone from about 0.01 to about 30 weight %, based on the total weight of the polyester, wherein the toner dye initially has at least one polyester reactive group. The aforementioned equivalents encompass the various condensable derivatives thereof including hydroxy, carboxy, amino, $C_1$-$C_6$-alkoxycarbonyl, $C_1$-$C_6$-alkoxycarbonyloxy, $C_1$-$C_6$-N-alkylcarbamyloxy, $C_1$-$C_6$-alkanoyloxy, chlorocarbonyl, carbamyloxy, $C_1$-$C_6$-alkylamino, N-arylcarbamyloxy, cyclohexanoyloxy, and cyclohexyloxycarbonyl.

In one embodiment, the polymeric material contains carbonyloxy linking groups in the linear molecular structure, wherein up to 80% of said linking groups may be carbonylamido linking groups, the polymer having an inherent viscosity of from about 0.1 to about 1.0 measured to a 60/40 parts by weight solution of phenol/tetrachloroethane at 25 °C. and at a concentration of 0.25 gram of polymer in 100 mL of the solvent, the polymer containing substantially equimolar proportions of acid equivalents (100 mole percent) to hydroxy and amino equivalents (100 mole percent), the polymer comprising the reaction residues of the following reactants (a), (b), (c), (d), and (e) or the ester forming or esteramide forming derivatives thereof;

(a) at least one difunctional dicarboxylic acid;
(b) from about 4 to about 30 mole percent, based on a total of all acid, hydroxyl and amino equivalents being equal to 200 mole percent, of at least one difunctional sulfomonomer containing at least one cationic sulfonate group attached to an aromatic or cycloaliphatic nucleus wherein the functional groups are hydroxy, carboxyl or amino;
(c) at least one difunctional reactant selected from a glycol or a mixture of a glycol and a diamine having two $-NHR_{20}$ groups, wherein $R_{20}$ is selected from hydrogen and $C_1$-$C_{12}$ alkyl, the glycol containing two $-CH_2$-OH groups of which

(1) at least 10 mole percent, based on the total mole percent of hydroxy or hydroxy and amino equivalents, is a poly(ethylene glycol) having the structural formula:

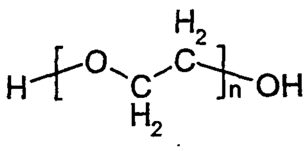
,

n being an integer of from 2 to about 20, or
(2) from none to less than about 15 mole percent based upon the total mole percent of hydroxy or hydroxy and amino equivalents, is a poly(ethylene glycol) having the structural formula:

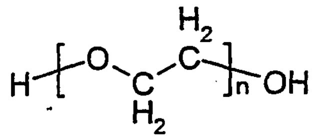
,

n being an integer of between 20 and about 500, and with the proviso that the mole percent of said poly(ethylene glycol) within the range is inversely proportional to the quantity of n within said range;
(d) from none to at least one difunctional reactant selected from a hydroxycarboxylic acid having one -($C(R^1)_2$-OH group, an amino-carboxylic acid having one -$NR^1H$ group, and an amino-alcohol having one -$C(R^1)_2$-OH group and one -$NR^1H$ group, or mixtures of the difunctional reactants; wherein each $R^1$ in the (c) or (d) reactants is a hydrogen atom or an alkyl group of 1 to 4 carbon atoms; and
(e) from about 0.01 to about 30 weight % of one or more toner dye residue(s), based on the total weight of the polyester, wherein the toner dye initially has at least one polyester reactive group comprising a blue anthraquinone toner dye and either a red or violet anthraquinone toner dye or a red or violet anthrapyridone toner dye or a single component colorant system comprising a reddish-blue anthrapyridone toner dye, and optionally comprising a red or violet anthraquinone toner dyeor a red or violet anthrapyridone toner dye, all as defined herein.

In the above polymeric material, it is preferred that very minor, e.g., less than about 10 mol % based on all reactants, of reactant (d) is employed, that at least about 70 mol % of reactant (c) is glycol, and that at least about 70 mol % of all hydroxy equivalents is present in the glycol.
Those skilled in the art will readily appreciate that such polyesters may be provided in a liquid coating composition as a solvent-borne polymer, or may be provided as a water-dispersed polyester, depending upon the characteristics of the particular polymer prepared, and the needs of the formulator.
In a further embodiment of the invention:

(A) the polyester material, that may be a water-dispersible polyester material, comprises (a) an acid component (moiety) of from about 75 to about 84 mole % isophthalic acid and conversely from about 25 to about 16 mole % 5-sodio-sulfoisophthalic acid, (c) a glycol component (moiety) of from about 45 to about 60 mole % diethylene glycol and conversely from about 55 to about 40 mole % 1,4-cyclohexanedimethanol or ethylene glycol or mixtures thereof, and (e) from about 0.01 to about 30 weight %, preferably from about 0.05 weight % to about 10 weight %, of mono- or difunctional toner dye material based upon the total weight of the polyester; with regard to the polymer, the term "moiety" as used herein designates the residual portion, for example, of the reactant acid or glycol or condensable derivative thereof which actually enters into or onto the polymer chain during the condensation or polycondensation reaction;
(B) the inherent viscosity of the polymeric material is from about 0.20 to about 0.38, the acid component (moiety) comprises from about 80 to about 83 mole % isophthalic acid and conversely from about 20 to about 17 mole % 5-sodiosulfoisophthalic acid, and the glycol component (moiety) comprises from about 52 to about 56 mole % diethylene glycol and conversely from about 48 to about 44 mole % 1,4-cyclohexanedimethanol;
(C) the polyester materials have an inherent viscosity of from about 0.28 to about 0.38, an acid moiety of from about 75 to about 84 mole % isophthalic acid and conversely from about 25 to about 16 mole % 5-sodiosulfoisophthalic acid, and a poly(ethyleneglycol) moiety of from about 45 to about 60 mole % diethylene glycol and conversely from about 55 to about 44 mole % of a glycol component consisting of 1,4-cyclohexanedimethanol or ethylene glycol or mixtures thereof; and
(D) the acid moiety comprises from about 80 to about 83 mole % isophthalic acid and conversely from about 20 to about 17 mole % 5-sodiosulfoisophthalic acid, and the poly(ethyleneglycol) moiety comprises from about 52 to about 56 mole % diethylene glycol and conversely the glycol component comprises from about 48 to about 44 mole % 1,4-cyclohexanedimethanol.

The inherent viscosities (I.V.) of the particular polyester materials useful herein range from about 0.1 to about 1.0, determined according to ASTM D2857-70 procedure, in a Wagner Viscometer of Lab Glass, Inc. of Vineland N.J., having a 1/2 mL capillary bulb, using a polymer concentration about 0.25% by weight in 60/40 by weight of phenol/ tetrachloroethane. The procedure is carried out by heating the polymer/solvent system at 120°C. for 15 minutes; cooling the solution to 25°C. and measuring the time of flow at 25°C. The I.V. is calculated from the equation:

$$(n)^{25^\circ C}_{0.5\%} = \ln \frac{\frac{t_s}{t_o}}{C}$$

wherein:

(n)=inherent viscosity at 25 °C. at a polymer concentration of 0.25 g/100 mL of solvent;
In=natural logarithm;
$t_s$ =sample flow time;
$t_o$ =solvent-blank flow time; and
C=concentration of polymer in grams per 100 mL of solvent=0.25.

The units of the inherent viscosity throughout this application are in deciliters/gram. It is noted that higher concentrations of polymer, e.g., 0.50 g of polymer/100 mL solvent may be employed for more precise I.V. determinations.

The afore-described polyester material may be prepared according to the polyester preparation technology described in U.S. Pat. Nos. 3,734,874; 3,779,993; and 4,233,196, the disclosures of which are incorporated herein by reference, and the use of the term "acid" in the above description and in the appended claims includes the various ester-forming or condensable derivatives of the acid reactants such as the acid halides and dimethyl esters as employed in the preparations set out in these patents. Among the sulfo-monomers selected are those wherein the sulfonate group is attached to an aromatic nucleus such as benzene, naphthalene, diphenyl, or the like, or wherein the nucleus is cycloaliphatic such as in 1,4-cyclohexanedicarboxylic acid.

In another aspect, the polyester compositions further comprise a polyol. Such polyesters are preferably formulated to have hydroxyl numbers 40-200 mg KOH/g, acid number 0-80 mg KOH/g, and number average molecular weight 800-3000. Examples of polyols include trimethylolpropane, trimethylolethane, glycerine, and pentaerythritol.

<u>Water-Dispersible and Solvent-Borne Alkyd Compositions.</u>

Alkyds useful in various embodiments of the invention may generally be prepared by reacting a diol, a polyol, a polyacid, a monofunctional acid, and a fatty acid, fatty ester, or a naturally occurring, partially-saponified oil, optionally in the presence of a catalyst. In one embodiment, the alkyd resin portion of the toner polymer is prepared from: (i) from 0 to about 30 mol % of a diol, (ii) from about 10 to about 40 mol % of a polyol, (iii) from about 20 to about 40 mol % of a polyacid, (iv) from 0 to about 10 mol % of a monofunctional acid, (v) from about 10 to about 50 mol % of a fatty acid, fatty ester, or naturally occurring oil, and optionally, (vi) a catalyst, wherein the mole percents are based on the total moles of (i), (ii), (iii), (iv), (v), and (vi), if present. Suitable examples of each of the components of the alkyd resin include those known in the art, including, but not limited to, those discussed below, and in Resins for Surface Coatings, Vol. 1, p. 127, ed. by P.K.T. Oldring and G. Hayward, SITA Technology, London, UK, 1987, incorporated herein by reference.

A solvent-borne alkyd resin for use in various solvent-borne embodiments may be any alkyd resin with or without hydrophilic groups provided for water-dispersibility, as described below. These resins may be dissolved in an organic solvent and used in solvent-based coating formulations.

The fatty acid, fatty ester, or naturally occurring, partially-saponified oil may be any fatty acid, fatty ester, or naturally occurring, partially-saponified oil known in the art used in the formation of an alkyd resin. In one embodiment, at least one monobasic fatty acid, fatty ester, or naturally occurring, partially-saponified oil is used and selected from the following formulae (I), (II) and (III):

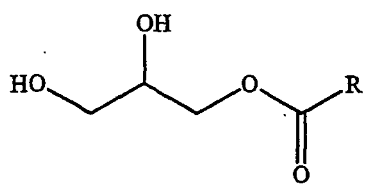

(I)

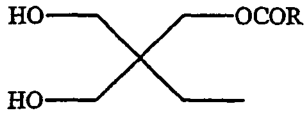

(II)

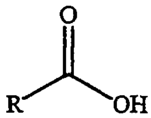

(III)

In formulae (I), (II) and (III), R is a saturated or unsaturated $C_8$-$C_{20}$ alkyl group. More preferably, R is one of the following unsaturated $C_{17}$ alkyl groups:

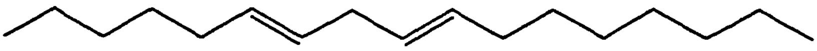

LINOLEIC

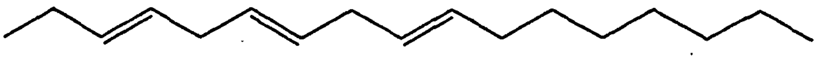

LINOLENIC

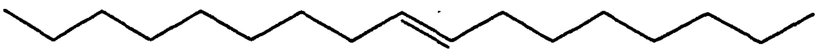

OLEIC

In another embodiment, the monobasic fatty acid or fatty ester oil may be prepared by reacting an oil or a fatty acid with a polyol. Examples of suitable oils include sunflower oil, canola oil, dehydrated castor oil, coconut oil, corn oil, cottonseed oil, fish oil, linseed oil, oiticica oil, soya oil, tung oil, animal grease, castor oil, lard, palm kernel oil, peanut oil, perilla oil, safflower oil, tallow oil, walnut oil, and the like. Suitable examples of fatty acids alone or as components of oil include, but are not limited to, tallow acid, soya acid, myristic acid, linseed acid, crotonic acid, versatic acid, coconut acid, tall oil fatty acid (e.g., PAMOLYN 200 and PAMOLYN 380, commercially available from Eastman Chemical Co.), rosin acid, neodecanoic acid, neopentanoic acid, isostearic acid, 12-hydroxystearic acid, cottonseed acid, and the like.

The polyol used in the preparation of the alkyd resin itself, or the monobasic fatty acid or fatty ester, is preferably selected from aliphatic, alicyclic and aryl alkyl polyols. Suitable examples of polyols include, but are not limited to, trimethylolpropane (TMP), pentaerythritol (PE), trimethylolethane, erythritol, threitol, dipentaerythritol, sorbitol, glycerine, and the like. Preferably, the polyol is trimethylolpropane (TMP) or pentaerythritol (PE).

In addition to the polyol, a diol may be used in the preparation of the alkyd resin. Examples of suitable diols include, but are not limited to, neopentyl glycol (NPG), ethylene glycol, propylene glycol, diethylene glycol, triethylene glycol, tetraethylene glycol, pentaethylene glycol, hexaethylene glycol, heptaethylene glycol, octaethylene glycol, nonaethylene glycol, decaethylene glycol, 1,3-propanediol, 2,4-dimethyl-2-ethyl-hexane-1,3-diol, 2,2-dimethyl-1,2-propanediol, 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 2,2,4-tetramethyl-1,6-hexanediol, thiodiethanol, 1,2-cyclohexanedimethanol, 1,3-cyclohexanedimethanol, 1,4-cyclohexanedimethariol, 2,2,4-trimethyl-1,3-pentanediol, 2,2,4-tetramethyl-1,3-cyclobutanediol, p-xylenediol, hydroxypivalyl hydroxypivalate, 1,10-decanediol, and hydrogenated bisphenol A. Preferably, the diol is neopentyl glycol (NPG).

The polyacid (dicarboxylic acid or tricarboxylic acid) and monofunctional acid (monocarboxylic acid) components of the alkyd resin may be any polyacid or monofunctional acid known in the art used in the formation of an alkyd resin. The dicarboxylic acid may be, for example, isophthalic acid, phthalic anhydride (acid), terephthalic acid, adipic acid, tetrachlorophthalic anhydride, dodecanedioic acid, sebacic acid, azelaic acid, 1,4-cyclohexanedicarboxylic acid, 1,3-cyclohexanedicarboxylic acid, hexahydrophthalic anhydride, tetrahydrophthalic anhydride, maleic anhydride, fumaric acid, succinic anhydride, succinic acid, 2,6-naphthalenedicarboxylic acid, glutaric acid, and the like. Preferably, the dicarboxylic acid is isophthalic acid, phthalic anhydride, or phthalic acid. The tricarboxylic acid may be, for example, trimellitic anhydride. A monofunctional acid may also be used, such as, for example, benzoic acid, acetic acid, propionic acid, t-butylbenzoic acid, and butanoic acid.

Optionally, a catalyst may be used to promote the formation of an alkyd resin. The catalyst may be any catalyst known in the art to be used in the formation of an alkyd resin. Preferably, the catalyst is an acid catalyst, such as, for example, FASCAT 4100. The amount of catalyst added promotes the formation of an alkyd resin as described above, and may be determined by routine experimentation as understood by those skilled in the art. Preferably, a catalyst is added in amounts ranging from about 0.01-1.00 wt %, based on the amounts of reactants.

An alkyd resin may be prepared at a temperature range of about 170-250°C. In a specific embodiment, an alkyd resin has an acid number of from about 2 to about 9mg KOH/g, or from about 3 to about 9mg KOH/g, or from about 3 to about 7mg KOH/g, or from about 4 to about 7mg KOH/g. The alkyd resin has a preferred number average molecular weight of from about 700 to about 6500, more specifically from about 1000 to about 3500, and a $T_g$ of less than about 25°C.

A water-dispersible alkyd resin for use in the present invention may be any alkyd resin having at least one hydrophilic group that makes the alkyd water-dispersible, as is known in the art. Hydrophilic groups include, but are not limited to, carboxylic acids, sulfonic acids, polyglycol ethers, and the like. Examples of such alkyd resins are described in U.S. Pat. No. Nos. 5,378,757 and 5,530,059, the disclosures of which are incorporated herein by reference.

Generally, sulfonated waterborne alkyd resins may be prepared by reacting a monobasic fatty acid, fatty ester or a naturally-occurring, partially-saponified oil; a glycol or polyol; a polycarboxylic acid; and a sulfomonomer or sulfomonomer adduct containing at least one sulfomonomer group.

The monobasic fatty acid, fatty ester, or naturally-occurring, partially-saponified oil is preferably selected from the formulae below:

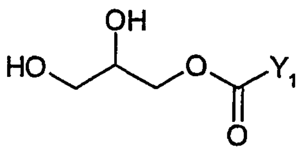
;
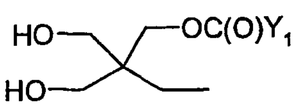
;
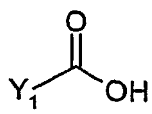
;

wherein $Y_1$ is a $C_8$-$C_{20}$ alkyl or alkenyl group. More preferably, $Y_1$ is selected from one of the following:

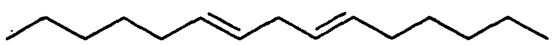
,

Linoleic

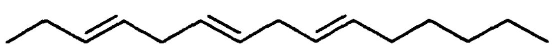
,

Linolenic

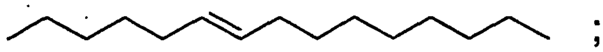

Oleic

The monobasic fatty acid, fatty ester or naturally-occurring, partially-saponified oil is preferably prepared by reacting a fatty acid or oil with a polyol. Examples of suitable oils include, but are not limited to, sunflower oil, canola oil, dehydrated castor oil, coconut oil, corn oil, cottonseed oil, fish oil, linseed oil, oiticica oil, soya oil, and tung oil, animal grease, castor oil, lard, palm kernel oil, peanut oil, perilla oil, safflower oil, tallow oil, walnut oil, and the like. Suitable examples of fatty acids alone or as components of oil include, but are not limited to, tallow acid, soya acid, myristic acid, linseed acid, crotonic acid, versatic acid, coconut acid, tall oil fatty acid, rosin acid, neodecanoic acid, neopentanoic acid, isostearic acid, 12-hydroxystearic acid, cottonseed acid, and the like.

The glycol is preferably selected from aliphatic, alicyclic, and aryl alkyl glycols. Suitable examples of glycols include, but are not limited to, ethylene glycol, propylene glycol, 1,3-propanediol, 2,4-dimethyl-2-ethylhexane-1,3-diol, 2,2-dimethyl-1,3-propanediol, 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 2,2,4-tetramethyl-1,6-hexanediol, 1,2-cyclohexanedimethanol, 1,3-cyclohexanedimethanol, 1,4-cyclohexanedimethanol, 2,2,4-trimethyl-1,3-pentanediol, 2,2,4-tetramethyl-1,3-cyclobutanediol, p-xylenediol, hydroxypivalyl hydroxypivalate, 1,10-decanediol, 2,6-decahydronaphthalenedimethanol hydrogenated bisphenol A. Suitable poly(ethylene glycols) include but are not limited to the following: diethylene glycol, triethylene glycol, tetraethylene glycol, pentaethylene glycol, hexaethylene glycol, heptaethylene glycol, octaethylene glycol, nonaethylene glycol, decaethylene glycol. Suitable polyols include but are not limited to the following: trimethylolpropane, trimethylolethane, pentaerythritol, erythritol, threitol, dipentaerythritol, sorbitol, glycerine, and the like.

Suitable carboxylic acids include, but are not limited to, those selected from the group consisting of isophthalic acid, terephthalic acid, phthalic anhydride(acid), adipic acid, tetrachlorophthalic anhydride, tetrahydrophthalic anhydride, acid trimellitic anhydride, pyromellitic dianhydride, dimethylolpropionic acid, dodecanedioic acid, sebacic acid, azelaic acid, 1,4-cyclohexanedicarboxylic acid, 1,3-cyclohexanedicarboxylic acid, 2,6-decahydronaphthalenedicarboxylic acid, maleic anhydride, fumaric acid, succinic anhydride(acid), 2,6-naphthalenedicarboxylic acid, glutaric acid, and esters thereof.

The sulfonated waterborne alkyd resins useful in the invention preferably have a K value, defined as the total number of moles ($M_t$) of each reactant divided by the total equivalents of acid functionality ($E_a$), of about 1.0 to about 1.5, more preferably of about 1.0 to about 1.25, and an R value, defined as the total equivalents of hydroxyl functionality ($E_{OH}$) divided by the total equivalents of acid functionality ($E_a$), of about 1.0 to about 2.0, more preferably of about 1.0 to about 1.5.

The K value is a measure of a resin's molecular weight, which increases as the K value decreases to 1.00. Since higher molecular weight resins are better, K values that are closer to 1.00 are most preferred. The R value is proportional to the excess equivalents of hydroxyl functionality used in the resin synthesis. An excess of hydroxyl functionality is preferred, however this excess should not be so high as to render the resulting coating water sensitive.

The sulfomonomer of the sulfomonomer adduct is either a difunctional or a monofunctional monomer containing a $-SO_3M$ group attached to an aromatic nucleus where M is hydrogen or a metal ion such as, for example, $Na^+$, $Li^+$, $K^+$, $Ca^{2+}$, $Cu^{2+}$, $Fe^{2+}$, or $Fe^{3+}$. The sulfomonomer as a difunctional monomer component may be a dicarboxylic acid (or a derivative thereof) containing a $-SO_3M$ group where M is as defined above. Suitable examples of the aromatic nucleus to which the $-SO_3M$ group may be attached include, but are not limited to, benzene, naphthalene, anthracene, diphenyl, oxydiphenyl, sulfonyl-diphenyl, and methylenediphenyl.

Especially good results are obtained when the difunctional monomer is a sodium salt of a sulfoisophthalic acid, a sulfoterephthalic acid, a sulfophthalic acid, a 4-sulfo-naphthalene-2,7-dicarboxylic acid or a derivative thereof. In a specific embodiment, the difunctional monomer is 5-sodiosulfoisophthalic acid or a derivative such as dimethyl 5-sodiosulfoisophthalate. Other preferred difunctional monomers are lithium 5-sulfoisophthalic acid, dimethyl lithium 5-sulfoisophthalate, potassium 5-sulfoisophthalic acid, and dimethyl potassium 5-sulfoisophthalate.

Other effective difunctional monomers containing a $-SO_3M$ group attached to an aromatic nucleus include metal salts of aromatic sulfonic acids or their respective esters of the formula:

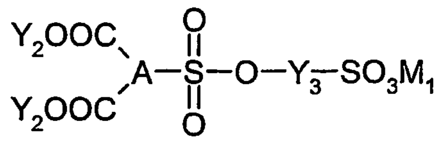

wherein A is a trivalent aromatic hydrocarbon radical, $Y_2$ is hydrogen or an alkyl group of one to four carbon atoms, $Y_3$ is a divalent aromatic hydrocarbon radical, $M_1$ is hydrogen, $Na^+$, $Li^+$, or $K^+$. Examples of preferred monomers include, but are not limited to, 4-sodiosulfophenyl-3,5-dicarbomethoxybenzenesulfonate, 4-lithiosulfophenyl-3,5-dicarbomethoxybenzenesulfonate and 6-sodiosulfo-2-naphthyl-3,5-dicarbomethoxybenzenesulfonate.

Still other effective difunctional monomers containing a $-SO_3M$ group ' attached to an aromatic nucleus include metal salts of sulfodiphenyl ether dicarboxylic acids or esters thereof of the formula below:

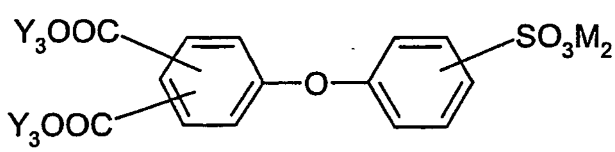

wherein $Y_3$ is hydrogen, an alkyl group of one to eight carbon atoms, or phenyl and $M_2$ is hydrogen, $K^+$, $Na^+$, or $Li^+$. Examples of preferred monomers include, but are not limited to, dimethyl 5-[4-(sodiosulfo)phenoxy]isophthalate, dimethyl 5-[4-(sodiosulfo)phenoxy]terephthalate, and 5-[4-(sodiosulfo)phenoxy]isophthalic acid. Additional examples of such monomers are disclosed in U.S. Pat. No. 3,734,874, incorporated herein by reference.

The type and amount of metal sulfonate selected for water-dispersibility can be varied to obtain useful ion-containing alkyd resins. As little as 2 mole percent based on total carboxylic acid content will impart a significant degree of water miscibility; however, at least 3 percent is preferred. Water-soluble polyesters can be formulated with as much as 20 mole percent of the metal sulfonate. However, a practical upper limit based on the amount of branch-inducing intermediate required to counteract the water sensitivity effects is 9 percent, preferably 6 percent.

Metal sulfonates that are most preferred include 5-sodiosulfoisophthalic acid, diméthyl 5-sodiosulfoisophthalate, lithium 5-sulfoisophthalic acid, dimethyl lithium 5-sulfoisophthalate, potassium 5-sulfoisophthalic acid, dimethyl potassium 5-sulfoisophthalate, 3-sodiosulfobenzoic acid and the like.

Optionally, the sulfomonomer containing at least one sulfonate group that may be reacted with a polyol to produce a polyol (e.g. a diol) sulfomonomer adduct may be a monofunctional sulfomonomer containing at least one sulfonate group that may be reacted with a polyol containing at least three hydroxyl groups. The monofunctional sulfomonomer is preferably selected from the following group of sulfomonomers:

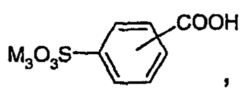 , 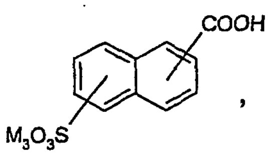 , 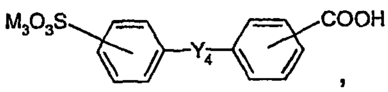 ,

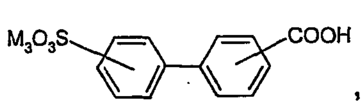 , 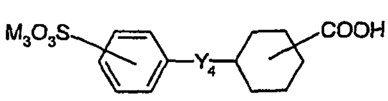 ;

where $Y_4$ is $CH_2$, $SO_2$, or O and $M_3$ is an alkaline or alkaline earth metal.

The polyol sulfomonomer adduct is prepared by reacting a difunctional sulfomonomer with a glycol, poly(ethylene glycol), or a polyol. Suitable examples of diols include those described above with the following diols being more preferred: ethylene glycol, diethylene glycol, 2,2,4-trimethyl-1,3-pentanediol, 1,4-cyclohexanedimethanol, 1,3-cyclohexanedimethanol, hydroxypivalyl hydroxypivalate, dipropylene glycol, 1,6-hexanediol, 1,10-decahydronaphthalenediol, 2,6-decahydro-naphthalenedimethanol, 1,3-butanediol, hydrogenated bisphenol A, 1,4-butanediol and neopentyl glycol.

In addition to the amount of polyol reacted with the fatty acid, fatty ester, or naturally-occurring, partially-saponified oil according to the preferred step, and in addition to the polyol used in the preparation of the sulfomonomer adduct from a monofunctional sulfomonomer, an additional amount of a polyol or other branching agent such as a polycarboxylic acid may be used to increase the molecular weight and branching of the waterborne alkyd resin. These branching agents are preferably selected from trimethylolethane, pentaerythritol, erythritol, threitol, dipentaerythritol, sorbitol, glycerine, trimellitic anhydride, pyromellitic dianhydride, dimethylolpropionic acid, and trimethylolpropane.

Latex Polymer Compositions.

The vinyl, or latex, polymers present in various embodiments, and that are subject to yellowing, are copolymers of ethylenically unsaturated monomers. Useful comonomers are simple olefins such as ethylene, alkyl acrylates, and methacrylates, where the alkyl group has 1 to 20 carbon atoms (more preferably 1 to 8 carbon atoms), vinyl acetate, acrylic acid, methacrylic acid, acrylonitrile, styrene, isobornyl methacrylate, acrylamide, hydroxyethyl acrylate and methacrylate, hydroxypropyl methacrylate and acrylate, N-vinyl pyrrolidinone, butadiene, isoprene, vinyl halides such as vinyl chloride and vinylidene chloride, alkyl maleates, alkyl fumarates, fumaric acid, maleic acid, itaconic acid, etc. It is also possible and sometimes desirable to include low levels of divinyl or polyvinyl monomers such as glycol polyacrylates, allyl methacrylate, divinyl benzene, etc. to introduce a controlled amount of gel in the latex particle.

Polymers having a molecular weight of from 1000 to over one million can be used.

Generally, the vinyl polymer is prepared as a dispersion or emulsion polymer in water by a suitable free radical initiated polymerization technique, using a free radical initiator and appropriate heating.

As an emulsifier, an anionic, nonionic, or anionic-nonionic emulsifying agent can be used. Examples of anionic emulsifiers include sodium higher alcohol sulfates, sodium alkylbenzenesulfonates, sodium dialkyl succinic acid sulfonates, and sodium alkyl-diphenyl ether disulfonates. Of these, preferable anionic emulsifiers are sodium dodecylbenzenesulfonate, sodium lauryl sulfate, and sulfate of polyoxyethylene alkyl (or alkylphenyl) ether. As examples of nonionic emulsifiers, polyoxyethylene alkylaryl ether can be given. Usually, polyoxyethylene nonylphenyl ether, polyoxyethylene octylphenyl ether, or the like is used as a nonionic emulsifier.

Furthermore, a reactive emulsifier that can copolymerize with the ethylenically unsaturated monomers can be used in the preparation of aqueous copolymer latexes of the present invention. Examples of such reactive emulsifiers are sodium styrene sulfonate, sodium allylalkyl sulfonates, alkylallyl sulfosuccinates, polyoxyethylene alkylallyl glycerine ether sulfates, polyoxyethylene alkylphenol allyglycerine ether sulfates, and the like.

A water-soluble high molecular weight compound may also be used as an emulsifier or stabilizer. Given as examples of the water-soluble high molecular compounds are polyvinyl alcohols, polyacrylates, water-soluble (meth) acrylate copolymers, salts of styrene-maleic acid copolymers, salts of styrene(meth)acrylic acid copolymers, copolymers of poly(meth)acryl amide, and copolymers of poly(meth)acryl amide. Of these, preferable water-soluble high molecular weight compounds are partially saponified polyvinyl alcohols, water-soluble (meth)acrylate copolymers, salts of carboxylated aromatic vinyl copolymer, e.g., salts of styrene-maleic acid copolymer, salts of styrene-(meth)acrylic acid copolymer; and the like.

Additional high molecular weight emulsifiers or stabilizers that are suitable in the present invention are the various water-dispersible toner polymers described herein.

As the aforementioned polymerization initiator, for example, water-soluble persulfates and hydrogen peroxide, preferably ammonium, sodium, or potassium persulfate, can be used, and these compounds may be used in combination with a reducing agent.

Given as examples of reducing agents are sodium pyrosulfite, sodium hydrogensulfite, sodium thiosulfate, erythorbic acid, L-ascorbic acid and salts thereof, sodium formaldehyde sulfoxylate, and the like.

In addition, an oil soluble polymerization initiator such as, for example, 2,2'-azobis-isobutyronitrile, 2,2'-azobis (4-methoxy-2,4-dimethylvaleronitrile), 2,2'-azobis-2,4-dimethylvaleronitrile, 1,1'-azobis- cyclohexane-1-carbonitrile, benzoyl peroxide, dibutyl peroxide, and cumene hydroperoxide, or the like, may be used dissolved in the monomer or the medium. Particular oil soluble polymerization initiators are cumen hydroperoxide, isopropylbenzene hydroperoxide, azobisisobutyronitrile, benzoyl peroxide, tert-butyl hydroperoxide, 3,5,5-trimethylhexanol peroxide, and tertbutylperoxy (2-ethylhexanoate). About 0.1 to 3 parts by weight of such a copolymerization initiator is used for 100 parts of the ethylenically unsaturated monomers.

Given as examples of the aforementioned chain transfer agents are halogenated hydrocarbons, e.g., chloroform, bromoform; mercaptans, e.g., n-dodecyl mercaptan, tertdodecyl mercaptan, n-octyl mercaptan; alkyl mercapto propionates, xanthogenic compounds, e.g., dimethylxanthogen disulfide, diisopropylxanthogen disulfide; terpenes, e.g., dipentene, terpinolene; a-methylstyrene dimers (those consisting of at least one of 2,4-diphenyl-4-methyl-1-pentene (al), 2-4-diphenyl-4-methylphenylpentene ($a_2$), and 1-1-3-trimethyl-3-phenylindane ($a_3$), and preferably those with the

ratio by weight of ($a_{1pl}$)/($a_2$) and/or ($a_3$) being 40-100/0-60); unsaturated cyclic hydrocarbons, e.g., 9,10-dihydroanthracene, 1,4-dihydronaphthalene, indene, and 1,4-cyclohexadiene; unsaturated heterocyclic compounds, e.g., xanthene and 2,5-dihydrofuran; and octyl thioglycolate, preferably a-methylstyrene dimmer, and the like. The chain transfer agent is added in an amount of approximately 0 to 5 parts by weight per 100 parts of the ethylenically unsaturated monomers.

Examples of the aforementioned chelating agents are glycine, alanine, ammonium carbonate, ethylenediamine tetraacetate, preferably ammonium carbonate. As a pH modifier, sodium carbonate, potassium carbonate, sodium bicarbonate, ammonia, preferably ammonia, can be used. The chelating agent and the pH modifier are compounded in an amount of approximately 0 to 0.1 and 0 to 3 parts by weight, respectively, per 100 parts of the ethylenically unsaturated monomers.

A small amount of a solvent; e.g., methyl ethyl ketone, acetone, trichlorotrifluoroethane, methyl isobutyl ketone, dimethyl sulfoxide, toluene, dibutyl phthalate, methylpyrrolidone, ethyl acetate, alcohols, cellosolves, and carbitols, may be used in the emulsion polymerization, as required. They are used within a limit not damaging the processability, working and environmental safety, and security of manufacturing. Alcohols and carbitols are preferable solvents. The amount of solvent used is approximately 0 to 10 parts by weight per 100 parts of the ethylenically unsaturated monomers.

The emulsion polymerizations may be carried out according to conventional methods, for example, a method in which all monomers are fed to a reaction system at one time, or a method in which after reacting a part of the remaining monomers are fed successively or separately, or a method in which each monomer is continuously fed. In any method, it is desirable to keep the rate of polymerization in the course of the reaction over 85%, or over 90%. The final polymerization conversion rate of copolymers in the polymerization reaction may be 90 to 100% by weight, or from 95 to 100% by weight.

A latex may also contain other additives known in latex compositions, and may use other emulsion polymerization or blending methodology such as disclosed in U.S. Pat. No. 5,371,148, incorporated here by reference.

In the case where the seed polymerization method is used, an advisable method is preparing seed particles of copolymers in advance by the emulsion copolymerization of monomers, and then adding a mixture of the monomers consisting of components (A)-(C) to the seed particles for the emulsion copolymerization.

A glass-transition temperature ($T_g$) of the copolymer may be varied depending on the desired application and is generally from -20 °C to about 80 °C,

An average particle diameter of the copolymer is from about 25 to about 2,000 angstroms.

Coating compositions

The coating compositions of the invention may be coated onto a substrate and cured using techniques known in the art (e.g., by spray-applying 3 to 4 mils of wet coating onto a metal panel, and heating in a 150 °C. forced air oven for 30 minutes). The substrate can be any common substrate such as paper, polyester films such as polyethylene and polypropylene, metals such as aluminum and steel, glass, urethane elastomers and primed (painted) substrates, and the like. The coating composition of the invention may be cured at room temperature (ambient cure), at elevated temperatures (thermal cure), or photochemically cured.

A coating composition of the invention may further contain coating additives. Examples of such coating additives include, but are not limited to, one or more leveling, rheology, and flow control agents such as silicones, fluorocarbons or cellulosics; extenders; reactive coalescing aids such as those described in U.S. Pat. No. 5,349,026, incorporated herein by reference; plasticizers; flatting agents; pigment wetting and dispersing agents and surfactants; ultraviolet light (UV) absorbers; hindered amine light stabilizers (HALS); phosphites, tinting pigments; colorants; defoaming and antifoaming agents; anti-settling, anti-sag and bodying agents; anti-skinning agents; anti-flooding and anti-floating agents; biocides, fungicides and mildewcides; corrosion inhibitors; thickening agents; or coalescing agents. Specific examples of such additives can be found in Raw Materials Index, published by the National Paint & Coatings Association, 1500 Rhode Island Avenue, N.W., Washington, D.C. 20005. Further examples of such additives and emulsion polymerization methodology may be found in U.S. Pat. No. 5,371,148, incorporated herein by reference.

Examples of flatting agents include, but are not limited to, synthetic silica, available from the Davison Chemical Division of W. R. Grace & Company under the SYLOID® tradename; polypropylene, available from Hercules Inc. under the HERCOFLAT® tradename; and synthetic silicate, available from J. M. Huber Corporation under the ZEOLEX® tradename.

Examples of dispersing agents and surfactants include, but are not limited to, sodium bis(tridecyl)sulfosuccinnate, sodium di(2-ethylhexyl) sulfosuccinnate, sodium dihexylsulfosuccinnate, sodium dicydohexylsulfosuccinnate, sodium diamylsulfosuccinnate, sodium diisobutylsulfosuccinnate, disodium iso-decylsulfosuccinnate, the disodium ethoxylated alcohol half ester of sulfosuccinnic acid; disodium alkylamidopolyethoxy sulfosuccinnate, tetra-sodium N-(1,2-dicarboxyethyl)-N-octadecyl sulfosuccinnamate, disodium N-octasulfosuccinnamate, sulfated ethoxylated nonylphenol, 2-amino-2-methyl-1-propanol, and the like.

Examples of viscosity, suspension, and flow control agents include, but are not limited to, polyaminoamide phosphate, high molecular weight carboxylic acid salts of polyamine amides, and alkylene amine salts of an unsaturated

fatty acid, all available from BYK Chemie U.S.A. under the ANTI TERRA® tradename. Further examples include polysiloxane copolymers, polyacrylate solution, cellulose esters, hydroxyethyl cellulose, hydrophobically-modified hydroxyethyl cellulose, hydroxypropyl cellulose, polyamide wax, polyolefin wax, carboxymethyl cellulose, ammonium polyacrylate, sodium polyacrylate, hydroxypropyl methyl cellulose, ethyl hydroxyethyl cellulose, polyethylene oxide, guar gum and the like. Other examples of thickeners include the methylene/ethylene oxide associative thickeners and water-soluble carboxylated thickeners such as, for example, UCAR POLYPHOBE® by Union Carbide.

Several proprietary antifoaming agents are commercially available and include, for example, BUBREAK® of Buckman Laboratories Inc., BYK® (of BYK Chemie, U.S.A., FOAMASTER® and NOPCO® of Henkel Corp./Coating Chemicals, DREWPLUS® of the Drew Industrial Division of Ashland Chemical Company, TRYSOL® and TROYKYD® of Troy Chemical Corporation, and SAG® of Union Carbide.

Examples of fungicides, mildewcides, and biocides include, but are not limited to, 4,4-dimethyloxazolidine, 3,4,4-trimethyloxazolidine, modified barium metaborate, potassium N-hydroxy-methyl-N-methyldithiocarbamate, 2-(thiocyano-methylthio)benzothiazole, potassium dimethyl dithiocarbamate, adamantane, N-(trichloromethylthio)phthalimide, 2,4,5,6-tetrachloro-isophthalonitrile, orthophenyl phenol, 2,4,5-trichlorophenol, dehydroacetic acid, copper naphthenate, copper octoate, organic arsenic, tributyl tin oxide, zinc naphthenate, and copper 8-quinolinate.

Examples of ultraviolet light absorbers are single compounds or mixtures of compounds that absorb light in the range of 250-400 nm with a minimal absorbance between 400 and 700 nm. Preferred examples are triazines, cyanoacrylates, benzotriazoles, naphthalenes, benzophenones, and benzoxazin-4-ones. More preferred are commercially available UV-absorbers such as: Cyasorb UV-9 (Cytec Industries, CAS# 131-57-7), Cyasorb UV-24 (Cytec Industries, CAS# 131-53-3), Cyasorb UV-531 (Cytec Industries, CAS# 1843-05-6), Cyasorb UV-2337 (Cytec Industries, CAS# 25973-55-1), Cyasorb UV-5411 (Cytec Industries, CAS# 3147-75-9), Cyasorb UV-5365 (Cytec Industries, CAS# 2440-22-4), Cyasorb UV-1164 (Cytec Industries, CAS# 2725-22-6), Cyasorb UV-3638 (Cytec Industries, CAS# 18600-59-4), Tinuvin 213 (Ciba Specialty Chemicals, CAS# 104810-47-1), Tinuvin 234 (Ciba Specialty Chemicals, CAS# 70321-86-7), Tinuvin 320 (Ciba Specialty Chemicals, CAS# 3846-71-7), Tinuvin 326 (Ciba Specialty Chemicals, CAS# 3896-11-5), Tinuvin 327 (Ciba Specialty Chemicals, CAS# 3864-99-1), Tinuvin 328 (Ciba Specialty Chemicals, CAS# 25973-55-1), Tinuvin 329 (Ciba Specialty Chemicals, CAS# 3147-75-9), Tinuvin 350 (Ciba Specialty Chemicals, CAS# 36437-37-3), Tinuvin 360 (Ciba Specialty Chemicals, CAS# 103597-45-1), Tinuvin 571 (Ciba Specialty Chemicals, CAS# 23328-53-2) and Tinuvin 1577 (Ciba Specialty Chemicals, CAS# 147315-50-2). Additional suitable UV absorbers are listed in the Plastic Additives Handbook 5th Edition (Hanser Gardner Publications, Inc., Cincinnati, OH, USA, 2001). It is obvious that identical molecules sold under different trade names are covered by this invention. It is obvious that combinations of UV absorbers can be used.

Examples of hindered amine light stabilizers (HALS) that may be suitable include, but are not limited to, Cyasorb UV-3346 (Cytec Industries, CAS# 90751-07-8), Cyasorb UV-3529 (Cytec Industries, CAS# 193098-40-7), Cyasorb UV-3641 (Cytec Industries, CAS# 106917-30-0), Cyasorb UV-3581 (Cytec Industries, CAS# 79720-19-7), Cyasorb UV-3853 (Cytec Industries, CAS# 167078-06-0), Cyasorb UV-3853S (Cytec Industries, CAS# 24860-22-8), Tinuvin 622 (Ciba Specialty Chemicals, CAS# 65447-77-0), Tinuvin 770 (Ciba Specialty Chemicals, CAS# 52829-07-9), Tinuvin 144 (Ciba Specialty Chemicals, CAS# 63843-89-0), Tinuvin 123 (Ciba Specialty Chemicals, CAS# 129757-67-1), Chimassorb 944 (Ciba Specialty Chemicals, CAS# 71878-19-8), Chimassorb 119 (Ciba Specialty Chemicals, CAS# 106990-43-6), Chimassorb 2020 (Ciba Specialty Chemicals, CAS# 192268-64-7), Lowilite 76 (Great Lakes Chemical Corp., CAS# 41556-26-7), Lowilite 62 (Great Lakes Chemical Corp., CAS# 65447-77-0), Lowilite 94 (Great Lakes Chemical Corp., CAS# 71878-19-8), Uvasil 299LM (Great Lakes Chemical Corp., CAS# 182635-99-0), and Uvasil 299HM (Great Lakes Chemical Corp., CAS# 182635-99-0), Dastib 1082 (Vocht a.s., CAS# 131290-28-3), Uvinul 4049H (BASF Corp., CAS# 109423-00-9), Uvinul 4050H (BASF Corp., CAS# 124172-53-8), Uvinul 5050H (BASF Corp., CAS# 199237-39-3), Mark LA 57 (Asahi Denka Co., Ltd., CAS# 64022-61-3), Mark LA 52 (Asahi Denka Co., Ltd., CAS# 91788-83-9), Mark LA 62 (Asahi Denka Co., Ltd., CAS# 107119-91-5), Mark LA 67 (Asahi Denka Co., Ltd., CAS# 100631-43-4), Mark LA 63 (Asahi Denka Co., Ltd. Co., Ltd. Co., CAS# 115055-30-6), Mark LA 68 (Asahi Denka Co., Ltd., CAS# 100631-44-5), Hostavin N 20 (Clariant Corp., CAS# 95078-42-5), Hostavin N 24 (Clariant Corp., CAS# 85099-51-1, CAS# 85099-50-9), Hostavin N 30 (Clariant Corp., CAS# 78276-66-1), Diacetam-5 (GTPZAB Gigiena Truda, USSR, CAS# 76505-58-3), Uvasorb-HA 88 (3V Sigma, CAS# 136504-96-6), Goodrite UV-3034 (BF Goodrich Chemical Co., CAS# 71029-16-8), Goodrite UV-3150 (BF Goodrich Chemical Co., CAS# 96204-36-3), Goodrite UV-3159 (BF Goodrich Chemical Co., CAS# 130277-45-1), Sanduvor 3050 (Clariant Corp., CAS# 85099-51-0), Sanduvor PR-31 (Clariant Corp., CAS# 147783-69-5), UV Check AM806 (Ferro Corp., CAS# 154636-12-1), Sumisorb TM-061 (Sumitomo Chemical Company, CAS# 84214-94-8), Sumisorb LS-060 (Sumitomo Chemical Company, CAS# 99473-08-2), Uvasil 299 LM (Great Lakes Chemical Corp., CAS# 164648-93-5), Uvasil 299 HM (Great Lakes Chemical Corp., CAS# 164648-93-5), Nylostab S-EED (Clariant Corp., CAS# 42774-15-2). Additional hindered amine light stabilizer may be listed in the Plastic Additives Handbook 5th Edition (Hanser Gardner Publications, Inc., Cincinnati, OH, USA, 2001).

Examples of phosphites include, but are not limited to, compounds sold under the following brand names: Irgafos TNPP (Ciba Specialty Chemicals, CAS# 26523-78-4), Irgafos 168 (Ciba Specialty Chemicals, CAS# 31570-04-4),

Ultranox 626 (GE Specialty Chemicals, CAS# 26741-53-7), Mark PEP 36 (Asahi Denka Co., Ltd., CAS#80693-00-1), Mark HP-10 (Asahi Denka Co., Ltd., CAS# 140221-14-3), Irgafos P-EPQ (Ciba Specialty Chemicals, CAS# 38613-77-3), Sandostab P-EPQ (Clariant Corp., CAS# 119345-01-6), Ethanox 398 (Albemarle Corp., CAS# 118337-09-0), Weston 618 (GE Specialty Chemicals, CAS# 3806-34-6), Irgafos 12 (Ciba Specialty Chemicals, CAS# 80410-33-9), Irgafos 38 (Ciba Specialty Chemicals, CAS# 145650-60-8), Ultranox 641 (GE Specialty Chemicals, CAS# 161717-32-4), Doverphos S-9228 (Dover Chemical Corp. CAS# 154862-43-8) and the like.

Examples of solvents and coalescing agents are well known and include, but are not limited to, ethanol, n-propanol, isopropanol, n-butanol, sec-butanol, isobutanol, ethylene glycol monobutyl ether, propylene glycol n-butyl ether, propylene glycol methyl ether, propylene glycol monopropyl ether, dipropylene glycol methyl ether, diethylene glycol monobutyl ether, 2,2,4-trimethyl-1,3-pentanediol mono-isobutyrate, ethylene glycol mono-octyl ether, diacetone alcohol, and the like. Such solvents and coalescing aids may also include reactive solvents and coalescing aids such as diallyl phthalate, SANTOLINK XI-100® (polyglycidyl allyl ether from Monsanto), and others as described in U.S. Pat. Nos. 5,349,026 and 5,371,148, incorporated herein by reference.

Thus, one embodiment of the present invention provides a polymer composition having copolymerized therein, in an amount sufficient to improve the apparent whiteness of a coating composition containing the polymer composition, at least one blue 1,4-bis(2,6-dialkylanilino)anthraquinone compound of Formula (I) plus at least one red or violet anthraquinone or anthrapyridone compound of formulae (II)-(X) or a single dye compound of formula XI, above, or XI optionally mixed with red or violet compounds of formulae II-X. In this regard, the dyes used in either the two component toner system or one component toner system will not be present in an amount sufficient to impart a substantial amount of color to the polymer.

The single-component or two-component toner system of the present invention can be added before polymerization or during polymerization of a toner polymer. Accordingly, as a further aspect of the present invention, there is provided a premix composition comprising a blend of at least one blue 1,4-bis(2,6-dialkylanilino)anthraquinone compound of formula (I), along with at least one red or violet anthraquinone or anthrapyridone compound of formulae (II)-(X) above, or a premix with reddish-blue anthrapyridone XI combined with at least one red or violet compound of formulae II-X. The premix composition may be a neat blend of the red or violet and the blue compounds, or the composition may be pre-dissolved in one of the polyester's monomeric species, e.g., ethylene glycol.

The total weight of toner polymer added to the coating may depend, of course, on the amount of yellow color that is to be toned and the weight percent of the dye that is copolymerized into the toner polymer. Generally, the toner polymer is added in amounts such that a maximum concentration of about 350 ppmw (parts per million by weight) of total toner dyes that were copolymerized into the toner polymer is delivered to the coating. More preferred are coating compositions that contain an amount of toner polymer such that about 10-90 ppmw of blue component (I) in combination with about 10-100 ppmw of red or violet components of formulae (II-X) or 10-100 ppmw of reddish-blue component XI in combination with about 0-75 ppmw of red or violet components of formulae (II-X) is delivered to the coating. The present invention is not intended for applications such as inks or other thin, intensely colored coatings.

An embodiment of the present invention is an alkyd resin composition having copolymerized therein at least one of the toner dyes disclosed herein.

Another embodiment of the present invention is a coating composition that contains at least one of the toner polymer compositions disclosed herein.

Another embodiment of the present invention is a coating composition that contains at least one latex polymer and at least one of the water-dispersible toner polymer compositions disclosed herein.

Another embodiment of the present invention is a paint formulation that contains at least one of the water-dispersible toner polymer compositions disclosed herein.

Another embodiment of the present invention is a paint formulation that contains at least one latex polymer and at least one of the water-dispersible toner polymer compositions disclosed herein.

Another embodiment of the present invention is a process to improve the apparent whiteness of a coating composition that contains water or polar solvents such as methanol, ethanol, or the like, by adding at least one of the water-dispersible toner polymer compositions disclosed herein.

Another embodiment of the present invention is a process to improve the apparent whiteness of a coating composition that contains at least one latex polymer and at least one water-dispersible toner polymer disclosed herein. In one embodiment, the water-dispersible toner polymer composition can be added as a surfactant during polymerization of the latex polymer. In another embodiment, the water-dispersible toner polymer composition(s) is added to a water-containing coating formulation, such as a paint, that contains a latex polymer. In yet another embodiment, the toner dyes disclosed herein are polymerized into the water-dispersible polyester at a level of up to about 30,000 ppmw (parts per million by weight) thereby serving as a concentrate to be added to coating formulations. In general, the concentrate would be added to a coating in an amount sufficient to deliver up to about 300 ppmw of the toner dye.

In another embodiment, the blue anthraquinone compound corresponds to structure (I) above, wherein R is hydrogen; $R_1$ and $R_2$ are independently selected from methyl and ethyl; $R_3$ is hydrogen, methyl, or bromo; $R_4$ is hydrogen,

$C_1$-$C_4$-alkyl or aryl; $R_5$ is selected from the group consisting of $C_1$-$C_6$-alkylene, $C_2$-$C_4$-alkylene[-O- $C_2$-$C_4$-alkylene]$_{1-2}$, $-CH_2C_6H_{10}CH_2-$, arylene, or $-CH_2$-arylene- and the red component corresponds to formula (V), wherein $R_7$ is $C_1$-$C_6$-alkoxy and $R_4$ and $R_5$ are as defined above for the preferred blue component (I).

In another embodiment of the present invention, the blue compound of formula (I) is

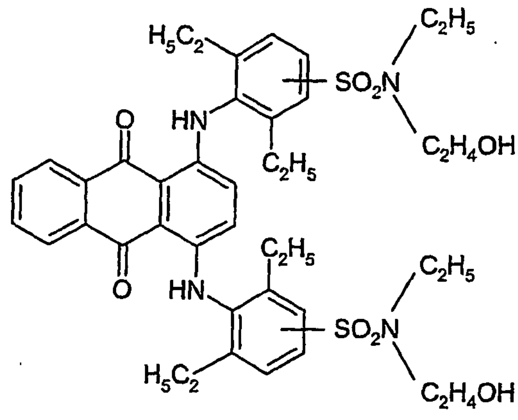

(XII)

and the red or violet compound of formula (V) is

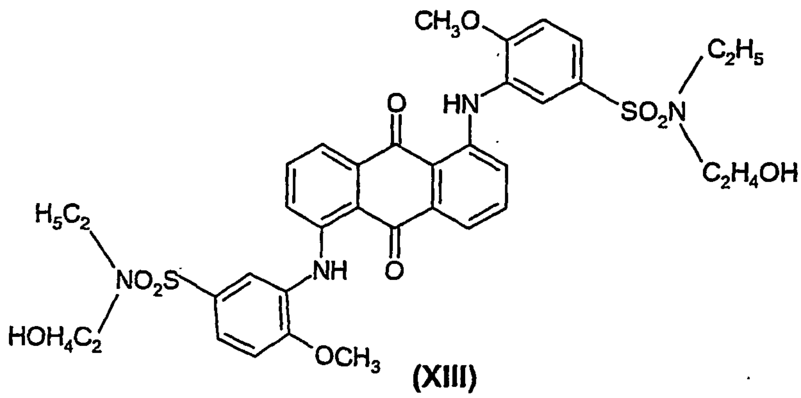

(XIII)

and the reddish-blue compound of formula (XI) is

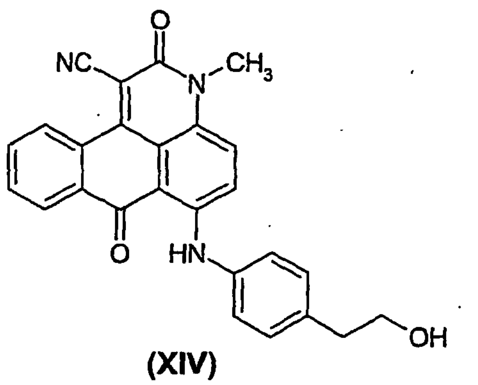

(XIV)

The blue anthraquinones of formula (I) can be prepared, in general, by reaction of leucoquinizarin (1,4,9,10-tetrahydroxyanthracene) compounds with an excess aromatic amines, preferably in the presence of acid catalysts such

as boric acid, as described in U.S. Pat. No. 3,918,976, incorporated herein by reference, and as follows:

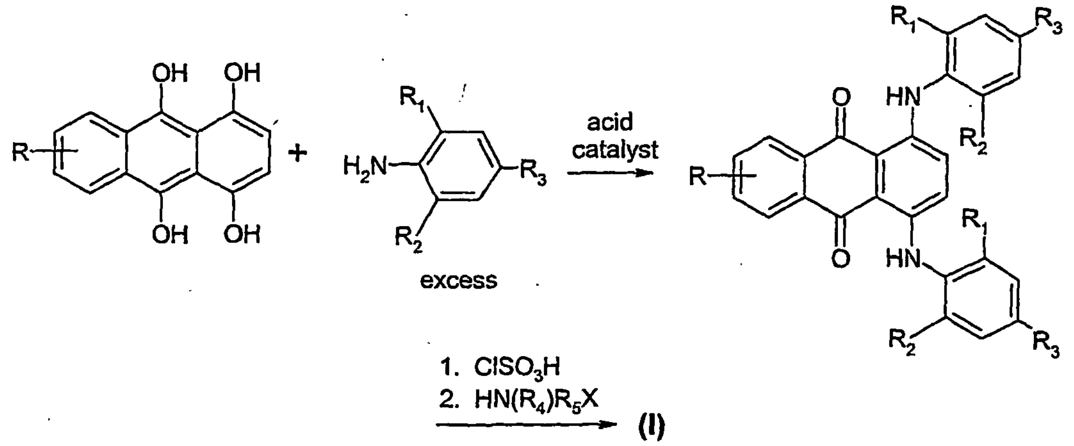


The 1,4-bis(2,6-dialkylanilino)anthraquinone compounds thus produced are readily functionalized, if needed, by first chlorosulfonating with chlorosulfonic acid to produce di-sulfonyl chlorides which can be reacted with amines containing polyester reactive groups, the general method being disclosed in U.S. Pat. No. 2,731,476, incorporated herein by reference.

Typical amines corresponding to formula $HN(R_4)R_5X$ include 2-aminoethanol, 2,2-iminodiethanol, 1-amino-2,3-propanediol, 2-methylaminoethanol, 2-ethylaminoethanol, 2-anilinoethanol, methyl anthranilate, methyl *m*-amino benzoate, *p*-aminobenzoic acid, m-aminophenol, 6-aminohexanoic acid, .beta.-alanine, glycine ethyl ester, 2-(p-aminophenyl)ethanol, 2-(p-aminophenoxy)ethanol 4-aminomethylcyclohexane methanol and 3-amino-2,2-dimethyl-1-propanol.

Red or violet compounds (II) can be prepared by reacting 1,5-dichloroanthraquinone and/or 1,8-dichloro-anthraquinone or mixtures thereof with *o*-, *m*- and *p*-aminobenzoic acids (and esters thereof) by a modified Ullmann reaction involving nitrogen arylation of the anilines in the presence of copper catalysts (see U.S. Pat. No. 4,359,580, incorporated herein by reference).

Red or violet compounds of formula (III) can be prepared as described in U.S. Pat. No. 4,420,581, and compounds of formula (VI) can be prepared as in U.S. Pat. No. 4,999,418, both of which are incorporated herein by reference.

Red or violet anthraquinone compounds of formula (IV) can be prepared by reacting 1,5-dichtoroanthraquinone and 1,8-dichloroanthraquinone or mixtures thereof with substituted benzyl amines by procedures similar to those used in preparing compounds of formulae (III) and (VI).

Red or violet anthrapyridone compounds (VII) can be prepared as disclosed in U.S. Pat. No. 4,790,581, incorporated herein by reference; procedures useful in preparing red or violet anthrapyridone compounds (VIII) and (IX) are disclosed in U.S. Pat. Nos. 4,745,174 and 4,470,581, incorporated herein by reference.

Reddish-blue anthrapyridone compounds of Formulae XI are prepared as described in U.S. Pat. Nos. 4,745,174 and 5,340,910.

This invention can be further illustrated by the following examples of preferred embodiments, although it will be understood that these examples are included merely for purposes of illustration and are not intended to limit the scope of the invention unless otherwise specifically indicated.

**EXAMPLES**

Examples 1-4 (Preparation of water-dispersible alkyd resins).

Step 1: An adduct of neopentyl glycol (NPG) and 5-sodiosulfoisophthalic acid (SSIPA) was first prepared by reacting NPG (2483.5 g, 23.88 mol); SSIPA (93.3%) (1608.5 g, 5.6 mol); distilled water (276.0 g); and the catalyst, FASCAT 4100 (3.3 g, Atofina Chemicals) in a three-neck, round bottom flask equipped with a mechanical stirrer, a steam-jacketed partial condenser, a Dean-Stark trap, a nitrogen inlet, and a water condenser. The reaction temperature was gradually increased from 130°C to 190°C in a period of five hours and the condensate (water) collected in a Dean-Stark trap. The reaction was allowed to continue until an acid number of 3 was obtained. A portion of the resultant product was used in the following step.

Step 2: Into a three-neck, round-bottom flask (3L) equipped with the same configuration as above were charged

the NPG/SSIPA adduct (303.3 g); trimethylol propane (TMP) (456.0 g); isophthalic acid (594.0 g); PAMOLYN 200 (684.0 g, tall oil fatty acid, Eastman Chemical Company, Kingsport, TN); the toner dyes and levels as reported in Table 1, for Examples 2, 3 and 4, respectively; and FASCAT 4100 (1.8 g, Atofina Chemicals). (Example 1 was provided as a control and contained no toner dye.) The reaction temperature was gradually increased to 220°C over one hour. The reaction was allowed to continue for about three more hours until an acid number of 8 was obtained. The resulting resin was allowed to cool to a temperature of 140°C. Propylene glycol propyl ether (PnP) (615.0 g) was added and the product was held at 90°C for 90 minutes and allowed to cool to room temperature.

The finished product was fairly free flowing at room temperature. There were no signs of any color separation in any of the products after 6 months.

Table 1. Dye type and amount for each of the examples

| Example | Dye Structure | mass |
|---|---|---|
| 1 | N/A | 0 |
| 2 | **XIII** | 2.0 g |
| 3 | **XII** | 2.0 g |
| 4 | **XII, XIII** | 10.0 g each |
| 5 | **XIII** | 13.60 g (5 wt%) |
| 6 | **XII** | 13.60 g (5 wt%) |
| 7 | **XIII** | 1.36 g (0.5 wt%) |
| 8 | **XII** | 1.36 g (0.5 wt%) |

Examples 5-8 (Water-dispersible polyesters with co-polymerized toner dyes).

Water-dispersible polymer (1mole) was prepared in the laboratory by the following technique. A polymer was prepared, with acid components consisting of 82 mole % isophthalic acid and 18 mole % 5-sodiosulfoisophthalic acid, a mixture of diol components consisting of 54 mole % diethylene glycol and 46 mole % 1,4-cyclohexanedimethanol (cis/trans ratio of about 35/65). The following were weighed directly into a 500 ml roundbottom flask or were weighed and transferred:

136.1 g (0.82 mole) isophthalic acid
53.28 g (0.18 mole) 5-sodiosulfoisophthalic acid
114.48 g (1.08 mole) diethylene glycol
72.86 g (0.51 mole) 1,4-cyclohexanedimethanol
1.48 g (0.018 mole) anhydrous sodium acetate

Toner dye and mass listed in Table 1 (Examples 5-8, respectively) 100 ppmw titanium tetraisopropoxide catalyst

A stainless steel stirrer shaft and blade were used to stir the system to facilitate reaction and removal of volatiles. A Belmont metal bath placed in a heating mantle connected to a temperature controller was used as the heating medium. The system was purged with nitrogen and kept under an $N_2$ blanket during the run. Dry ice traps were used to collect volatiles. An oil-based vacuum pump was used to place the system under reduced pressure for molecular weight buildup after the esterification stage.

The bath was heated to 200°C and the flask and contents were inserted in the bath and stirred for 60 minutes. The temperature was increased to 210 °C and held for 60 minutes. The temperature was then increased to 275 °C and held for 20 minutes. The system was placed under vacuum and held at 0.2 mm torr for 90 minutes. The system was returned to the nitrogen purge, the polymer was cooled and removed from the flask and ground. The polymer had an I.V. (inherent viscosity in 60/40 phenol/tetrachloroethane) of 0.327. Analysis by nuclear magnetic resonance spectroscopy (NMR) showed a composition of 17 mole % 5-sodiosulfoisophthalic acid, 54.3 mole % isophthalic acid, and 45.5 mole % 1,4-cyclohexanedimethanol and 53.5 mole % diethylene glycol. The polymer had a second cycle glass transition temperature of 60 °C by differential scanning calorimetry (DSC).

A portion (30.0 g) of the toner dye/sulfo-containing water-dispersible polymer was added to distilled water (70.0 g) at about 80 °C. Good dispersion of the polymer was achieved by stirring and heating to 100°C. The final dispersion showed no signs of particle settling. This dispersion was then used as an additive for toning resins, as further discussed below.

Example 9 (Preparation of a waterborne latex containing 28% acrylonitrile).

To a 4 L jacketed reaction kettle equipped with a condenser, nitrogen purge, and stirrer, 1840 g of water and 12.0 g of 30% Disponil FES 32 (surfactant, Henkel Technologies), were added. A waterborne seed latex having an average particle size of 40 nm (201.0 g) was then added to the reactor along with EDTA 1% solution (1.0 g) and iron II sulfate 1% solution (1.0 g). The content of the reactor was heated to 55°C. In a separate 2000 ml flask, a monomer mix of 666.0 g of styrene, 540.0 g of 2-ethylhexyl acrylate, 504.0 g of acrylonitrile, and 90.0 g of methacrylic acid was prepared. In a separate 250 ml flask, a surfactant mixture of 30% Disponil FES 32 (48.0 g) and distilled water (72.0g) was prepared. The monomer mix was then pumped into the heated reactor over a 3-hour period. As the monomer feed was started, 7.0 g t-butyl hydroperoxide (70%) in 153 g of distilled water and (1.0 g) of sodium carbonate, EDTA 1% solution (1.0 g) and iron II sulfate 1% solution (1.0 g), and isoascorbic acid 6.0 g dissolved in 150.0 g of distilled water were fed into the reaction over a 6 hour period. The surfactant/water mix was pumped into the reaction over a 2-hour period beginning with the monomer feed. After all the initiator was added, the reaction was held at 55°C for an additional one half hour at which point the reactor was cooled to 30°C.

The resulting emulsion was filtered through a 100-mesh screen. The emulsion contained 43.9% solids and the particle size was 131 nm as measured by dynamic light scattering. Viscosity was 145 cp and the Tg was 70.2°C.

Examples 10-16. Waterborne latexes toned with water-dispersed alkyd resins having toner dyes copolymerized therein.

Table 2. (Toned Waterborne Latexes)

| Example | Water dispersible alkyd resin | Description | Red toner dye (XIII) ppm | Blue toner dye (XII) ppm | Lab b* value |
|---|---|---|---|---|---|
| 10 | - | White Leneta Chart | - | - | 2.8 |
| 11 | Example 1 | Control | - | - | 9.9 |
| 12 | Examples 1,3 | Blue Toner | - | 20 | 5.2 |
| 13 | Examples 1,2,3 | Blue/Red Toner Blend | 10 | 50 | 5.9 |
| 14 | Examples 1,2,3 | Blue/Red Toner Blend | 25 | 13 | 2.9 |
| 15 | Examples 1,2,3 | Blue/Red Toner Blend | 20 | 20 | 5.3 |
| 16 | Examples 1,2,3 | Blue/Red Toner Blend | 60 | 60 | 2.7 |

The color of the sample was determined in a conventional manner using a HunterLab UltraScan Colorimeter manufactured by Hunter Associates Laboratory, Inc., Reston, Virginia. The instrument is operated using HunterLab Universal Software (version 3.8). Calibration and operation of the instrument is according to the HunterLab User Manual, incorporated herein by reference, and is largely directed by the Universal Software. To reproduce the results on any colorimeter, run the instrument according to its instructions and use the following testing parameters: D65 Light Source (daylight, 6500°K color temperature), Reflectance Mode, Large Area View, Specular Included, CIE 10° Observer, Outputs are CIE L*, a*, b*. An increase in the positive b* value indicates yellowness, while a decrease in the numerical value of b* indicates a reduction in yellowness. Color measurement and practice are discussed in greater detail in Anni Berger-Schunn in *Practical Color Measurement,* Wiley, NY pages 39-56 and 91-98 (1994).

The CIE L*, a*, b* color measurement method was used to determine the color of the latex formulations of Examples 12 - 16 in Table 2 as compared to the latex control (Example 10) and the white Leneta chart (Example 10). The latex resins of Examples 12-16 were prepared by blending the water-dispersible polymer from Examples 1, 2, or 3, as indicated, with a non-toner-containing latex resin (prepared according to example 9) to provide an amount of toner dye sufficient to reduce the b* color value (Table 2). Films were prepared from the toner-containing latex resins, and were drawn down on a white Leneta chart to about a 1 mil thickness (dry). The films were baked to dryness at 60 °C for 90 minutes. After cooling, the b* color was measured by standard procedures.

It is clear from the data in Table 2 that the b* color (yellowness) was reduced in the inventive examples containing both a latex and the water-dispersed resins having toner dyes (XII and XIII) copolymerized therein, thereby improving

the apparent whiteness of the latexes. The data also show that the b* color of the latex could be reduced, according to the invention, to less than the b* value for the uncoated substrate.

Examples 17-19. Acrylonitrile-containing latexes toned with water-dispersed polyester resins having toner dyes polymerized therein.

Table 3 (Acrylonitrife-containg Latex)

| Example | Water Dispersible Polyester Resin | Description | Red toner dye (XIII) ppm | Blue toner dye (XII) ppm | Lab b* value |
|---|---|---|---|---|---|
| 10 | | White Leneta Chart | - | - | 2.8 |
| 17 | Example 9 | Control | - | - | 5.3 |
| 18 | Examples 5,6,9 | Blue/Red Toner Blend | 30 | 30 | 2.8 |
| 19 | Examples 5,6,9 | Blue/Red Toner Blend | 60 | 60 | 1.1 |

The samples for Examples 18 and 19 (Table 3) were prepared by blending the water-dispersible polyester resins of Examples 5 and 6 (Table 3) with the resin of Example 9 having 28% acrylonitrile co-polymerized in the resin, to achieve the approximate desired levels of toner dye. When the appropriate levels of toner dye were added, clear films were drawn down on white Leneta chart at about 1 mil thick (dry). These films were then baked at 60 °C for 90 minutes. After cooling, the yellowness of each film was measured and recorded as a b* value. It is clear from the data in Table 3 that the b* color was reduced in the examples containing toner dye, thereby improving the apparent whiteness, by adding the water-dispersible polymer compositions that contained co-polymerizable toner dyes (XII and XIII). The data also show that the b* color of the latex could be reduced to a value less than that of the uncoated substrate (see Example 18). Addition of even more toner dye-containing water-dispersible polymer led to a coating that had a b* value lower than the uncoated Leneta chart substrate (see Example 19).

Example 20 (Preparation of a latex formulation).

To a 2 L jacketed reaction kettle equipped with a condenser, nitrogen purge, and stirrer, 202.3 g of water and 7.1 g of 18% Hitenol BC-20 (a polymerizable surfactant manufactured by DKS International), were added. The contents of the reactor were heated to 85°C. In a 2000 ml flask, a monomer/surfactant pre-emulsion of 84.5 g of methyl methacrylate, 305.9 of styrene, 17.0 g of methacrylic acid, 127.4 g of 2-acetoacetoxyethyl methacrylate, 314.4 g of butyl acrylate, 0.4 g of 2-hydroxyethyl methacrylate, 3.4 g of iso-octylmercaptopropionate, 1.7 g of ammonium carbonate, 500.3 g of water, and 75.5 g of Hitenol BC-20 (18%) was prepared with rapid stirring. The resulting pre-emulsion was stable. A portion of the pre-emulsion mix (57.2 g) was added to the heated reactor. After allowing the contents of the reactor to re-equilibrate, 1.27 g of ammonium persulfate dissolved in 18.4 g of water was added to the reactor. The reaction was allowed to stir at temperature for 15 minutes. The remaining pre-emulsion mix was fed into the reactor over a period of 250 minutes. During the same time period, a solution of 2.6 g of ammonium persulfate and 1.7 g of ammonium carbonate dissolved in 55.1 g of distilled water was fed into the reactor. After all the monomer was added, the reaction was held at 85°C for an additional one-half hour at which point the reactor was cooled to 65°C. Additional feeds consisting of 3.6 g of t-butyl hydroperoxide (70%) in 18.4 g of distilled water and 2.6 g of sodium formaldehyde sulfoxylate dissolved in 18.4 g of distilled water were fed into the reaction over a 15-minute period. The reaction mixture was allowed to cool to room temperature with stirring. Ammonium hydroxide (36.4 g of 28% aqueous solution) was then stirred into the reaction mixture. Proxel GXL (1.7 g, a biocide supplied by Avecia Inc.) was added, with stirring, followed by the addition of 2.0 weight %, based upon the total weight of the reaction mixture, of polyethylene imine.

The resulting emulsion was filtered through a 100-mesh screen. The emulsion contained 48.9% solids and the particle size was 129 nm as measured by dynamic light scattering. The final emulsion was a uniform light yellow color with no signs of particle settling.

Examples 21-33 Water-dispersible polyesters with copolymerized toner dyes in paint formulations.

The procedure described herein was used to the prepare the paint formulations listed as examples in Table 4.

The following materials were ground together: water (44.1 g), 28% $NH_4OH$ (0.6 g), Surfynol CT131 (4.5 g, supplied by Air Products and Chemicals, Inc.), Surfynol 104DPM (1.2 g, supplied by Air Products and Chemicals, Inc.), Surfynol DF210 (0.35 g, supplied by Air Products and Chemicals, Inc.), BYK-025 (0.90 g, supplied by BYK Chemie), Ti-706 (148.5 g), 20% Acrysol QR-708 (0.14 g, supplied by Rohm and Haas Company). The ground material (105.8 g) was mixed with the following materials: the latex of Example 20 (240.6 g), 28% NH4OH (0.60 g), 15% sodium nitrite (3.1g), BYK-025 (0.80 g), dipropylene glycol n-butyl ether (DPnB/Texanol, Eastman) (14.0 /4.67g), 20% Acrysol QR-708 (1.5 g), water (8.0 g), and the water-dispersible polyester with co-polymerized toner dyes listed in Table 4. The paints were drawn down on aluminum substrates so as to achieve a final film thickness of approximately 1 mil. The samples were allowed to air dry for 25 minutes and were then baked in a forced air oven at 300 °F for an additional 25 minutes. The samples were then checked for total yellowness, which is recorded as the "b*" value (Table 4). The yellowness increases with higher "b*" values.

Table 4. (Water-dispersible polyesters with co-polymerized toner dyes in paint formulations)

| Example | Water Dispersible Polyester Resin | Red toner dye (XIII) ppm | Blue toner dye (XII) ppm | Lab b* value |
|---|---|---|---|---|
| 21 | none | 0 | 0 | 4.7 |
| 22 | Example 5,6 | 100 | 180 | -2.2 |
| 23 | Example 5,6 | 60 | 30 | 1.44 |
| 24 | Example 5,6 | 20 | 40 | 2.2 |
| 25 | Example 5,6 | 30 | 60 | 1.0 |
| 26 | Example 5,6 | 120 | 120 | -2.3 |
| 27 | Example 5,6 | 70 | 70 | 0.5 |
| 28 | Example 5,6 | 20 | 30 | 2.34 |
| 29 | Example 5,6 | 90 | 75 | -0.1 |
| 30 | Example 5,6 | 150 | 150 | -2.3 |
| 31 | Example 5,6 | 100 | 150 | -1.85 |
| 32 | Example 5,6 | 150 | 100 | -1.6 |
| 33 | Example 5,6 | 100 | 200 | -2.7 |

It is clear from the data in Table 4 that the water-dispersible polymers that contained co-polymerizable toner dyes were effective at improving the apparent whiteness of latex paint formulations. The loading of red and blue toner dye-containing water-dispersible polymer was varied to reduce the b* color value to approximately 0 (Example 29). Negative b* color values (slightly blue) were obtained by further addition of the water-dispersible polymers that contained co-polymerizable toner dyes (Examples 22, 26, 30, 31, 32 and 33).

The b* color data in Table 5 was obtained by measuring the b* color of painted aluminum panels that were exposed to UV light in a QUV device.

Each panel was painted using one of the latex paint formulations disclosed in Table 4 (Examples 21-33). The paints were drawn down on aluminum substrates so as to achieve a final film thickness of approximately 1 mil. The samples were allowed to air dry for 1 week and the yellowness was recorded. The panels were then placed in a QUV chamber. The b* color of each sample was measured and recorded after 550 h and 730 h of exposure.

Table 5. QUV Exposure of the Paint Formulations of Table 4

| Example | b* color at 550 h exposure in a QUV | b* color at 730 h exposure in a QUV | Change in b*[1] |
|---|---|---|---|
| 21 | 3.6 | 4.1 | 0.5 |
| 22 | -0.7 | -0.6 | 0.1 |
| 23 | 1.5 | 1.4 | 0.1 |
| 24 | 2.4 | 2.2 | 0.2 |
| 25 | 1.4 | 1.5 | 0.1 |

(continued)

| Example | b* color at 550 h exposure in a QUV | b* color at 730 h exposure in a QUV | Change in b*[1] |
|---|---|---|---|
| 26 | -0.9 | -1.2 | 0.3 |
| 27 | 0.8 | 0.6 | 0.2 |
| 28 | 2.2 | 1.9 | 0.3 |
| 29 | 0.7 | 0.6 | 0.1 |
| 30 | -1.0 | -0.8 | 0.2 |
| 31 | -0.7 | -0.8 | 0.1 |
| 32 | -0.6 | -0.5 | 0.1 |
| 33 | -1.2 | -1.1 | 0.1 |
| 1. Change in b* = abs[abs(final b* value) - abs(initial b* value)] | | | |

The data in Table 5 show that latex paint formulations that contained water-dispersible polyesters with co-polymerized toner dyes were much less yellow (lower b* value) than a sample that did not contain toner polymer (see Example 21 - no toner polymer added). It was also surprisingly discovered that paint formulations that contained water-dispersible polyesters with co-polymerized toner dyes underwent less of a color change between 550 h of exposure and 730 h of exposure. It was surprising to discover the reduction in yellowing and improvement in apparent whiteness that was obtained by using such very low levels of co-polymerizable toner dyes upon advanced exposure in a QUV device.

Example 34. Preparation of a Universal Alkyd Containing 1000 ppm of Dye XIV.

Step 1. A neopentyl glycol (NPG) / 5-sodiosulfoisophthalic acid (SIP) adduct was prepared by reacting neopentyl glycol (827.00 g, 7.95 mol), 5-sodiosulfoisophthalic acid (536.00 g, 2.00 mol), water (91.90 g), and FASCAT 4100 (1.10 g-acid catalyst) in a three-neck, round-bottom flask equipped with a mechanical stirrer, a steam-jacketed partial condenser, a Dean-Stark trap, a nitrogen inlet, and a water condenser. The reaction temperature was gradually increased from 110-150 °C in a 45-min period and the distillate collected in the Dean-Stark trap. The reaction was allowed to continue at 150-180 °C for 3 hr, and at 190°C for 4.5 hr, until an acid number of 3.0 mg KOH/g was obtained. The reaction mixture was then allowed to cool to 80°C and water added to give an NPG/SIP adduct having 90% solids. A portion of the resultant product was used in the following step.

Step 2. In a separate reactor equipped with the same configuration as above were charged pentaerythritol (PE) (42.86 g, 0.32 mol), diethylene glycol (DEG) (49.36 g, 0.47 mol), the above NPG/SIP adduct (90%, 164.00 g), adipic acid (AD) (85.52 g, 0.59 mol), PAMOLYN 200 (a high purity grade of linoleic acid derived wholly from a tall oil fatty acid, available from Eastman Chemical Company, Kingsport, TN) (423.18 g, 1.46 mol), dye XIV (0.765 g), and FASCAT 4100 (0.38 g). The mixture was allowed to react at 150-220 °C for about six hours until 64.0 g of the condensate (water) was collected. The acid number was determined to be 11 mg KOH/g. The mixture was then allowed to cool to 50°C and collected as 100% solids. The resulting purple alkyd was a liquid at room temperature; it was soluble in common organic solvents as well as dispersible in water (universal).

Example 35. Preparation of a Universal Alkyd Containing 1000 ppm of Red Toner Dye (XIII).

An alkyd containing 1000 ppm of a red toner dye (XIII) was prepared, according to the process described in Example 34, by replacing the reddish-blue dye with the red toner dye XIII.

Example 36. Preparation of a Universal Alkyd Containing 1000 ppm of Blue Toner Dye (XII).

An alkyd containing 1000 ppm of a blue toner dye (XII) was prepared, according to the process described in Example 34, by replacing the reddish-blue dye with the blue toner dye XII.

Example 37. Preparation of a Universal Alkyd Containing 500 ppm of Blue Toner Dye (XII) and 500 ppm of Red Toner Dye (XIII).

An alkyd containing 500 PPM of blue toner dye (XII) and 500 PPM of red toner dye (XIII) was prepared, according to the process described in Example 34.

Examples 38-40. Universal Alkyd with Dye XIV in Waterborne Paint Formulations.

The following materials were ground together: water (44.1 g), 28% $NH_4OH$ (0.6 g), Surfynol CT131 (4.5 g), Surfynol 104DPM (1.2 g), Surfynol DF210 (0.35 g), BYK-025 (0.90 g), Ti-706 (148.5 g), 20% QR-708 (0.14 g). The ground material (105.8 g) was mixed with the following materials: the latex of Example 20 (240.6 g), 28% $NH_4OH$ (0.60 g), 15% sodium nitrite (3.1 g), BYK-025 (0.80 g), DPnB/Texanol (dipropylene glycol n-butyl ether/Texanol, Eastman) (14.0 /4.67g), 20% QR-708 (1.5 g), water (8.0 g) and the appropriate amount of the toner-containing alkyd of Example 34 to provide the amount of colorant listed in Table 6. The paints were drawn down on aluminum substrates so as to achieve a final film thickness of approximately 1 mil. The samples were allowed to air dry for 25 minutes and were then baked in a forced air oven at 300°F for an additional 25 minutes. The samples were then checked for total yellowness, which is recorded as the "b*" value (Table 6). The yellowness increases with higher "b*" values.

Table 6. L*, a*, b* Color Values for Paint formulations

| Example | # ppm colorant from adding the Alkyd Composition of Example 34 | L* | a* | b* |
|---|---|---|---|---|
| 38 | 0 | 96.7 | -1.7 | 4.9 |
| 39 | 10 ppm colorant | 95.6 | -1.8 | 3.3 |
| 40 | 20 ppm colorant | 94.4 | -1.9 | 2.0 |

It is clear from the data in Table 6 that adding the alkyd composition of Example 34, having Dye XIV copolymerized therein, is useful for reducing the b* color, thus improving the apparent whiteness of the paint coating.

Example 41. Universal Alkyd with Reddish-Blue Toner Dye XIV in Solvent-Based Paint Formulation.

The following materials were ground together using a high-speed mixer: Duramac HS 57-5816 (80.0 g) (Eastman Chemical Co.), Mineral Spirits Rule 66 (120.0g), Bentone SD-1 (Elementis) (10.4 g), Lecithin Yelkin TS (ADM) (2.0 g), Nuosperse 657 (Sasol Servo BV) (3.0 g), Irocthix 2000 (Lubrizol) (10.0 g), TiPure R-706 (Dupont) (270.0 g), and Barytes-Cimbar UF (Cimbar) (75.0 g). The ground material (570.4 g) was mixed with the following materials: Duramac HS 57-5816 (430.0 g), Mineral Spirits Rule 66 (45.0 g), 12% Cobalt Ten-Cem (OMG Americas) (2.8 g), 5% Calcium Ten-Cem (OMG Americas) (60.0 g), and Exkin #2 (Condea Servo) (2.0 g) to give a white paint formulation (1). To the paint formulation (1) (25.00 g) was added the universal alkyd colorant of Example 34 (0.78 g) and subsequently mixed to give an alkyd paint formlation (2) having improved whiteness.

Example 42. Universal Alkyds with Red Toner Dye XIII and Blue Toner XII in Solvent-Based Paint Formulations.

To the white paint formulation (1) (50.00 g) prepared in Example 41 was added a combination of the universal alkyd colorants, Examples 35 (0.78 g) and Example 36 (0.78 g), and subsequently mixed to give an alkyd paint formulation (3) having improved whiteness.

The above alkyd paint formulations (1, 2, and 3) were drawn down on aluminum substrates so as to achieve a final film thickness of approximately 1 mil. The samples were allowed to air dry for 25 minutes and were then baked in a forced air oven at 300°F for an additional 25 minutes. The samples were then checked for total yellowness, which was recorded as the "b*" value (Table 7). The yellowness increases with higher "b*" values.

Table 7. b* Color Value for Paint formulations

| Example | Added Colorant | b*, initial | b*, after one day | b*, after one week |
|---|---|---|---|---|
| 41 (Formulation 1) | 0 | 3.95 | 3.88 | 3.74 |
| 41 (Formulation 2) | 40 ppm of Example 34 | 2.74 | 2.57 | 2.83 |
| 42 (Formulation 3) | 20 ppm of Example 35 and 20 ppm of Example 36 | 2.01 | 2.37 | 2.28 |

The invention has been described in detail with particular reference to specific embodiments, but it will be understood that variations and modifications can be effected within the spirit and scope of the invention. Although specific terms are employed, they are used in a generic and descriptive sense only and not for purposes of limitation, the scope of the invention being set forth in the following claims.

## Claims

1. A liquid coating composition exhibiting improved whiteness, the composition comprising a water-dispersible polyester polymer or a water-dispersible alkyd polymer that includes one or more of the following, in an amount sufficient to improve the apparent whiteness of the coating composition:

   a) a residue of one or more blue toner dyes that strongly absorb light at wavelengths from about 530 nm to about 650 nm, and one or more of:

      i) a residue of one or more red toner dyes that strongly absorb light at wavelengths from about 470 nm to about 580 nm, or
      ii) a residue of one or more violet toner dyes that strongly absorb light at wavelengths from about 500 nm to about 610 nm; or

   b) a residue of one or more reddish-blue toner dyes that strongly absorb light at wavelengths from about 520 nm to about 630 nm, and optionally, one or more of:

      i) a residue of one or more red toner dyes that strongly absorb light at wavelengths from about 470 nm to about 580 nm, or
      ii) a residue of one or more violet toner dyes that strongly absorb light at wavelengths from about 500 nm to about 610 nm.

2. The liquid coating composition according to claim 1, wherein the composition further comprises at least one polymer subject to yellowing.

3. The liquid coating composition according to claim 2, wherein the at least one polymer subject to yellowing comprises a latex polymer.

4. The liquid coating composition according to claims 1-3, wherein the liquid coating composition comprises water, or wherein the liquid coating composition comprises one or more organic solvents.

5. The liquid coating composition according to claims 1-4, wherein the alkyd polymer is miscible with both water and organic solvents.

6. The liquid coating composition according to claims 1-5, wherein the one or more blue toner dyes strongly absorb light at wavelengths from 550 nm to 640 nm, or
   wherein the one or more red toner dyes strongly absorb light at wavelengths from 480 nm to 570 nm, or
   wherein the one or more violet toner dyes strongly absorb light at wavelengths from 510 nm to 600 nm, or
   wherein the one or more reddish-blue toner dyes strongly absorb light at wavelengths from 540 nm to 620 nm.

7. The liquid coating composition according to claims 1-6, wherein the residue of the one or more blue toner dyes, the residue of the one or more red toner dyes, and the residue of the one or more violet toner dyes are provided in the coating composition in a total amount of no more than about 350 ppmw, based on the total weight of the coating composition.

8. The liquid coating composition according to claims 1-7 wherein the residue of the one or more reddish-blue toner dyes is provided in the coating composition in a total amount of no more than about 350 ppmw, based on the total weight of the coating composition, or
   wherein the residue of the one or more blue toner dyes, the residue of the one or more red toner dyes, and the residue of the one or more violet toner dyes are provided in the coating composition in a total amount of from about 5 ppmw to about 40 ppmw, based on the total weight of the coating composition, or
   wherein the residue of the one or more reddish-blue toner dyes is provided in the coating composition in a total amount of from about 5 ppmw to about 40 ppmw, based on the total weight of the coating composition.

9. The liquid coating composition according to claims 1-8, wherein the one or more blue toner dyes include the following:

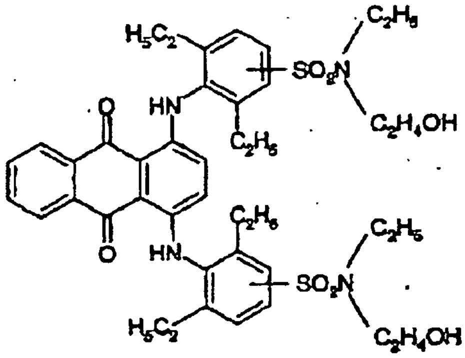

(XII)

or
wherein the one or more red toner dyes include the following:

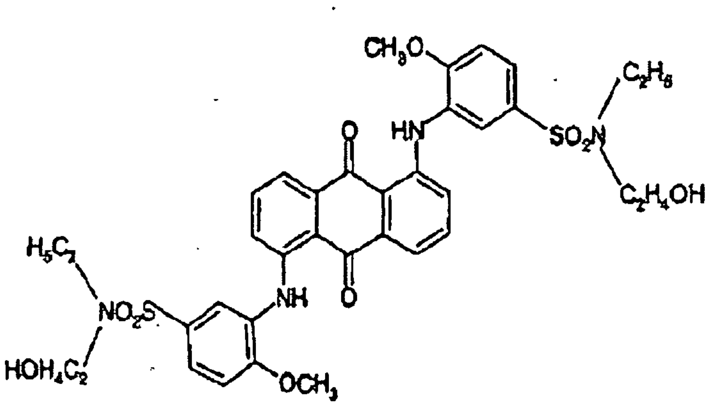

or
wherein the one or more reddish-blue toner dyes include the following:

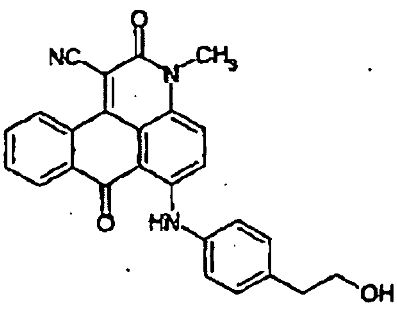

**10.** A method of improving the apparent whiteness of a liquid coating composition, comprising adding to the liquid coating composition a water-dispersible polyester polymer or a water-dispersible alkyd polymer comprising one or more of the following, in an amount sufficient to improve the apparent whiteness of the coating composition:

a) a residue of one or more blue toner dyes that strongly absorb light at wavelengths from about 530 nm to about 650 nm, and one or more of:

i) a residue of one or more red toner dyes that strongly absorb light at wavelengths from about 470 nm to

about 580 nm, or
ii) a residue of one or more violet toner dyes that strongly absorb light at wavelengths from about 500 nm to about 610 nm; or

b) a residue of one or more reddish-blue dyes that strongly absorb light at wavelengths from about 520 nm to about 630 nm.

**11.** The method according to claim 10, wherein the coating composition comprises at least one polymer subject to yellowing.

**12.** The method according to claim 11, wherein the at least one polymer subject to yellowing comprises a latex polymer.

**13.** The method according to claims 10-12, wherein the alkyd resin is miscible with both water and organic solvents.

**14.** The method according to claims 10-13, wherein the one or more blue toner dyes strongly absorb light at wavelengths from 530 nm to 650 nm, or
wherein the one or more red toner dyes strongly absorb light at wavelengths from 470 nm to 580 nm, or
wherein the one or more violet toner dyes strongly absorb light at wavelengths from 500 nm to 610 nm, or
wherein the one or more reddish-blue toner dyes strongly absorb light at wavelengths from 520 nm to 630 nm.

**15.** The method according to claims 10-14, wherein the residue of the one or more blue toner dyes, the residue of the one or more red toner dyes, and the residue of the one or more violet toner dyes are provided in the liquid coating composition in a total amount of no more than about 350 ppmw, based on the total weight of the liquid coating composition, or
wherein the residue of the one or more reddish-blue toner dyes is provided in the liquid coating composition in a total amount of no more than about 350 ppmw, based on the total weight of the latex composition, or
wherein the residue of the one or more blue toner dyes, the residue of the one or more red toner dyes, and the residue of the one or more violet toner dyes are provided in the liquid coating composition in a total amount of from about 5 ppmw to about 40 ppmw, based on the total weight of the liquid coating composition, or
wherein the residue of the one or more reddish-blue toner dyes is provided in the liquid coating composition in a total amount of from about 5 ppmw to about 40 ppmw, based on the total weight of the liquid coating composition.

**16.** A liquid coating composition, comprising:

(a) a water-dispersed condensation polymer having copolymerized therein, in amounts sufficient to improve the apparent whiteness of the coating composition, toner dyes selected from one or more of the following two groups:

(1) at least one blue 1,4-bis(2,6-dialkylanilino)anthraquinone(s) toner dye of Formula(I):

(I)

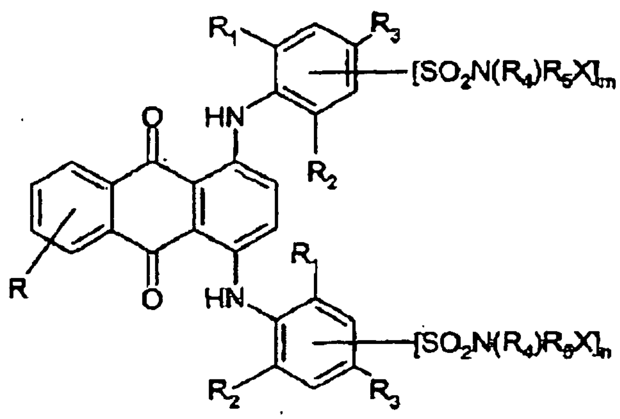

wherein:

R is selected from the group consisting of hydrogen, $C_1$-$C_6$-alkyl, halogen, carboxy and $C_1$-$C_6$-alkoxycarbonyl;

$R_1$ and $R_2$ are independently selected from bromo and $C_1$-$C_6$-alkyl;

$R_3$ is selected from the group consisting of hydrogen, halogen, $C_1$-$C_6$-alkyl, substituted $C_1$-$C_6$-alkyl, hydroxy, $C_1$-$C_6$-alkoxy, substituted $C_1$-$C_6$-alkoxy, cyano, thiocyano, $C_1$-$C_6$-alkylthio, substituted $C_1$-$C_6$-alkylthio, $C_1$-$C_6$-alkylsulfonyl, substituted $C_1$-$C_6$-alkylsulfonyl, $C_1$-$C_6$-alkoxycarbonyl, carboxy, aryloxy, arylthio, arylsulfonyl, and $SO_2N(R_4)R_5X$ when m and/or n are zero;

$R_4$ is selected from the group consisting of hydrogen, $C_1$-$C_6$-alkyl, substituted $C_1$-$C_6$-alkyl, $C_3$-$C_8$-alkenyl, $C_3$-$C_8$-alkynyl, $C_3$-$C_8$-cycloalkyl and aryl ;

$R_5$ is a linking group selected from the group consisting of $C_1$-$C_8$-alkylene, $C_1$-$C_6$-alkylene-(Z-$C_1$-$C_6$)$_{1\text{-}2}$-alkylene, arylene-$C_1$-$C_6$-alkylene, arylene-Z-$C_1$-$C_6$-alkylene, $C_3$-$C_7$-cycloalkylene, $C_1$-$C_6$-alkylene-$C_3$-$C_8$-cycloalkylene-$C_1$-$C_6$-alkylene, $C_1$-$C_6$-alkylenearylene-$C_1$-$C_6$-alkylene, and $C_1$-$C_6$-alkylene-Z-arylene-Z-$C_1$-$C_6$-alkylene, wherein Z is selected from -O-, -S- or $SO_2$;

X is hydrogen or a polyester reactive group; and

m and n are independently 0 or 1; with the proviso that at least one polyester reactive group is present; and

at least one red or violet toner dye, which may be blended with one or more blue toner dyes of formula 1 above, corresponding to one or more of the following structural formulas II-X:

(II)

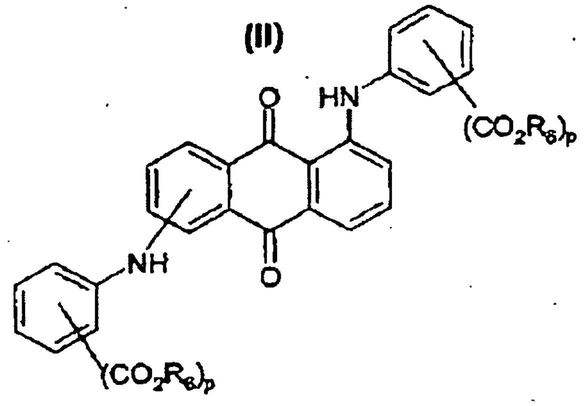

;

(III)

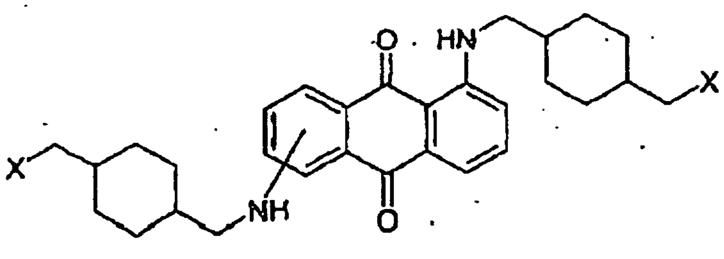

;

(IV)

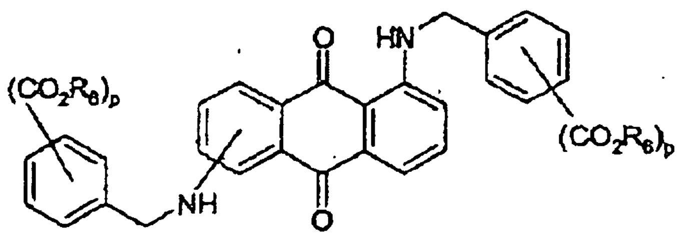

;

(V)

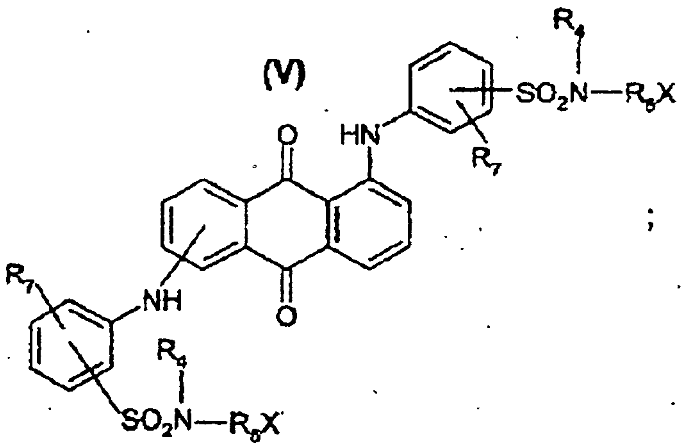

;

(VI)

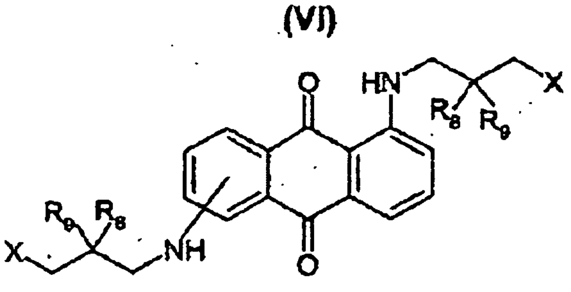

;

(VII)

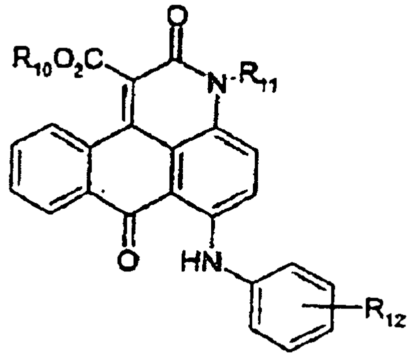

;

(VIII)

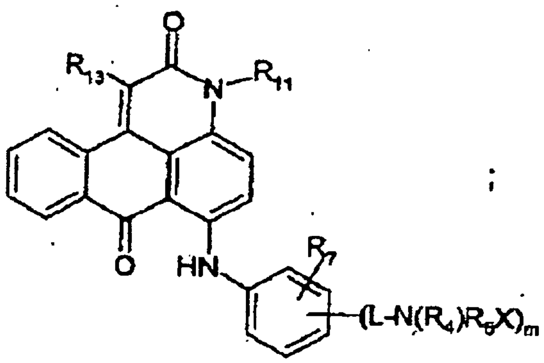

;

(IX)

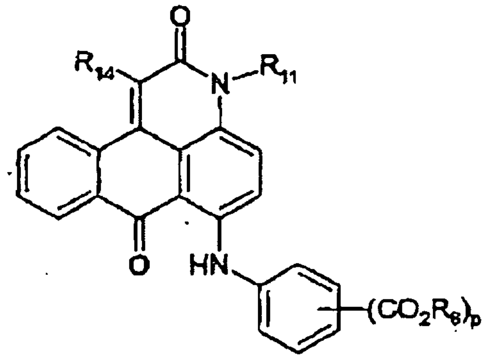

;

(X)

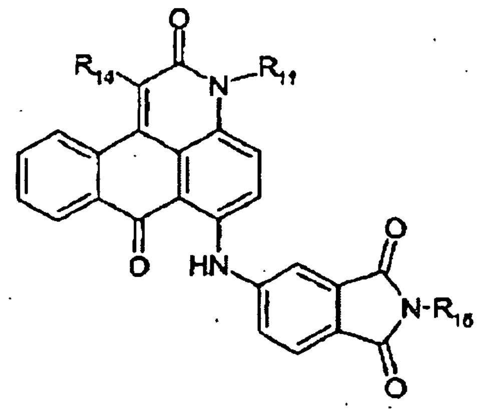

;

wherein:

$R_6$ is selected from the groups consisting of hydrogen, $C_1$-$C_6$-alkyl, substituted $C_1$-$C_6$-alkyl, $C_3$-$C_8$-alkenyl, $C_3$-$C_8$-alkynyl, $C_3$-$C_8$-cycloalkyl or aryl;

$R_7$ is hydrogen or one to three groups selected from $C_1$-$C_6$-alkyl, substituted $C_1$-$C_6$-alkyl, $C_1$-$C_6$-alkanoylamino, halogen, hydroxy,

$C_1$-$C_6$-alkoxy, $C_1$-$C_6$-alkylthio, substituted $C_1$-$C_6$-alkoxy, substituted $C_1$-$C_6$-alkylthio;

$R_8$ and $R_9$ are the same or different and are selected from the group consisting of $C_1$-$C_6$-alkyl, substituted $C_1$-$C_6$-alkyl, $C_3$-$C_8$-cycloalkyl or aryl;

$R_{10}$ is selected from the group consisting of $C_1$-$C_6$-alkyl, substituted $C_1$-$C_6$-alkyl, $C_3$-$C_8$-cycloalkyl or aryl;

$R_{11}$ is selected from the group consisting of hydrogen, $C_1$-$C_{12}$-alkyl, substituted $C_1$-$C_{12}$-alkyl, $C_3$-$C_8$-alkenyl, $C_3$-$C_8$-alkynyl, $C_3$-$C_8$-cycloalkyl and aryl;

$R_{12}$ is hydrogen or one to three groups selected from the group consisting of $C_1$-$C_6$-alkyl, substituted $C_1$-$C_6$-alkyl, $C_1$-$C_6$-alkoxy, substituted $C_1$-$C_6$-alkoxy, $C_1$-$C_6$-alkylthio, substituted $C_1$-$C_6$-alkylthio, halogen, hydroxy, $C_1$-$C_6$-alkanoylamino, aroylamino, $C_1$-$C_6$-alkylsulfonylamino and arylsulfonylamino;

$R_{13}$ and $R_{14}$ are selected from hydrogen, cyano or $CO_2R_{10}$;
$R_{15}$ is $R_4$ or $R_5X$ as previously defined;
L is -CO- or -$SO_2$-; X is as previously defined; m is 0 or 1; p is 1 or 2; with the provision that at least one polyester reactive group is present as X or as a substituent on $R_3$, $R_4$, $R_6$, $R_7$, $R_{10}$, $R_{11}$, $R_{12}$, $R_{13}$, $R_{14}$ or $R_{15}$;

or
(2) at least one reddish-blue toner dye, optionally mixed with one or more red or violet components of Formulae II-X, having a structure consistent with Formula (XI):

XI

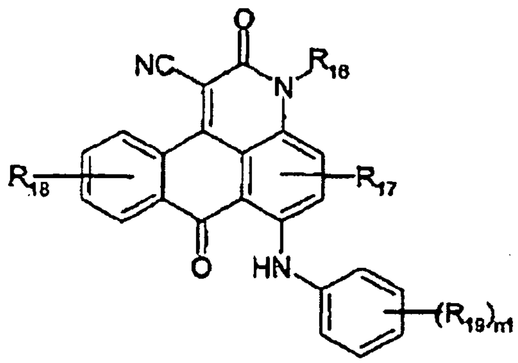

wherein

$R_{16}$ is selected from hydrogen, $C_1$-$C_{12}$-alkyl, substituted $C_1$-$C_6$-alkyl, $C_3$-$C_8$-cyctoalkyl, $C_3$-$C_8$-alkenyl, $C_3$-$C_8$-alkynyl and aryl;
$R_{17}$ is selected from hydrogen, halogen, $C_1$-$C_6$-alkyl, substituted $C_1$-$C_6$-alkyl, $C_1$-$C_6$-alkoxy, substituted $C_1$-$C_6$-alkoxy, aryloxy, $C_1$-$C_6$-alkylthio, substituted C1-C6-alkylthio, arylsulfonyl and arylthio;
$R_{18}$ is selected from hydrogen, halogen, $C_1$-$C_6$-alkyl, substituted $C_1$-$C_6$-alkyl, $C_1$-$C_6$-alkoxy and substituted $C_1$-$C_6$-alkoxy ;
$R_{19}$ is selected from hydrogen or 1-3 groups selected from halogen, $C_1$-$C_6$-alkyl, substituted $C_1$-$C_6$-alkyl, aryl, $C_1$-$C_6$-alkoxy, substituted $C_1$-$C_6$-alkoxy, $C_1$-$C_6$-alkylthio, substituted $C_1$-$C_6$-alkylthio, $C_1$-$C_6$-alkoxycarbonyl, substituted $C_1$-$C_6$-alkoxycarbonyl, arylthio, $C_1$-$C_6$-alkoxycarbonyloxy, substituted $C_1$-$C_6$-alkoxycarbonyloxy, carboxy, sulfamoyl, $C_1$-$C_6$-alkylsulfamoyl, substituted $C_1$-$C_6$-alkylsulfamoyl, di-$C_1$-$C_6$-alkylsulfamoyl, substituted di-$C_1$-$C_6$-alkylsulfamoyl, $C_1$-$C_6$-alkylarylsulfamoyl, substituted $C_1$-$C_6$-alkylarylsulfamoyl, $C_3$-$C_8$-cycloalkylsulfamoyl, substituted $C_3$-$C_8$-cycloalkylsulfamoyl, arylsulfamoyl, carbamoyl, $C_1$-$C_6$-alkylcarbamoyl, substituted $C_1$-$C_6$-alkylcarbamoyl, di-$C_1$-$C_6$-alkylcarbamoyl, substituted di-$C_1$-$C_6$-alkylcarbamoyl, $C_1$-$C_6$-alkylarylcarbamoyl, substituted $C_1$-$C_6$-alkylarylcarbamoyl, $C_3$-$C_8$-cycloalkylcarbamoyl, substituted $C_3$-$C_8$-cycloalkylcarbamoyl, arylcarbamoyl, 2-pyrrolidono, $C_1$-$C_6$-alkanoylamino, substituted $C_1$-$C_6$-alkanoylamino, N-$C_1$-$C_6$-alkyl-$C_1$-$C_6$-alkanoylamino, or substituted N-$C_1$-$C_6$-alkyl-$C_1$-$C_6$-alkanoylamino ; and
n1 is an integer of 1 to 5; with the provision that that at least one polyester reactive group be present as X or as a substituent on $R_{16}$, $R_{17}$, $R_{18}$ or $R_{19}$; and

(b) a polymer that is subject to yellowing.

**17.** The liquid coating composition according to claim 16, wherein the residue of the one or more blue toner dyes, the residue of the one or more red toner dyes, and the residue of the one or more violet toner dyes are provided in the coating composition in a total amount of no more than about 350 ppmw, based on the total weight of the coating composition, or wherein the residue of the one or more reddish-blue toner dyes is provided in the coating composition in a total amount of no more than about 350 ppmw, based on the total weight of the coating composition, or wherein the residue of the one or more blue toner dyes, the residue of the one or more red toner dyes, and the residue of the one or more violet toner dyes are provided in the coating composition in a total amount of from about 5 ppmw to about 40 ppmw, based on the total weight of the coating composition, or wherein the residue of the one or more

reddish-blue toner dyes is provided in the coating composition in a total amount of from about 5 ppmw to about 40 ppmw, based on the total weight of the coating composition.

**18.** The liquid coating composition according to claims 1-9 exhibiting improved apparent whiteness and a reduction in the amount of yellowing that occurs upon exposure to heat and light, the composition further comprising:

(c) at least one difunctional dicarboxylic acid;
(d) from about 4 to about 25 mole percent, based on a total of all acid, hydroxyl and amino equivalents being equal to 200 mole percent, of at least one difunctional sulfomonomer containing at least one cationic sulfonate group attached to an aromatic or cycloaliphatic nucleus wherein the functional groups are hydroxy, carboxyl or amino;
(e) at least one reactant selected from a glycol, a poly(ethylene glycol), a polyol, or a mixture of a glycol and a diamine having two $-NHR_{20}$ groups, wherein $R_{20}$ is selected from hydrogen and $C_1$-$C_{12}$ alkyl
(f) optionally, at least one difunctional reactant selected from ahydroxycarboxylic acid having one $-(C(R^1)_2$-OH group, an amino-carboxylic acid having one $-NR^1H$ group, and an amino-alcohol having one $-C(R^1)_2$-OH group and one $-NR^1H$ group, or mixtures of said difunctional reactants; wherein each $R^1$ is a hydrogen atom or an alkyl group of 1 to 4 carbon atoms; and
(g) optionally, a monobasic fatty acid, a fatty ester, or a naturally-occurring, partially-saponified oil comprising one or more of:

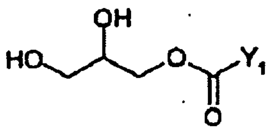 ; 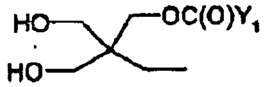 ; 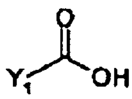 ;

wherein $Y_1$ is a $C_8$-$C_{20}$ alkyl or alkenyl group.

**19.** The liquid coating composition according to claim 18, wherein the poly(ethylene glycol) includes one or more of the following :

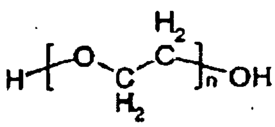 ,

wherein n is an integer from 2 to 20, or

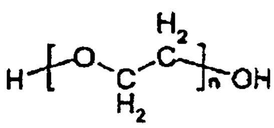 ,

wherein n is an integer from about 20 to about 500.

**20.** The liquid coating composition according to claim 18 or 19, wherein the one or more toner residues is provided in an amount sufficient to prevent or mask yellowing of the liquid coating composition.

**21.** The liquid coating composition according to claims 18-20, wherein the one or more toner residues are provided in the coating composition in an amount of less than about 350 ppmw, based on the total weight of the liquid coating

composition.

**22.** The liquid coating composition according to claims 18-21, wherein the one or more toner residues are provided in an amount from about 5 ppmw to about 40 ppmw, based on the total weight of the liquid coating composition.

**Patentansprüche**

**1.** Flüssige Beschichtungszusammensetzung, welche eine verbesserte Weiße aufweist, wobei die Zusammensetzung ein Wasser-dispergierbares Polyesterpolymer oder ein Wasser-dispergierbares Alkydpolymer umfasst, welches eines oder mehrere des Folgenden in einer Menge enthält, welche ausreicht, die scheinbare Weiße der Beschichtungszusammensetzung zu verbessern:

a) einen Rest eines oder mehrerer blauer Tonerfarbstoffe, welche Licht bei Wellenlängen von ungefähr 530 nm bis ungefähr 650 nm stark absorbieren; und eines oder mehrere von:

i) einen Rest eines oder mehrerer roter Tonerfarbstoffe, welche Licht bei Wellenlängen von ungefähr 470 nm bis ungefähr 580 nm stark absorbieren, oder
ii) einen Rest eines oder mehrerer violetter Tonerfarbstoffe, welche Licht bei Wellenlängen von ungefähr 500 nm bis ungefähr 610 nm stark absorbieren; oder

b) einen Rest eines oder mehrerer rötlich-blauer Tonerfarbstoffe, welche Licht bei Wellenlängen von ungefähr 520 nm bis ungefähr 630 nm stark absorbieren, und gegebenenfalls eines oder mehrere von:

i) einen Rest eines oder mehrerer roter Tonerfarbstoffe, welche Licht bei Wellenlängen von ungefähr 470 nm bis ungefähr 580 nm stark absorbieren, oder
ii) einen Rest eines oder mehrerer violetter Tonerfarbstoffe, welche Licht bei Wellenlängen von ungefähr 500 nm bis ungefähr 610 nm stark absorbieren.

**2.** Flüssige Beschichtungszusammensetzung nach Anspruch 1, wobei die Zusammensetzung weiter wenigstens ein Polymer umfasst, das der Vergilbung unterliegt.

**3.** Flüssige Beschichtungszusammensetzung nach Anspruch 2, wobei das wenigstens eine Polymer, das der Vergilbung unterliegt, ein Latexpolymer umfasst.

**4.** Flüssige Beschichtungszusammensetzung nach Ansprüchen 1 bis 3, wobei die flüssige Beschichtungszusammensetzung Wasser umfasst, oder wobei die flüssige Beschichtungszusammensetzung ein oder mehrere organische Lösungsmittel umfasst.

**5.** Flüssige Beschichtungszusammensetzung nach Ansprüchen 1 bis 4, wobei das Alkydpolymer sowohl mit Wasser wie auch mit organischen Lösungsmitteln mischbar ist.

**6.** Beschichtungszusammensetzung nach Ansprüchen 1 bis 5, wobei der eine oder die mehreren blauen Tonerfarbstoffe Licht bei Wellenlängen von 550 nm bis 640 nm stark absorbieren, oder
wobei der eine oder die mehreren roten Tonerfarbstoffe Licht bei Wellenlängen von 480 nm bis 570 nm stark absorbieren, oder
wobei der eine oder die mehreren violetten Tonerfarbstoffe Licht bei Wellenlängen von 510 nm bis 600 nm stark absorbieren, oder
wobei der eine oder die mehreren rötlich-blauen Tonerfarbstoffe Licht bei Wellenlängen von 540 nm bis 620 nm stark absorbieren.

**7.** Flüssige Beschichtungszusammensetzung nach Ansprüchen 1 bis 6, wobei der Rest des einen oder der mehreren blauen Tonerfarbstoffe, der Rest des einen oder der mehreren roten Tonerfarbstoffe und der Rest des einen oder der mehreren violetten Tonerfarbstoffe in der Beschichtungszusammensetzung in einer Gesamtmenge von nicht mehr als ungefähr 350 Gewichts-ppm vorliegen, basierend auf der Gesamtmenge der Beschichtungszusammensetzung.

**8.** Flüssige Beschichtungszusammensetzung nach Ansprüchen 1 bis 7, wobei der Rest des einen oder der mehreren

rötlich-blauen Tonerfarbstoffe in der Beschichtungszusammensetzung in einer Gesamtmenge von nicht mehr als ungefähr 350 Gewichts-ppm vorliegt, basierend auf der Gesamtmenge der Beschichtungszusammensetzung, oder wobei der Rest des einen oder der mehreren blauen Tonerfarbstoffe, der Rest des einen oder der mehreren roten Tonerfarbstoffe und der Rest des einen oder der mehreren violetten Tonerfarbstoffe in der Beschichtungszusammensetzung in einer Gesamtmenge von ungefähr 5 Gewichts-ppm bis ungefähr 40 Gewichts-ppm vorliegen, basierend auf der Gesamtmenge der Beschichtungszusammensetzung, oder
wobei der Rest des einen oder der mehreren rötlich-blauen Tonerfarbstoffe in der Beschichtungszusammensetzung in einer Gesamtmenge von ungefähr 5 Gewichts-ppm bis ungefähr 40 Gewichts-ppm vorliegt, basierend auf der Gesamtmenge der Beschichtungszusammensetzung.

**9.** Flüssige Beschichtungszusammensetzung nach Ansprüchen 1 bis 8, wobei der eine oder die mehreren blauen Tonerfarbstoffe das Folgende enthalten:

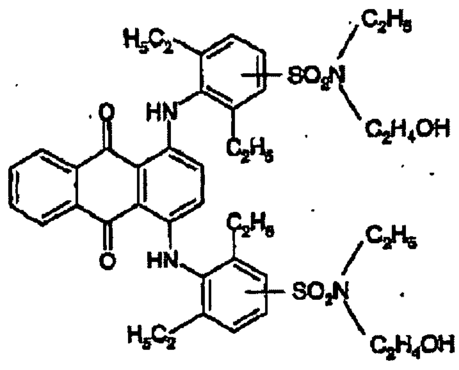

(XII)

oder
wobei der eine oder die mehreren roten Tonerfarbstoffe das Folgende enthalten:

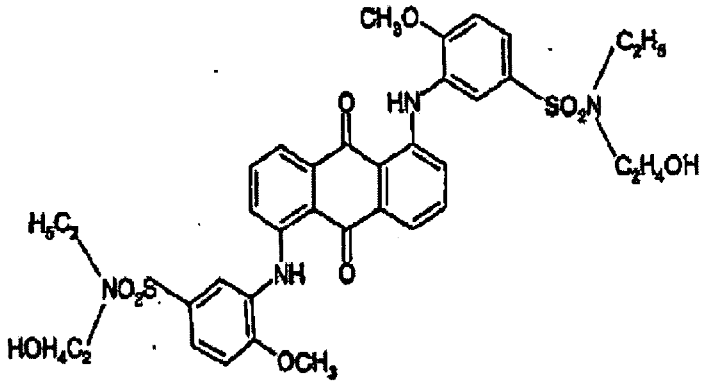

oder
wobei der eine oder die mehreren rötlich-blauen Tonerfarbstoffe das Folgende enthalten:

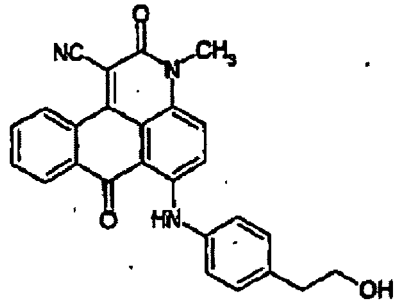

**10.** Verfahren zum Verbessern der scheinbaren Weiße einer flüssigen Beschichtungszusammensetzung, umfassend das Hinzufügen eines Wasser-dispergierbaren Polyesterpolymers oder eines Wasser-dispergierbaren Alkydpolymers, welche eines oder mehrere des Folgenden umfassen, in einer Menge, welche ausreicht, die scheinbare Weiße der Beschichtungszusammensetzung zu verbessern, zur flüssigen Beschichtungszusammensetzung:

a) einen Rest eines oder mehrerer blauer Tonerfarbstoffe, welche Licht bei Wellenlängen von ungefähr 530 nm bis ungefähr 650 nm stark absorbieren, und eines oder mehrere von:

i) ein Rest eines oder mehrerer roter Tonerfarbstoffe, welche Licht bei Wellenlängen von ungefähr 470 nm bis ungefähr 580 nm stark absorbieren, oder
ii) ein Rest eines oder mehrerer violetter Tonerfarbstoffe, welche Licht bei Wellenlängen von ungefähr 500 nm bis ungefähr 610 nm stark absorbieren; oder

b) einen Rest eines oder mehrerer rötlich-blauer Farbstoffe, welche Licht bei Wellenlängen von ungefähr 520 nm bis ungefähr 630 nm stark absorbieren.

**11.** Verfahren nach Anspruch 10, wobei die Beschichtungszusammensetzung mindestes ein Polymer umfasst, das der Vergilbung unterliegt.

**12.** Verfahren nach Anspruch 11, wobei das mindestens eine Polymer, welches der Vergilbung unterliegt, ein Latexpolymer umfasst.

**13.** Verfahren nach Ansprüchen 10 bis 12, wobei das Alkydharz sowohl mit Wasser wie auch mit organischen Lösungsmitteln mischbar ist.

**14.** Verfahren nach Ansprüchen 10 bis 13, wobei der eine oder die mehreren blauen Tonerfarbstoffe Licht bei Wellenlängen von 530 nm bis 650 nm stark absorbieren, oder
wobei der eine oder die mehreren roten Tonerfarbstoffe Licht bei Wellenlängen von 470 nm bis 580 nm stark absorbieren, oder
wobei der eine oder die mehreren violetten Tonerfarbstoffe Licht bei Wellenlängen von 500 nm bis 610 nm stark absorbieren, oder
wobei der eine oder die mehreren rötlich-blauen Tonerfarbstoffe Licht bei Wellenlängen von 520 nm bis 630 nm stark absorbieren.

**15.** Verfahren nach Anspruch 10 bis 14, wobei der Rest des einen oder der mehreren blauen Tonerfarbstoffe, der Rest des einen oder der mehreren roten Tonerfarbstoffe, und der Rest des einen oder der mehreren violetten Tonerfarbstoffe in der flüssigen Beschichtungszusammensetzung in einer Gesamtmenge von nicht mehr als ungefähr 350 Gewichts-ppm vorliegen, basierend auf dem Gesamtgewicht der flüssigen Beschichtungszusammensetzung, oder
wobei der Rest des einen oder der mehreren rötlich-blauen Tonerfarbstoffe in der flüssigen Beschichtungszusammensetzung in einer Gesamtmenge von nicht mehr als ungefähr 350 Gewichts-ppm vorliegt, basierend auf dem Gesamtgewicht der Latexzusammensetzung, oder
wobei der Rest des einen oder der mehreren blauen Tonerfarbstoffe, der Rest des einen oder der mehreren roten Tonerfarbstoffe und der Rest des einen oder der mehreren violetten Tonerfarbstoffe in der flüssigen Beschichtungszusammensetzung in einer Gesamtmenge von ungefähr 5 Gewichts-ppm bis ungefähr 40 Gewichts-ppm vorliegen, basierend auf der Gesamtmenge der flüssigen Beschichtungszusammensetzung, oder

wobei der Rest des einen oder der mehreren rötlich-blauen Tonerfarbstoffe in der flüssigen Beschichtungszusammensetzung in einer Gesamtmenge von ungefähr 5 Gewichts-ppm bis ungefähr 40 Gewichts-ppm vorliegt, basierend auf der Gesamtmenge der flüssigen Beschichtungszusammensetzung.

**16.** Flüssige Beschichtungszusammensetzung umfassend:

a) ein Wasser-dispergiertes Kondensationspolymer, welches copolymerisiert darin in Mengen, welche ausreichen, die scheinbare Weiße der Beschichtungszusammensetzung zu verbessern, Tonerfarbstoffe aufweist, ausgewählt aus einer oder mehrerer der folgenden zwei Gruppen:

(1) mindestens ein blauer 1,4-Bis(2,6-dialkylanilino)anthraquinon Tonerfarbstoff/Tonerfarbstoffe der Formel (I):

(I)

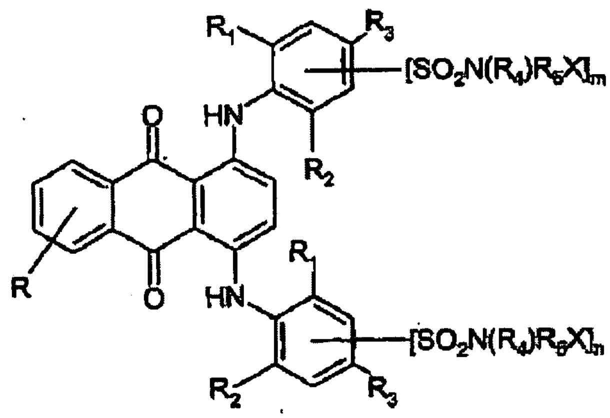

wobei

R ausgewählt wird aus der Gruppe bestehend aus Wasserstoff, $C_1$-$C_6$-Alkyl, Halogen, Carboxy und $C_1$-$C_6$-Alkoxycarbonyl; $R_1$ und $R_2$ unabhängig ausgewählt werden aus Brom und $C_1$-$C_6$-Alkyl;
$R_3$ ausgewählt wird aus der Gruppe bestehend aus Wasserstoff, Halogen, $C_1$-$C_6$-Alkyl, substituiertes $C_1$-$C_6$-Alkyl, Hydroxy, $C_1$-$C_6$-Alkoxy, substituiertes $C_1$-$C_6$-Alkoxy, Cyan, Thiocyan, $C_1$-$C_6$-Alkylthio, substituiertes $C_1$-$C_6$-Alkylthio, $C_1$-$C_6$-Alkylsulfonyl, substituiertes $C_1$-$C_6$-Alkylsulfonyl, $C_1$-$C_6$-Alkoxycarbonyl, Carboxy, Aryloxy, Arylthio, Arylsulfonyl und $SO_2N(R_4)R_5X$, wenn m und/oder n 0 sind;
$R_4$ ausgewählt wird aus der Gruppe bestehend aus Wasserstoff, $C_1$-$C_6$-Alkyl, substituiertes $C_1$-$C_6$-Alkyl, $C_3$-$C_8$-Alkenyl, $C_3$-$C_8$-Alkynyl, $C_3$-$C_8$-Cycloalkyl und Aryl ;
$R_5$ eine verknüpfende Gruppe ist ausgewählt aus der Gruppe bestehend aus $C_1$-$C_8$-Alkylen, $C_1$-$C_6$-Alkylen-(Z-$C_1$-$C_6$)$_{1-2}$-Alkylen, Arylen-$C_1$-$C_6$-Alkylen, Arylen-Z-$C_1$-$C_6$-Alkylen, $C_3$-$C_7$-Cycloalkylen, $C_1$-$C_6$-Alkylen-$C_3$-$C_8$-Cycloalkylen-$C_1$-$C_6$-Alkylen, $C_1$-$C_6$-Alkylen-arylen-$C_1$-$C_6$-Alkylen und $C_1$-$C_6$-Alkylen-Z-arylen-Z-$C_1$-$C_6$-Alkylen, wobei Z ausgewählt wird aus -O-, -S- oder $SO_2$;
X Wasserstoff oder eine Polyester-reaktive Gruppe ist; und
m und n unabhängig voneinander 0 oder 1 sind; mit der Bedingung, dass mindestens eine Polyester-reaktive Gruppe vorhanden ist; und
mindestens ein roter oder violetter Tonerfarbstoff, der mit einem oder mehreren blauen Tonerfarbstoffen der obigen Formel (I) gemischt werden kann, entsprechend einer oder mehrerer der folgenden Strukturformeln (II) - (X):

(II)

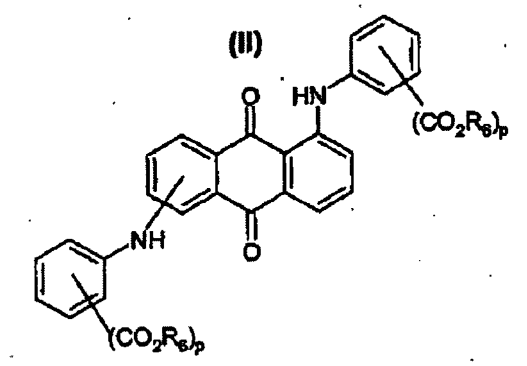

;

(III)

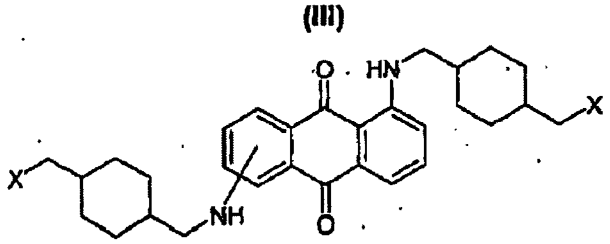

;

(IV)

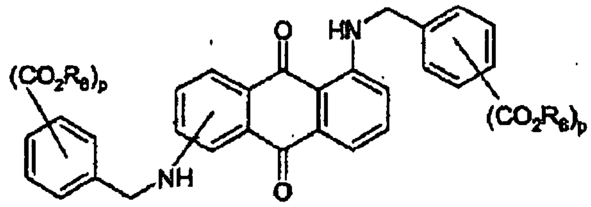

;

(V)

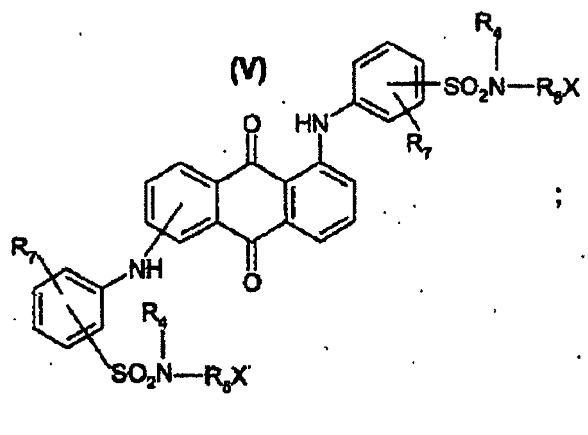

;

(VI)

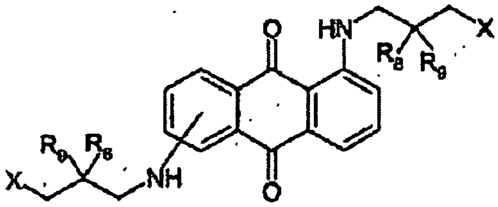

;

(VII)

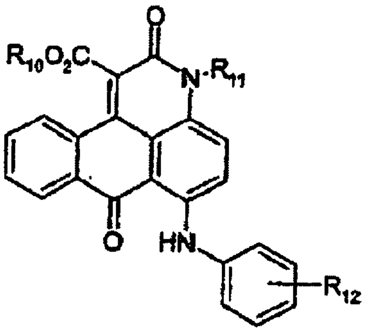

;

(VIII)

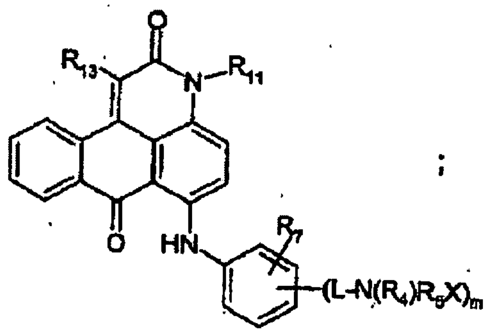

;

(IX)

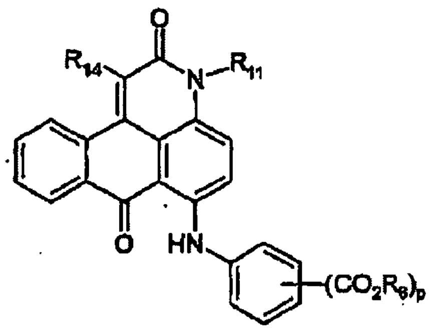

;

(X)

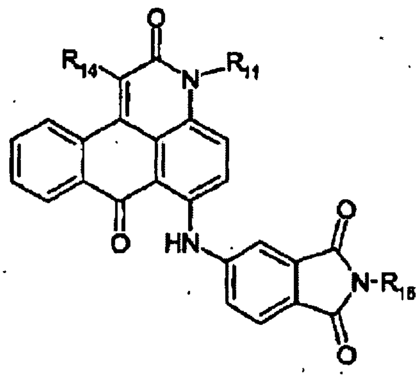

;

wobei

$R_6$ ausgewählt wird aus der Gruppe bestehend aus Wasserstoff, $C_1$-$C_6$-Alkyl, substituiertes $C_1$-$C_6$-Alkyl, $C_3$-$C_8$-Alkenyl, $C_3$-$C_8$-Alkynyl, $C_3$-$C_8$-Cycloalkyl oder Aryl;

$R_7$ Wasserstoff ist oder eine bis drei Gruppen ausgewählt aus $C_1$-$C_6$-Alkyl, substituiertes $C_1$-$C_6$-Alkyl, $C_1$-$C_6$-Alkanoylamino, Halogen, Hydroxy, $C_1$-$C_6$-Alkoxy, $C_1$-$C_6$-Alkylthio, substituiertes $C_1$-$C_6$-Alkoxy, substituiertes $C_1$-$C_6$-Alkylthio;

$R_8$ und $R_9$ gleich oder verschieden sind und ausgewählt werden aus der Gruppe bestehend aus $C_1$-$C_6$-Alkyl, substituiertes $C_1$-$C_6$-Alkyl, $C_3$-$C_8$-Cycloalkyl oder Aryl;

$R_{10}$ ausgewählt wird aus der Gruppe bestehend aus $C_1$-$C_6$-Alkyl, substituiertes $C_1$-$C_6$-Alkyl, $C_3$-$C_8$-Cycloalkyl oder Aryl;

$R_{11}$ ausgewählt wird aus der Gruppe bestehend aus Wasserstoff, $C_1$-$C_{12}$-Alkyl, substituiertes $C_1$-$C_{12}$-Alkyl, $C_3$-$C_8$-Alkenyl, $C_3$-$C_8$-Alkynyl, $C_3$-$C_8$-Cycloalkyl und Aryl;

$R_{12}$ Wasserstoff ist oder eine bis drei Gruppen ausgewählt aus der Gruppe bestehend aus $C_1$-$C_6$-Alkyl, substituiertes $C_1$-$C_6$-Alkyl, $C_1$-$C_6$-Alkoxy, substituiertes $C_1$-$C_6$-Alkoxy, $C_1$-$C_6$-Alkylthio, substituiertes $C_1$-$C_6$-Alkylthio, Halogen, Hydroxy, $C_1$-$C_6$-Alkanoylamino, Aroylamino, $C_1$-$C_6$-Alkylsulfonylamino und Arylsulfonylamino;

$R_{13}$ und $R_{14}$ ausgewählt werden aus Wasserstoff, Cyan oder $CO_2R_{10}$;

$R_{15}$ $R_4$ oder $R_5X$ ist wie vorstehend definiert;

L -CO- oder $-SO_2-$ ist;

X wie vorstehend definiert ist;

m 0 oder 1 ist;

p 1 oder 2 ist;

mit der Bedingung, dass mindestens eine Polyester-reaktive Gruppe als X oder als ein Substituent an $R_3$, $R_4$, $R_6$, $R_7$, $R_{10}$, $R_{11}$, $R_{12}$, $R_{13}$, $R_{14}$ oder $R_{15}$ vorhanden ist;
oder
(2) mindestens ein rötlich-blauer Tonerfarbstoff, gegebenenfalls gemischt mit einem oder mehreren roten oder violetten Verbindungen der Formel (II)-(X), welcher eine Struktur aufweist, die mit der Formel (XI) übereinstimmt:

XI

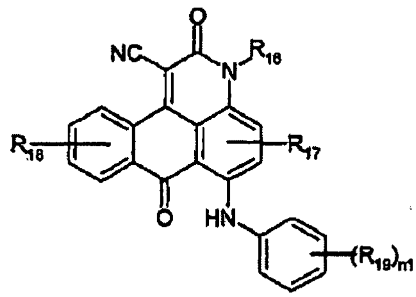

wobei

$R_{16}$ ausgewählt wird aus Wasserstoff, $C_1$-$C_{12}$-Alkyl, substituiertes $C_1$-$C_6$-Alkyl, $C_3$-$C_8$-Cycloalkyl, $C_3$-$C_8$-Alkenyl, $C_3$-$C_8$-Alkynyl und Aryl;
$R_{17}$ ausgewählt wird aus Wasserstoff, Halogen, $C_1$-$C_6$-Alkyl, substituiertes $C_1$-$C_6$-Alkyl, $C_1$-$C_6$-Alkoxy, substituiertes $C_1$-$C_6$-Alkoxy, Aryloxy, $C_1$-$C_6$-Alkylthio, substituiertes $C_1$-$C_6$-Alkylthio, Arylsulfonyl und Arylthio;
$R_{18}$ ausgewählt wird aus Wasserstoff, Halogen, $C_1$-$C_6$-Alkyl, substituiertes $C_1$-$C_6$-Alkyl, $C_1$-$C_6$-Alkoxy und substituiertes $C_1$-$C_6$-Alkoxy ;
$R_{19}$ ausgewählt wird aus Wasserstoff oder ein bis drei Gruppen ausgewählt aus Halogen, $C_1$-$C_6$-Alkyl, substituiertes $C_1$-$C_6$-Alkyl, Aryl, $C_1$-$C_6$-Alkoxy, substituiertes $C_1$-$C_6$-Alkoxy, $C_1$-$C_6$-Alkylthio, substituiertes $C_1$-$C_6$-Alkylthio, $C_1$-$C_6$-Alkoxycarbonyl, substituiertes $C_1$-$C_6$-Alkoxycarbonyl, Arylthio, $C_1$-$C_6$-Alkoxycarbonyloxy, substituiertes $C_1$-$C_6$-Alkoxycarbonyloxy, Carboxy, Sulfamoyl, $C_1$-$C_6$-Alkylsulfamoyl, substituiertes $C_1$-$C_6$-Alkylsulfamoyl, Di-$C_1$-$C_6$-Alkylsulfamoyl, substituiertes Di-$C_1$-$C_6$-Alkylsulfamoyl, $C_1$-$C_6$-Alkylarylsulfamoyl, substituiertes $C_1$-$C_6$-Alkylarylsulfamoyl, $C_3$-$C_8$-Cycloalkylsulfamoyl, substituiertes $C_3$-$C_8$-Cycloalkylsulfamoyl, Arylsulfamoyl, Carbamoyl, $C_1$-$C_6$-Alkylcarbamoyl, substituiertes $C_1$-$C_6$-Alkylcarbamoyl, Di-$C_1$-$C_6$-Alkylcarbamoyl, substituiertes Di-$C_1$-$C_6$-Alkylcarbamoyl, $C_1$-$C_6$-Alkylarylcarbamoyl, substituiertes $C_1$-$C_6$-Alkylarylcarbamoyl, $C_3$-$C_8$-Cycloalkylcarbamoyl, substituiertes $C_3$-$C_8$-Cycloalkylcarbamoyl, Arylcarbamoyl, 2-Pyrrolidono, $C_1$-$C_6$-Alkanoylamino, substituiertes $C_1$-$C_6$-Alkanoylamino, N-$C_1$-$C_6$-Alkyl-$C_1$-$C_6$-Alkanoylamino oder substituiertes N-$C_1$-$C_6$-Alkyl-$C_1$-$C_6$-Alkanoylamino; und
n1 eine ganze Zahl von 1 bis 5 ist; mit der Bedingung dass mindestens eine Polyester-reaktive Gruppe als X oder als Substituent an $R_{16}$, $R_{17}$, $R_{18}$ oder $R_{19}$ vorhanden ist; und

b) ein Polymer, das der Vergilbung unterliegt.

**17.** Flüssige Beschichtungszusammensetzung nach Anspruch 16, wobei der Rest des einen oder der mehreren blauen Tonerfarbstoffe, der Rest des einen oder der mehreren roten Tonerfarbstoffe und der Rest des einen oder der mehreren violetten Tonerfarbstoffe in der Beschichtungszusammensetzung in einer Gesamtmenge von nicht mehr als ungefähr 350 Gewichts-ppm vorliegen, basierend auf der Gesamtmenge der Beschichtungszusammensetzung, oder wobei der Rest des einen oder der mehreren rötlich-blauen Tonerfarbstoffe in der Beschichtungszusammensetzung in einer Gesamtmenge von nicht mehr als ungefähr 350 Gewichts-ppm vorliegt, basierend auf dem Gesamtgewicht der Beschichtungszusammensetzung, oder wobei der Rest des einen oder der mehreren blauen Tonerfarbstoffe, der Rest des einen oder der mehreren roten Tonerfarbstoffe und der Rest des einen oder der mehreren violetten Tonerfarbstoffe in der Beschichtungszusammensetzung in einer Gesamtmenge von ungefähr 5 Gewichts-ppm bis ungefähr 40 Gewichts-ppm vorliegen, basierend auf dem Gesamtgewicht der Beschichtungszusammensetzung, oder wobei der Rest des einen oder der mehreren rötlich-blauen Tonerfarbstoffe in der Beschichtungszusammensetzung in einer Gesamtmenge von ungefähr 5 Gewichts-ppm bis ungefähr 40 Gewichts-ppm vorliegt, basierend auf dem Gesamtgewicht der Beschichtungszusammensetzung.

**18.** Flüssige Beschichtungszusammensetzung nach Ansprüchen 1 bis 9, welche eine verbesserte scheinbare Weiße und eine Erniedrigung des Vergilbungsgrads aufweisen, welche bei Exposition auf Hitze und Licht eintritt, wobei die Zusammensetzung weiter umfasst:

(c) mindestens eine difunktionelle Dicarbonsäure;
(d) ungefähr 4 bis ungefähr 25 Mol%, basierend auf der Gesamtmenge aller Säuren, Hydroxyl- und Aminoäquivalente, welche gleich 200 Mol-% sind, eines mindestens eines difunktionellen Sulfomonomers, welches mindestens eine kationische Sulfonatgruppe enthält, die sich an einem aromatischen oder cycloaliphatischen Kern befindet, wobei die funktionellen Gruppen Hydroxy, Carboxyl oder Amino sind;
(e) mindestens einen Reaktanten ausgewählt aus einem Glykol, einem Polyethylenglykol, einem Polyol oder einer Mischung eines Glykols und eines Diamins, welches zwei -$NHR_{20}$-Gruppen aufweist, wobei $R_{20}$ ausgewählt ist aus Wasserstoff und $C_1$-$C_{12}$-Alkyl;
(f) gegebenenfalls mindestens einen difunktionellen Reaktanten ausgewählt aus einer Hydroxycarbonsäure, welche eine -$(C(R^1)_2$-OH-Gruppe aufweist, aus einer Aminocarbonsäure, welche eine -$NR^1H$-Gruppe aufweist und aus einem Aminoalkohol, welcher eine -$C(R^1)_2$-OH-Gruppe und eine -$NR^1H$-Gruppe aufweist, oder aus Mischungen besagter difunktioneller Reaktanten; wobei jeweils $R^1$ ein Wasserstoffatom oder eine Alkylgruppe mit ein bis vier Kohlenstoffatomen ist; und
(g) gegebenenfalls eine einbasische Fettsäure, ein Fettsäureester oder ein natürlich vorkommendes teilweise verseiftes Öl, umfassend eine oder mehrere der folgenden Formeln:

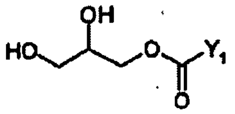 ; 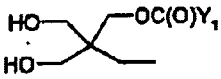 ; 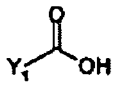 ;

wobei $Y_1$ eine $C_8$-$C_{20}$-Aklylgruppe oder eine Alkenylgruppe ist.

**19.** Flüssige Beschichtungszusammensetzung nach Anspruch 18, wobei das Polyethylenglykol eine oder mehrere der folgenden Formeln umfasst:

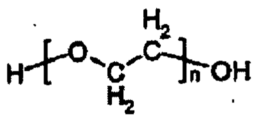 ,

wobei n eine ganze Zahl von 2 bis 20 ist, oder

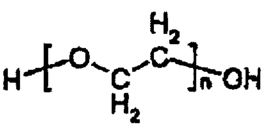 ,

wobei n eine ganze Zahl von ungefähr 20 bis ungefähr 500 ist.

**20.** Flüssige Beschichtungszusammensetzung nach Anspruch 18 oder 19, wobei der eine oder die mehreren Tonerreste in einer Menge vorliegen, welche ausreicht, das Vergilben der flüssigen Beschichtungszusammensetzung zu verhindern oder zu maskieren.

**21.** Flüssige Beschichtungszusammensetzung nach Ansprüchen 18 bis 20, wobei der eine oder die mehreren Tonerreste

in der Beschichtungszusammensetzung in einer Menge von weniger als ungefähr 350 Gewichts-ppm vorliegen, basierend auf dem Gesamtgewicht der flüssigen Beschichtungszusammensetzung.

**22.** Flüssige Beschichtungszusammensetzung nach Ansprüchen 18 bis 21, wobei der eine oder die mehreren Tonerreste in einer Menge von ungefähr 5 Gewichts-ppm bis ungefähr 40 Gewichts-ppm vorliegen, basierend auf dem Gesamtgewicht der flüssigen Beschichtungszusammensetzung.

## Revendications

**1.** Composition liquide de revêtement présentant une blancheur améliorée, la composition comprenant un polymère polyester dispersible dans l'eau ou un polymère alkyde dispersible dans l'eau, qui comprend un ou plusieurs des suivants, en une quantité suffisante pour améliorer la blancheur apparente de la composition de revêtement :

a) un résidu de un ou plusieurs colorants de toner bleu, qui absorbent fortement la lumière à des longueurs d'onde allant d'environ 530 m à environ 650 nm, et un ou plusieurs de :

(i) un résidu de un ou plusieurs colorants de toner rouge, qui absorbent fortement la lumière à des longueurs d'onde allant d'environ 470 m à environ 580 nm, ou
(ii) un résidu de un ou plusieurs colorants de toner violet, qui absorbent fortement la lumière à des longueurs d'onde allant d'environ 500 m à environ 610 nm, ou

b) un résidu de un ou plusieurs colorants de toner bleu-rougeâtre, qui absorbent fortement la lumière à des longueurs d'onde allant d'environ 520 m à environ 630 nm, et le cas échéant, un ou plusieurs de :

(i) un résidu de un ou plusieurs colorants de toner rouge, qui absorbent fortement la lumière à des longueurs d'onde allant d'environ 470 m à environ 580 nm, ou
(ii) un résidu de un ou plusieurs colorants de toner violet, qui absorbent fortement la lumière à des longueurs d'onde allant d'environ 500 m à environ 610 nm.

**2.** Composition liquide de revêtement selon la revendication 1, dans laquelle la composition comprend en outre, au moins un polymère sujet au jaunissement.

**3.** Composition liquide de revêtement selon la revendication 2, dans laquelle le au moins un polymère sujet au jaunissement comprend un polymère latex.

**4.** Composition liquide de revêtement selon les revendications 1-3, dans laquelle la composition liquide de revêtement comprend de l'eau, ou dans laquelle la composition liquide de revêtement comprend un ou plusieurs solvants organiques.

**5.** Composition liquide de revêtement selon les revendications 1-4, dans laquelle le polymère alkyde est miscible à l'eau et aux solvants organiques.

**6.** Composition liquide de revêtement selon les revendications 1-5, dans laquelle le un ou plusieurs colorants de toner bleu absorbent fortement à des longueurs d'onde allant de 550 nm à 640 nm,
ou dans laquelle le un ou plusieurs colorants de toner rouge absorbent fortement à des longueurs d'onde allant de 480 nm à 570 nm,
ou dans laquelle le un ou plusieurs colorants de toner violet absorbent fortement à des longueurs d'onde allant de 510 nm à 600 nm, ou dans laquelle le un ou plusieurs colorants de toner bleu-rougeâtre absorbent fortement à des longueurs d'onde allant de 540 nm à 620 nm.

**7.** Composition liquide de revêtement selon les revendications 1-6, dans laquelle le résidu du un ou plusieurs colorants de toner bleu, le résidu du un ou plusieurs colorants de toner rouge, et le résidu du un ou plusieurs colorants de toner violet sont incorporés dans la composition de revêtement en une quantité totale de pas plus d'environ 350 ppmw, sur la base du poids total de la composition de revêtement.

**8.** Composition liquide de revêtement selon les revendications 1-7, dans laquelle le résidu du un ou plusieurs colorants de toner bleu-rougeâtre est incorporé dans la composition de revêtement en une quantité totale de pas plus d'environ

350 ppmw, sur la base du poids total de la composition de revêtement, ou dans laquelle le résidu du un ou plusieurs colorants de toner bleu, le résidu du un ou plusieurs colorants de toner rouge, et le résidu du un ou plusieurs colorants de toner violet sont incorporés dans la composition de revêtement en une quantité totale allant d'environ 5 ppmw à environ 40 ppmw, sur la base du poids total de la composition de revêtement, ou dans laquelle le résidu du un ou plusieurs colorants de toner bleu-rougeâtre est incorporé dans la composition de revêtement en une quantité totale allant d'environ 5 ppmw à environ 40 ppmw, sur la base du poids total de la composition de revêtement.

**9.** Composition liquide de revêtement selon les revendications 1-8, dans laquelle le un ou plusieurs colorants de toner bleu comprend le suivant :

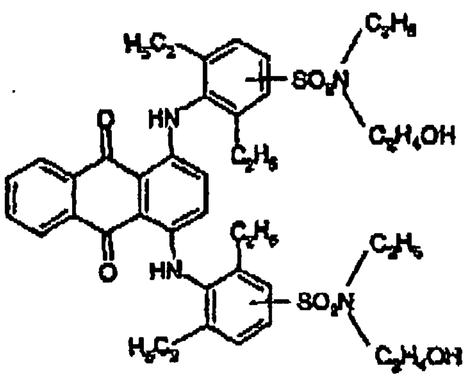

(XII)

ou

dans laquelle le un ou plusieurs colorants de toner rouge comprend le suivant :

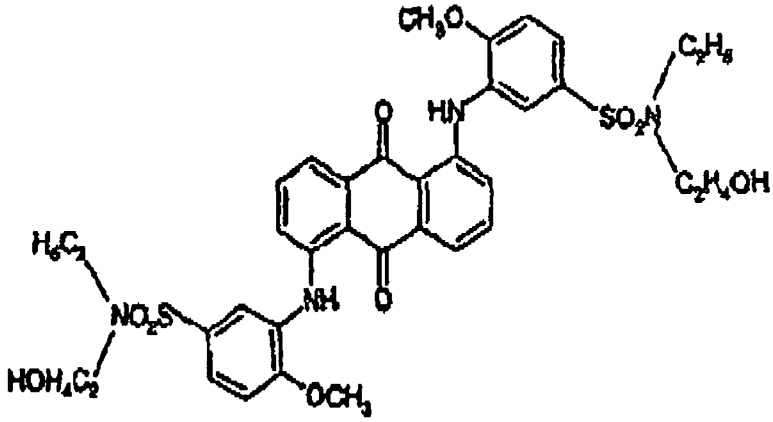

ou

dans laquelle le un ou plusieurs colorants de toner bleu-rougeâtre comprend le suivant :

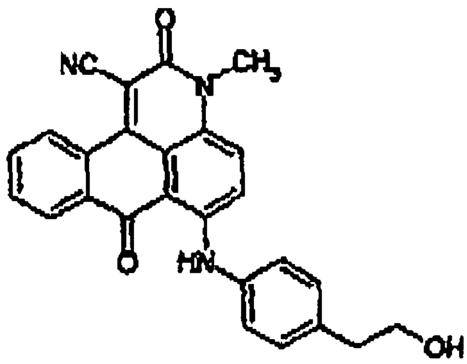

**10.** Procédé pour améliorer la blancheur apparente d'une composition liquide de revêtement, comprenant l'addition à la composition liquide de revêtement, d'un polymère polyester dispersible dans l'eau ou d'un polymère alkyde dispersible dans l'eau, qui comprend un ou plusieurs des suivants, en une quantité suffisante pour améliorer la blancheur apparente de la composition de revêtement :

a) un résidu de un ou plusieurs colorants de toner bleu, qui absorbent fortement la lumière à des longueurs d'onde allant d'environ 530 m à environ 650 nm, et un ou plusieurs de :

(i) un résidu de un ou plusieurs colorants de toner rouge, qui absorbent fortement la lumière à des longueurs d'onde allant d'environ 470 m à environ 580 nm, ou
(ii) un résidu de un ou plusieurs colorants de toner violet, qui absorbent fortement la lumière à des longueurs d'onde allant d'environ 500 m à environ 610 nm, ou

b) un résidu de un ou plusieurs colorants de toner bleu-rougeâtre, qui absorbent fortement la lumière à des longueurs d'onde allant d'environ 520 m à environ 630 nm.

**11.** Procédé selon la revendication 10, dans lequel la composition de revêtement comprend au moins un polymère sujet au jaunissement.

**12.** Procédé selon la revendication 11, dans lequel le au moins un polymère sujet au jaunissement comprend un polymère latex.

**13.** Procédé selon les revendications 10-12, dans lequel la résine alkyde est miscible dans l'eau et des solvants organiques.

**14.** Procédé selon les revendications 10-13, dans lequel le un ou plusieurs colorants de toner bleu absorbent fortement la lumière à des longueurs d'onde allant de 530 m à 650 nm, ou
dans laquelle le un ou plusieurs colorants de toner rouge absorbent fortement à des longueurs d'onde allant de 470 nm à 580 nm, ou
dans laquelle le un ou plusieurs colorants de toner violet absorbent fortement à des longueurs d'onde allant de 500 nm à 610 nm, ou
dans laquelle le un ou plusieurs colorants de toner bleu-rougeâtre absorbent fortement à des longueurs d'onde allant de 520 nm à 630 nm.

**15.** Procédé selon les revendications 10-14, dans lequel le résidu du un ou plusieurs colorants de toner bleu, le résidu du un ou plusieurs colorants de toner rouge, et le résidu du un ou plusieurs colorants de toner violet sont incorporés dans la composition de revêtement en une quantité totale de plus d'environ 350 ppmw, sur la base du poids total de la composition liquide de revêtement, ou
dans lequel le résidu du un ou plusieurs colorants de toner bleu-rougeâtre est incorporé dans la composition liquide de revêtement en une quantité totale de plus d'environ 350 ppmw, sur la base du poids total de la composition de latex, ou
dans lequel le résidu du un ou plusieurs colorants de toner bleu, le résidu du un ou plusieurs colorants de toner rouge, et le résidu du un ou plusieurs colorants de toner violet sont incorporés dans la composition de revêtement en une quantité totale allant d'environ 5 ppmw à environ 40 ppmw, sur la base du poids total de la composition de

revêtement, ou
dans lequel le résidu du un ou plusieurs colorants de toner bleu-rougeâtre est incorporé dans la composition liquide de revêtement en une quantité totale allant d'environ 5 ppmw à environ 40 ppmw, sur la base du poids total de la composition de revêtement.

**16.** Composition liquide de revêtement, comprenant :

(a) un polymère de condensation dispersé dans l'eau, présentant y copolymérisé, en des quantités suffisantes pour améliorer la blancheur apparente de la composition de revêtement, des colorants de toner choisis parmi un ou plusieurs des deux groupes suivants :

(1) au moins un colorant de toner bleu 1,4-bis(2,6-dialkylanilino)anthraquinone de formule (I) :

(I)

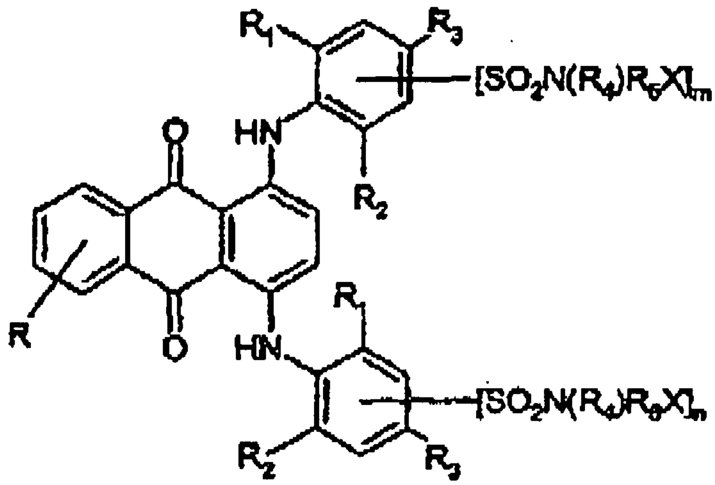

où

R est choisi parmi le groupe consistant en hydrogène, alkyle en $C_1$-$C_6$, halogène, carboxy et alcoxycarbonyle en $C_1$-$C_6$ ;
$R_1$ et $R_2$ sont choisis indépendamment parmi bromo et alkyle en $C_1$-$C_6$ ;
$R_3$ est choisi parmi le groupe consistant en hydrogène, halogène, alkyle en $C_1$-$C_6$, alkyle en $C_1$-$C_6$ substitué, hydroxy, alcoxy en $C_1$-$C_6$, alcoxy en $C_1$-$C_6$ substitué, cyano, thiocyano, alkylthio en $C_1$-$C_6$, alkylthio en $C_1$-$C_6$ substitué, alkylsulfonyle en $C_1$-$C_6$, alkylsulfonyle en $C_1$-$C_6$ substitué, alcoxycarbonyle en $C_1$-$C_6$, carboxy, aryloxy, arylthio, arylsulfonyle et $SO_2N(R_4)R_5X$ où m et/ou n sont zéro ;
$R_4$ est choisi parmi le groupe consistant en hydrogène, alkyle en $C_1$-$C_6$, alkyle en $C_1$-$C_6$ substitué, alcényle en $C_3$-$C_8$, alcynyle en $C_3$-$C_8$, cycloalkyle en $C_3$-$C_8$ et aryle ;
$R_5$ est un groupe liant choisi parmi le groupe consistant en alkylène en $C_1$-$C_8$, (alkylène en $C_1$-$C_6$)-Z-(alkylène en $C_1$-$C_6$)$_{1-2}$, (arylène)alkylène en $C_1$-$C_6$, (arylène)-Z-alkylène en $C_1$-$C_6$, cycloalkylène en $C_3$-$C_7$, (alkylène en $C_1$-$C_6$)(cycloalkylène en $C_3$-$C_8$)alkylène en $C_1$-$C_6$, (alkylène en $C_1$-$C_6$)(arylène)alkylène en $C_1$-$C_6$, et (alkylène en $C_1$-$C_6$)-Z-arylylène-Z-alkylène en $C_1$-$C_6$, où Z est choisi parmi O, S ou $SO_2$;
X est hydrogène ou un groupe réactif avec le polyester, et
m et n sont indépendamment 0 ou 1,
avec la condition qu'au moins un groupe réactif avec le polyester est présent, et
au moins un colorant de toner violet ou rouge, qui peut être mélangé avec un ou plusieurs colorants de toner bleu de la formule I ci-dessus, correspondant à une ou plusieurs des formules de structures II-X suivantes :

(II)

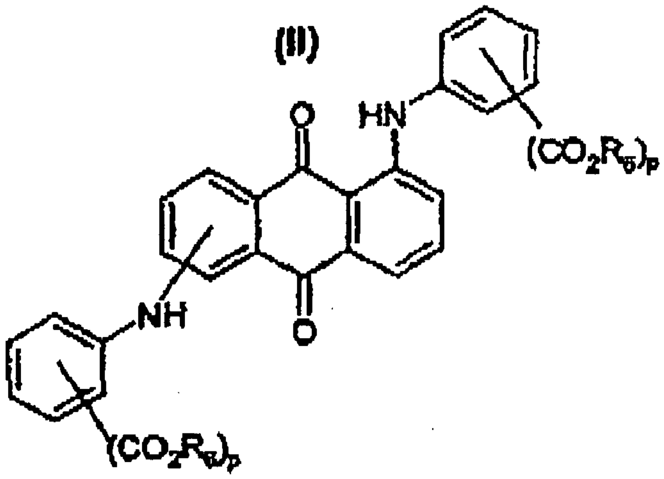

;

(III)

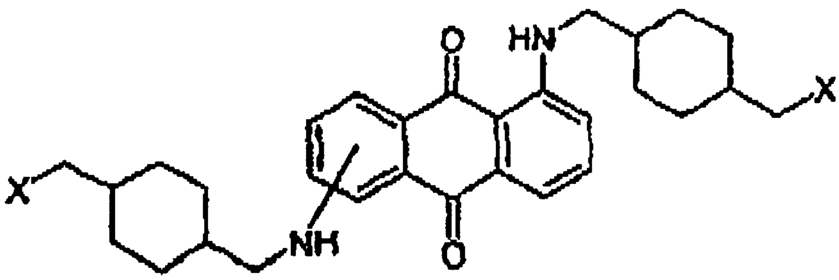

;

(IV)

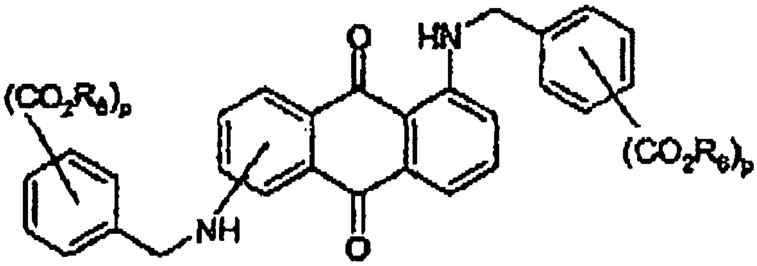

;

(V)

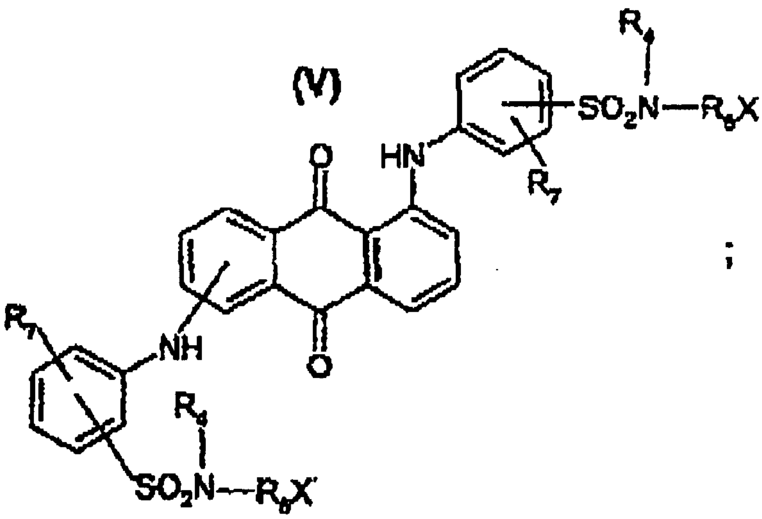

;

(VI)

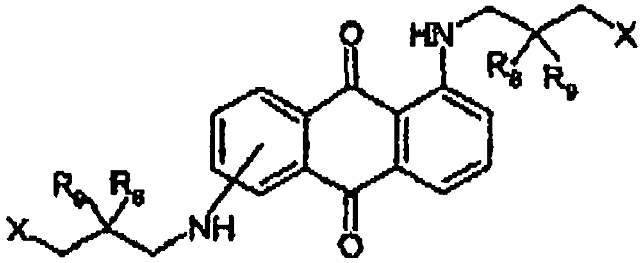

;

(VII)

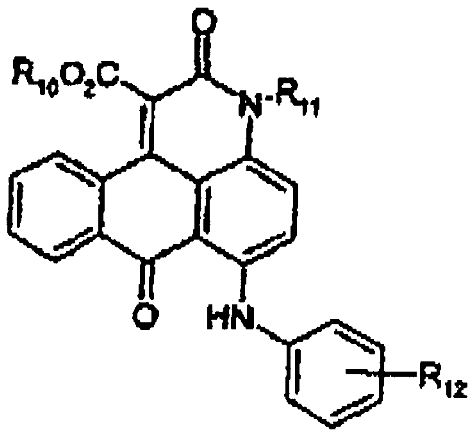

;

(VIII)

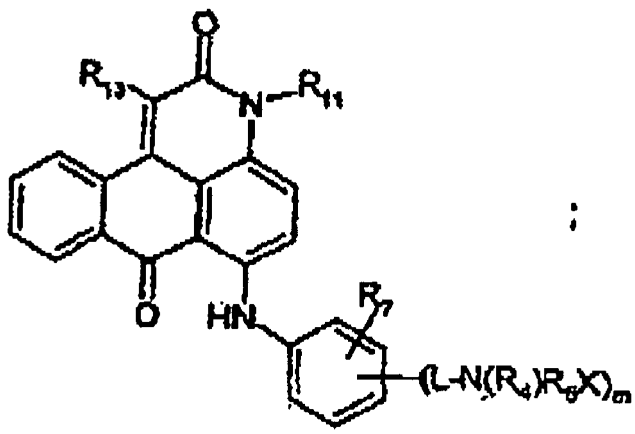

;

(IX)

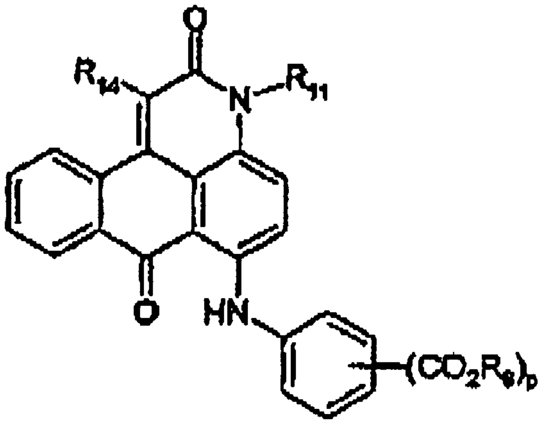

;

(X)

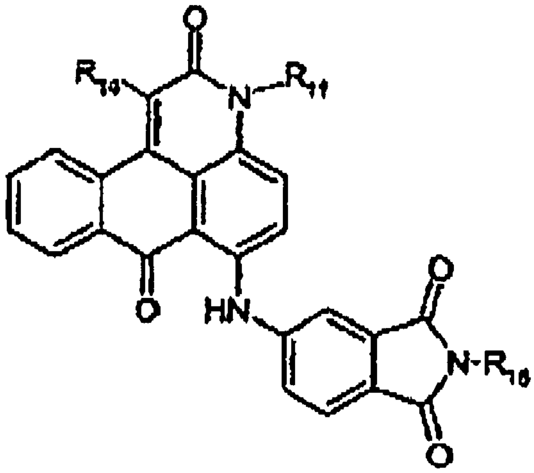

;

dans lesquelles :

$R_6$ est choisi parmi le groupe consistant en hydrogène, alkyle en $C_1$-$C_6$, alkyle en $C_1$-$C_6$ substitué, alcényle en $C_3$-$C_8$, alcynyle en $C_3$-$C_8$, cycloalkyle en $C_3$-$C_8$ ou aryle ;

$R_7$ est hydrogène ou un des trois groupes choisis parmi alkyle en $C_1$-$C_6$, alkyle en $C_1$-$C_6$ substitué, alcanoylamino en $C_1$-$C_6$, halogène, hydroxy, alcoxy en $C_1$-$C_6$, alkylthio en $C_1$-$C_6$, alcoxy en $C_1$-$C_6$ substitué, alkylthio en $C_1$-$C_6$ substitué ;

$R_8$ et $R_9$ sont identiques ou différentes et sont choisis parmi le groupe consistant en alkyle en $C_1$-$C_6$, alkyle en $C_1$-$C_6$ substitué, cycloalkyle en $C_3$-$C_8$ ou aryle ;

$R_{10}$ est choisi parmi le groupe consistant en alkyle en $C_1$-$C_6$, alkyle en $C_1$-$C_6$ substitué, cycloalkyle en $C_3$-$C_8$ ou aryle ;

$R_{11}$ est choisi parmi le groupe consistant en hydrogène, alkyle en $C_1$-$C_{12}$, alkyle en $C_1$-$C_{12}$ subs-

titué, alcényle en $C_3$-$C_8$, alcynyle en $C_3$-$C_8$, cycloalkyle en $C_3$-$C_8$ ou aryle ;
$R_{12}$ est hydrogène ou un à trois groupes choisis parmi alkyle en $C_1$-$C_6$, alkyle en $C_1$-$C_6$ substitué, alcoxy en $C_1$-$C_6$, alcoxy en $C_1$-$C_6$ substitué, alkylthio en $C_1$-$C_6$, alkylthio en $C_1$-$C_6$ substitué, halogène, hydroxy, alcanoylamino en $C_1$-$C_6$, aroylamino, alkylsulfonylamino en $C_1$-$C_6$ et arylsulfonylamino ;
$R_{13}$ et $R_{14}$ sont choisis parmi hydrogène, cyano ou $CO_2R_{10}$ ;
$R_{15}$ est $R_4$ ou $R_5X$ tels que définis précédemment ;
L est CO ou $SO_2$ ; X est tel que défini précédemment ; m est 0 ou 1 ; p est 1 ou 2 ; avec la condition qu'au moins un groupe réactif avec le polyester est présent comme X ou comme substituant sur $R_3$, $R_4$, $R_6$, $R_7$, $R_{10}$, $R_{11}$, $R_{12}$, $R_{13}$, $R_{14}$ ou $R_{15}$;
Ou

(2) au moins un colorant de toner bleu-rougeâtre, le cas échéant mélangé à un ou plusieurs composants rouges ou violets des formules II-X, ayant une structure cohérente avec la formule (XI) :

XI

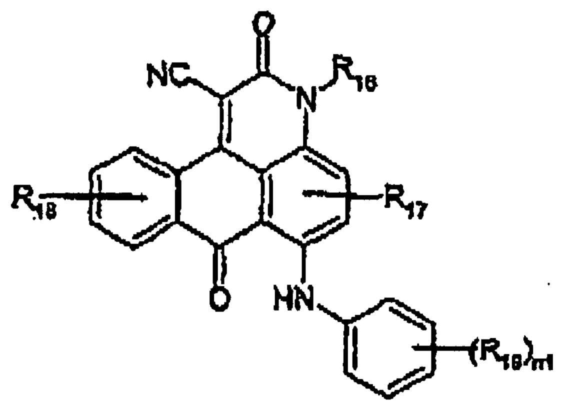

dans laquelle :

$R_{16}$ est choisi parmi hydrogène, alkyle en $C_1$-$C_{12}$, alkyle en $C_1$-$C_6$ substitué, cycloalkyle en $C_3$-$C_8$, alcényle en $C_3$-$C_8$, alcynyle en $C_3$-$C_8$ et aryle ;
$R_{17}$ est choisi parmi hydrogène, halogène, alkyle en $C_1$-$C_6$, alkyle en $C_1$-$C_6$ substitué, alcoxy en $C_1$-$C_6$, alcoxy en $C_1$-$C_6$ substitué, aryloxy, alkylthio en $C_1$-$C_6$, alkylthio en $C_1$-$C_6$ substitué, arylsulfonyl et arylthio ;
$R_{18}$ est choisi parmi hydrogène, halogène, alkyle en $C_1$-$C_6$, alkyle en $C_1$-$C_6$ substitué, alcoxy en $C_1$-$C_6$ et alcoxy en $C_1$-$C_6$ substitué ;
$R_{19}$ est hydrogène ou 1-3 groupes choisis parmi halogène, alkyle en $C_1$-$C_6$, alkyle en $C_1$-$C_6$ substitué, aryle, alcoxy en $C_1$-$C_6$, alcoxy en $C_1$-$C_6$ substitué, alkylthio en $C_1$-$C_6$, alkylthio en $C_1$-$C_6$ substitué, (alkyl en $C_1$-$C_6$)carbonyle, (alkyl en $C_1$-$C_6$)carbonylesubstitué, arylthio, (alcoxy en $C_1$-$C_6$)carbonyloxy, (alcoxy en $C_1$-$C_6$)carbonyloxy substitué, carboxy, sulfamoyle, alkylsulfamoyle en $C_1$-$C_6$, alkylsulfamoyle en $C_1$-$C_6$ substitué, di(alkyl en $C_1$-$C_6$)sulfamoyle, di(alkyl en $C_1$-$C_6$)sulfamoyle substitué, (alkyl en $C_1$-$C_6$)arylsulfamoyle, (alkyl en $C_1$-$C_6$)arylsulfamoyle substitué, (cycloalkyl en $C_3$-$C_8$)sulfamoyle, (cycloalkyl en $C_3$-$C_8$) sulfamoyle substitué, arylsulfamoyle, carbamoyle, (alkyl en $C_1$-$C_6$)carbamoyle, (alkyl en $C_1$-$C_6$)carbamoyle substitué, di(alkyl en $C_1$-$C_6$) carbamoyle, di(alkyl en $C_1$-$C_6$)carbamoyle substitué, (alkyl en $C_1$-$C_6$)arylcarbamoyle, (alkyl en $C_1$-$C_6$)arylcarbamoyle substitué, (cycloalkyl en $C_3$-$C_8$)carbamoyle, (cycloalkyl en $C_3$-$C_8$) carbamoyle substitué, arylcarbamoyle, 2-pyrrolidino, (alcanoyl en $C_1$-$C_6$)amino, (alcanoyl en $C_1$-$C_6$) amino substitué, N-(alkyl en $C_1$-$C_6$)amino, ou N-(alkyl en $C_1$-$C_6$)amino substitué ; et
n1 est un entier allant de 1 à 5 ; avec la condition qu'au moins un groupe réactif avec le polyester X est présent comme X ou comme substituant sur $R_{16}$, $R_{17}$, $R_{18}$ ou $R_{19}$, et

(b) un polymère qui est sujet au jaunissement.

**17.** Composition liquide de revêtement selon la revendication 16, dans laquelle le résidu du un ou plusieurs colorants de toner bleu, le résidu du un ou plusieurs colorants de toner rouge, et le résidu du un ou plusieurs colorants de toner violet sont incorporés dans la composition de revêtement en une quantité totale de plus d'environ 350 ppmw, sur la base du poids total de la composition liquide de revêtement, ou dans laquelle le résidu du un ou plusieurs colorants de toner bleu-rougeâtre est incorporé dans la composition liquide de revêtement en une quantité totale de plus d'environ 350 ppmw, dans laquelle le résidu du un ou plusieurs colorants de toner bleu, le résidu du un ou plusieurs colorants de toner rouge, et le résidu du un ou plusieurs colorants de toner violet sont incorporés dans la composition de revêtement en une quantité totale allant d'environ 5 ppmw à environ 40 ppmw, sur la base du poids total de la composition de revêtement, ou dans laquelle le résidu du un ou plusieurs colorants de toner bleu-rougeâtre est incorporé dans la composition liquide de revêtement en une quantité totale allant d'environ 5 ppmw à environ 40 ppmw, sur la base du poids total de la composition de revêtement.

**18.** Composition liquide de revêtement selon les revendications 1-9, présentant une blancheur apparente améliorée et une réduction de la quantité de jaunissement qui se produit par exposition à la chaleur et à la lumière, la composition comprenant en outre :

(c) au moins un acide dicarboxylique difonctionnel ;
(d) d'environ 4 à environ 25% en moles, sur la base du total de tous les acides, les équivalents hydroxyle et amino étant égaux à 200% en moles, d'au moins un sulfomonomère difonctionnel contenant au moins un groupe sulfonate cationique attaché à un noyau aromatique ou cycloaliphatique, où les groupes fonctionnels sont hydroxy, carboxy et amino ;
(e) au moins un réactif choisi parmi un glycol, un poly(éthylèneglycol), un polyol, ou un mélange d'un glycol et d'une diamine ayant deux groupes $NHR_{20}$, où $R_{20}$ est choisi parmi hydrogène et alkyle en $C_1$-$C_{12}$ ;
(f) le cas échéant, au moins un réactif difonctionnel choisi parmi un acide hydroxycarboxylique ayant un groupe $C(R^1)_2$-OH, un acide aminocarboxylique ayant un groupe $NR^1H$ et un aminoalcool ayant un groupe $C(R^1)_2$-OH, et un groupe $NR^1H$, ou des mélanges desdits réactifs difonctionnels ; où chaque $R^1$ est un atome d'hydrogène ou un groupe alkyle de 1 à 4 atomes de carbone, et
(g) le cas échéant, un acide gras monobasique, un ester gras, ou une huile naturelle, partiellement saponifiée comprenant un ou plusieurs de :

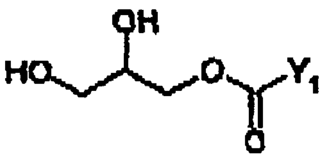 ; 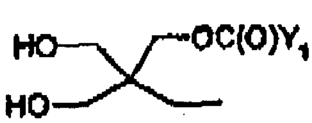 ; 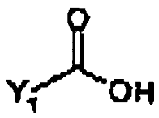 ;

où $Y_1$ est un groupe alkyle ou alcényle en $C_8$-$C_{20}$,

**19.** Composition liquide de revêtement selon la revendication 18, dans laquelle le poly(éthylèneglycol) comprend un ou plusieurs des suivants :

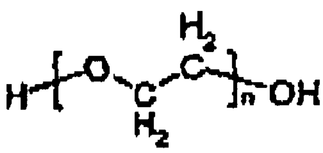 ,

où n est un entier allant de 2 à 20, ou

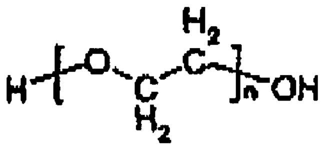,

où n est un entier allant d'environ 20 à 500.

**20.** Composition liquide de revêtement selon la revendication 18 ou 19, dans laquelle le un ou plusieurs résidus de toner sont introduits en une quantité suffisante pour prévenir ou masquer le jaunissement de la composition liquide de revêtement.

**21.** Composition liquide de revêtement selon les revendication 18-20, dans laquelle le un ou plusieurs résidus de toner sont introduits dans la composition de revêtement, en une quantité inférieure à environ 350 ppmw, sur la base du poids total de la composition liquide de revêtement.

**22.** Composition liquide de revêtement selon les revendication 18-21, dans laquelle le un ou plusieurs résidus de toner sont introduits en une quantité allant d'environ 5 ppmw à environ 40 ppmw, sur la base du poids total de la composition liquide de revêtement.